(19) Europäisches Patentamt
European Patent Office
Office européen des brevets

(11) **EP 3 981 773 A1**

(12) **EUROPEAN PATENT APPLICATION**

(43) Date of publication:
**13.04.2022 Bulletin 2022/15**

(21) Application number: **20200949.4**

(22) Date of filing: **09.10.2020**

(51) International Patent Classification (IPC):
***C07F 7/18*** *(2006.01)* ***C07F 9/50*** *(2006.01)*
***C07F 15/00*** *(2006.01)*

(52) Cooperative Patent Classification (CPC):
**C07F 15/0046; C07F 7/188; C07F 9/5027; C07F 15/002**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Technische Universität Berlin**
**10623 Berlin (DE)**

(72) Inventors:
- **Prof. Dr. Oestreich, Martin**
  **13503 Berlin (DE)**
- **Seliger, Jan**
  **10559 Berlin (DE)**

(74) Representative: **Hertin und Partner**
**Rechts- und Patentanwälte PartG mbB**
**Kurfürstendamm 54/55**
**10707 Berlin (DE)**

# (54) DYNAMIC KINETIC RESOLUTION OF ALCOHOLS BY ENANTIOSELECTIVE SILYLATION

(57) The invention relates to non-enzymatic dynamic kinetic resolution (DKR) process for enantioselective silylation of a chiral alcohol, the process comprising reacting a substrate comprising a first enantiomer of the chiral alcohol using a racemization catalyst, and generating from said second enantiomer and a hydrosilane a silyl ether using an enantioselective silylation catalyst, wherein the enantioselective silylation catalyst is a catalytic system comprising a copper salt, an inorganic or organometallic base and (-)-1,2-bis((2R,5R)-2,5-diarylphospholano)ethane or (+)-1,2-bis((2S,5S)-2,5-diarylphospholano)ethane ((R,R)-Ar-BPE or (S,S)-Ar-BPE), and the racemization catalyst is a compound according to Formula I as disclosed herein.

**Figure 1**

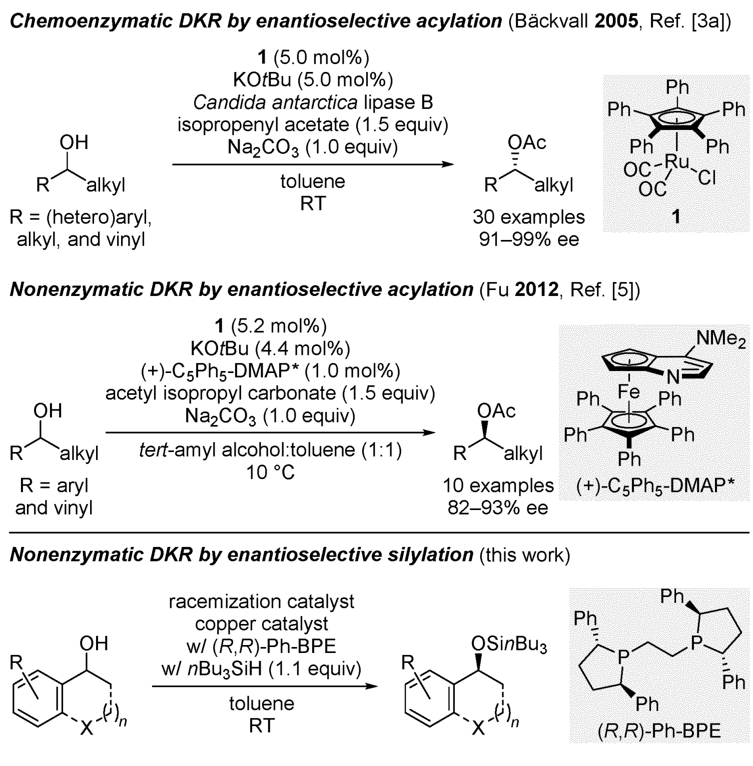




EP 3 981 773 A1

## Description

The invention relates to a non-enzymatic dynamic kinetic resolution (DKR) process for enantioselective silylation of a chiral alcohol, a process comprising reacting a substrate comprising a first enantiomer of the chiral alcohol using a racemization catalyst to give a second enantiomer of the chiral alcohol, and generating from said second enantiomer and a hydrosilane a silyl ether using an enantioselective silylation catalyst, wherein the enantioselective silylation catalyst is a catalytic system comprising a copper salt, an inorganic or organometallic base and (-)-1,2-bis((2R,5R)-2,5-diarylphospholano)ethane or (+)-1,2-bis((2S,5S)-2,5-diarylphospholano)ethane ((R,R)-Ar-BPE or (S,S)-Ar-BPE), and the racemization catalyst is a compound according to Formula I as disclosed herein.

## BACKGROUND OF THE INVENTION

Dynamic kinetic resolution (DKR) is a powerful tool for the preparation of enantiomerically enriched chiral alcohols.[1] As an advantage over conventional kinetic resolution (KR) processes, the theoretical limit of 50% yield for each enantiomer is overcome by rapid in-situ racemization of the starting material. Tracing back to an early example by Williams and co-workers,[2] this is typically achieved by catalytic transfer hydrogenation with only a few exceptions.[1a,3,4] A particularly versatile racemization catalyst is ruthenium complex (Figure 1, **1**) developed by Bäckvall and co-workers.[3a] In combination with *Candida antarctica* lipase B and isopropenyl acetate as the acyl source, efficient chemoenzymatic DKR of a number of structurally unbiased secondary alcohols was achieved (Figure 1, top). Later, Fu and co-workers succeeded in developing a DKR of secondary alcohols using Bäckvall's complex (Figure 1, **1**) and a ferrocene-based, planar chiral DMAP derivative as a nucleophilic activator towards an acyl source (Figure 1, middle).[5] This is the only nonenzymatic approach to date.

The acyl group introduced by these DKRs is usually cleaved to liberate the free alcohol or occasionally used further as a protecting group. Silyl ethers excel at the protection of hydroxy groups owing to the ease of their installation and removal as well as their tunable stability and orthogonality.[6] Unlike the numerous (D)KR processes by enzymatic and nonenzymatic enantioselective acylation,[1,5] the corresponding silylation-based methods had been unknown until approximately twenty years ago.[7] Starting from an initial report by Ishikawa,[8] asymmetric alcohol silylation has undergone tremendous advances.[7] Today, both organocatalytic[9] and transition-metal-catalyzed[10] approaches for the KR of alcohols are available.

Conversely, suitable conditions for a related DKR have remained elusive. For this, the resolving system and the racemization catalyst must be compatible, and racemization must occur significantly faster than the conversion of the slow-reacting enantiomer to the product silyl ether. Additionally, the racemization catalyst must not promote any racemic background reactions, that is the racemization of the silyl ether and the dehydrogenative coupling of the alcohol and the silylation reagent.

However, until now, no compatible system comprising an enantioselective silylation catalyst and a suitable racemization catalyst has been identified and established for performing a DKR process for enantioselective silylation of chiral alcohols. Accordingly, there is a need in the art to identify such compatible catalysts and to develop a non-enzymatic DKR process for enantioselective silylation of a chiral alcohol.

## SUMMARY OF THE INVENTION

In light of the prior art the technical problem underlying the present invention is to provide a non-enzymatic DKR process for enantioselective silylation of a chiral alcohol.

This problem is solved by the features of the independent claims. Preferred embodiments of the present invention are provided by the dependent claims.

The invention therefore relates to a non-enzymatic dynamic kinetic resolution (DKR) process for enantioselective silylation of a chiral alcohol, the process comprising

- reacting a substrate comprising a first enantiomer of the chiral alcohol using a racemization catalyst to give a second enantiomer of the chiral alcohol, and

- generating from said second enantiomer and a hydrosilane a silyl ether using an enantioselective silylation catalyst, **wherein**

- the enantioselective silylation catalyst is a catalytic system comprising a copper salt, an inorganic or organometallic base and (-)-1,2-bis((2R,5R)-2,5-diarylphospholano)ethane or (+)-1,2-bis((2S,5S)-2,5-diarylphospholano)ethane ((R,R)-Ar-BPE or (S,S)-Ar-BPE),
  and

- the racemization catalyst is a compound according to Formula I

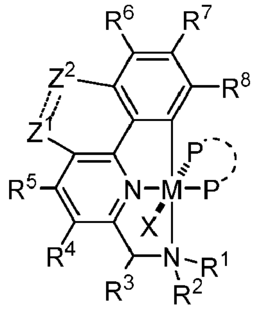

Formula I

wherein

- M = Ru or Os,
- $R^1$ = H or methyl (Me),
- $R^2$ = H
- $R^3$ = H, alkyl, cycloalkyl, or aryl,
- $R^4$ = H, halo, Oalkyl, Ocycloalkyl, Oaryl, cycloalkyl, alkyl, or aryl,
- $R^5$ = H, halo, Oalkyl, Ocycloalkyl, Oaryl, cycloalkyl, alkyl, or aryl,
- $R^6$ = H, halo, Oalkyl, Ocycloalkyl, Oaryl, cycloalkyl, alkyl, or aryl,
- $R^7$ = H, halo, Oalkyl, Ocycloalkyl, Oaryl, cycloalkyl, alkyl, or aryl,
- $R^8$ = H, halo, Oalkyl, Ocycloalkyl, Oaryl, cycloalkyl, alkyl, or aryl,
- $Z^1$ and $Z^2$ are the same or different, and
  $Z^1$ and $Z^2$ are linked by a covalent bond resulting in formation of an aromatic 6 membered ring, wherein $Z^1$ and $Z^2$ = CH, Chalo, COalkyl, Ocycloalkyl, COaryl, Calkyl, Ccycloalkyl, or Caryl, or
  $Z^1$ and $Z^2$ are not linked by a covalent bond, wherein $Z^1$ and $Z^2$ = H, halo, Oalkyl, Ocycloalkyl, Oaryl, alkyl, cycloalkyl, or aryl,
- $P^1$ and $P^2$ are organic or organometallic structures covalently linked to M via a phosphorus atom,
  wherein $P^1$ and $P^2$ form a single organic or organometallic structure ($P^1 \cap P^2$) selected from the group comprising bis(diorganophosphino)alkanes, 1,1'-bis(diorganophosphino)ferrocenes, 1,2-bis(diorganophosphino)benzenes, 1,8-bis(diorganophosphino)naphthalenes, and 2,2'-bis(diorganophosphino)diaryls, or wherein $P^1$ and $P^2$ are two organic structures not linked to each other and are triarylphosphine or trialkylphosphine and
- X = H, halo, pseudohalo, Oalkyl, Ocycloalkyl, Oaryl, $OSiR^{14}_3$, $O(O)CR^{15}$, or $OS(O)_2R^{15}$, wherein $R^{14}$ is alkyl or aryl and different $R^{14}$ within one molecule can be the same or different, and $R^{15}$ is alkyl, aryl, or (per)haloalkyl.

It was rather unexpected that a racemization catalyst according to the present inventive process is compatible with the enantioselective silylation catalytic system in a non-enzymatic DKR. So far, only one non-enzymatic DKR approach has been described for the acylation of a chiral alcohol. However, all other described DKR processes rely on enzymes with compatible racemization catalysts.

It is completely unexpected, that the inventive combination of a racemization catalyst and a silylation catalyst support the DKR process in a single reaction well in an orthogonal catalytic process. Accordingly, in embodiments the process of the invention represents an orthogonal catalytic process comprising two catalysts in a single reaction well/vessel, wherein surprisingly the two catalysts do not interfere with each other and therefore the respective reactions catalyzed by each of the catalysts can proceed effectively.

Ruthenium half-sandwich complexes routinely employed as racemization catalysts in the DKR of secondary alcohols are deactivated in the presence of a hydrosilane.

As a prerequisite, no ligand exchange reactions between the copper complex and the ruthenium complex were apparent. Generally, an exchange of the racemization catalyst's dppb ligand with (R,R)-Ar-BPE or (S,S)-Ar-BPE, respectively, is conceivable, resulting in a defined chiral space on the racemization catalyst and thereby jeopardizing effective racemization of the alcohol. Consequently, (partial) formation of a dppb ligated copper hydride species could catalyze the racemic dehydrogantive coupling of the alcohol and the hydrosilane. Additionally, the racemization catalyst is potentially capable of catalyzing racemic background reactions such as the dehydrogenative coupling of the alcohol and the hydrosilane, the hydrosilylation of an intermittently formed ketone, or the racemization of the product silyl ether.

The present invention can be performed with a substrate that comprises a racemic mixture of a first and a second enantiomer of the chiral alcohol in a 50:50 ratio. However, the DKR can also be performed with different ratios of the two enantiomers, since the racemization catalyst will ensure that a 50:50 ratio will be rapidly established in the reaction well. Even a substrate that only comprises the first (slow-reacting) enantiomer can be used as a starting point, since the racemization catalyst will provide the second (fast-reacting) enantiomer as a substrate for the silylation reaction.

In preferred embodiments of the invention, the substrate comprises a racemic mixture of the first and the second enantiomer. In embodiments, the DKR process takes place in a single reaction well, preferably as an orthogonal catalytic process.

In the context of the present invention, the first enantiomer is also referred to as the slow-reacting enantiomer, and the second enantiomer is also referred to as the fast-reacting enantiomer. Therein, "slow" and "fast" relate to the reaction rate of the two enantiomers with respect to the silylation reaction that is catalyzed by the silylation catalyst.

As shown in the examples below, the racemization catalyst functions in the context of the process of the invention with M = Ru or Os. Therein, whether Ru or Os is present is independent of the combinations of the other variable substituents of the racemization catalyst. In other words, both Ru or Os can be combined with all other substituents and substituent combinations disclosed herein.

Based on the examples disclosed herein a skilled person is aware, that a racemization catalyst as disclosed in the context of the invention can comprise as substituent $R^1$ = H or Me. In preferred embodiments, $R^1$ is H. [Angew. Chem. Int. Ed. 2005, 44, 6214-6219; Angew. Chem. Int. Ed. 2008, 47, 4362-4365; Chem. Eur. J. 2008, 14, 9148-9160; Organometallics 2009, 28, 4421-4430; Dalton Trans. 2011, 40, 8986-8995; Organometallics 2016, 35, 277-287].

As disclosed herein, $R^3$ is H, alkyl, cycloalkyl, or aryl. In embodiments $R^3$ = Me or *t*-Bu. In preferred embodiments, $R^3$ is H.

Based on the examples disclosed herein a skilled person is aware, that a racemization catalyst as disclosed in the context of the invention can comprise as substituents $R^4$ to $R^8$ = H, halo, Oalkyl, Ocycloalkyl, Oaryl, alkyl, cycloalkyl, or aryl, wherein $R^4$ to $R^8$ can be the same or different. In preferred embodiments, $R_4$ to $R_8$ are the same or different, selected from H, Me. In embodiments, $R_4$ to $R_8$ are the same or different, selected from H, Me, Ph, OMe.

In the context of the invention, $Z^1$ and $Z^2$ can be the same or different. In particularly preferred embodiments, $Z^1$ and $Z^2$ are not linked by a covalent bond, wherein $Z^1$ and $Z^2$ = H. In embodiments, $Z^1$ and $Z^2$ are not linked by a covalent bond, wherein $Z^1$ and $Z^2$ = halo, Oalkyl, Ocycloalkyl, Oaryl, alkyl, cycloalkyl, or aryl. In preferred alternative embodiments, $Z^1$ and $Z^2$ are linked by a covalent bond resulting in formation of an aromatic 6 membered ring, wherein $Z^1$ and $Z^2$ = CH. In alternative embodiments, $Z^1$ and $Z^2$ are linked by a covalent bond resulting in formation of an aromatic 6 membered ring, wherein $Z^1$ and $Z^2$ = Chalo, COalkyl, COcycloalkyl, COaryl, Calkyl, Ccycloalkyl, or Caryl.

It is evident to a skilled person that $Z^1$ and $Z^2$ can be varied within the disclosed options without affecting the activity of the racemization catalyst based on literature known derivatives In preferred embodiments, $Z^1$ and $Z^2$ are linked by a covalent bond resulting in formation of an aromatic 6 membered ring, wherein $Z^1$ and $Z^2$ = CH, or $Z^1$ and $Z^2$ are not linked by a covalent bond, wherein $Z^1$ and $Z^2$ = H.

In the context of the racemization catalyst of the invention, $P^1$ and $P^2$ are organic or organometallic structures covalently linked to M via a phosphorus atom,

- wherein $P^1$ and $P^2$ form a single organic or organometallic structure ($P^1 \cap P^2$) selected from the group comprising bis(diorganophosphino)alkanes, 1,1'-bis(diorganophosphino)ferrocenes, 1,2-bis(diorganophosphino)benzenes, 1,8-bis(diorganophosphino)naphthalenes, and 2,2'-bis(diorganophosphino)diaryls, **or**

- wherein $P^1$ and $P^2$ are two organic structures not linked to each other and are triarylphosphine or trialkylphosphine, $P^1$ and $P^2$ form a single organic or organometallic structure ($P^1 \cap P^2$) selected from the group comprising bis(diphenylphosphino)butane and 1,1'-bis(diphenylphosphino)ferrocene, or $P^1$ and $P^2$ are two organic structures not linked to each other and are triphenylphosphine.

It is evident to a skilled person that $P^1$ and $P^2$ can be varied within the disclosed options without affecting the activity of the racemization catalyst based on its literature known derivatives.

In preferred embodiments, $P^1$ and $P^2$ form a single organic or organometallic structure ($P^1 \cap P^2$) selected from the group comprising bis(diphenylphosphino)butane and 1,1'-bis(diphenylphosphino)ferrocene, or $P^1$ and $P^2$ are two organic structures not linked to each other and are triphenylphosphine.

In particularly preferred embodiments, $P^1 \cap P^2$ are bis(diphenylphosphino)butane.

The racemization catalyst to be used in the context of the DKR process of the invention comprises as X = H, halo, pseudohalo, Oalkyl, Ocycloalkyl, Oaryl, $OSiR^{14}_3$, $O(O)CR^{15}$, or $OS(O)_2R^{15}$, wherein $R^{14}$ is alkyl or aryl and different $R^{14}$ within one molecule can be the same or different, and $R^{15}$ is alkyl, aryl, or (per)haloalkyl.

Based on the examples disclosed herein and the general knowledge of a skilled person it is evident that the disclosed X-substituents are compatible with the DKR of the invention. [Angew. Chem. Int. Ed. 2005, 44, 6214-6219]

In embodiments, X = H, Cl, Br, Oalkyl, Ocycloalkyl, Oaryl, $OSiMe_3$, O(O)CH, O(O)CMe, or $OS(O)_2CF_3$. In preferred embodiments, X = Cl, O*t*Bu, OPh, $OSiMe_3$. In particularly preferred embodiments, X = Cl, O*t*Bu.

The disclosed possible and preferred substituents of $R^1$, $R^3$, $R^4$ to $R^8$, $Z^1$ and $Z^2$, $P^1$ and $P^2$, and X can be combined freely and independently.

In embodiments of the DKR process of the invention the racemization catalyst is a compound according to Formula I, wherein

- M = Ru or Os,
- $R^1$ = H or Me,
- $R^2$ = H,
- $R^3$ = H, Me, or *tert*-butyl (tBu),
- $R^4$ = H,
- $R^5$ = H or Ph,
- $R^6$ = H,
- $R^7$ = H, Me, or OMe,
- $R^8$ = H,
- $Z^1$ and $Z^2$ are linked by a covalent bond resulting in formation of an aromatic 6 membered ring, wherein $Z^1$ and $Z^2$ = CH, or
  $Z^1$ and $Z^2$ are not linked by a covalent bond, wherein $Z^1$ and $Z^2$ = H,
- $P^1$ and $P^2$ form a single organic or organometallic structure ($P^1 \cap P^2$) selected from the group comprising bis(diphenylphosphino)butane and 1,1'-bis(diphenylphosphino)ferrocene, or
  wherein $P^1$ and $P^2$ are two organic structures not linked to each other and are triphenylphosphine, and
- X = H, Cl, Oalkyl, Ocycloalkyl, Oaryl, $OSiMe_3$, O(O)CH, O(O)CMe, or $OS(O)_2CF_3$, preferably Cl, O*t*Bu, OPh, $OSiMe_3$, particularly preferred X = Cl, O*t*Bu.

In preferred embodiments of the DKR process, the racemization catalyst is a compound according to Formula II

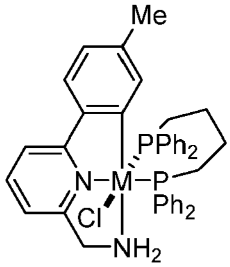

Formula II,

wherein

- M = Ru or Os.

The enantioselective silylation catalyst of the invention is a catalytic system comprising a copper salt, an inorganic or organometallic base, and (-)-1,2-bis((2R,5R)-2,5-diarylphospholano)ethane or (+)-1,2-bis((2S,5S)-2,5-diarylphospholano)ethane ((R,R)-Ar-BPE or (S,S)-Ar-BPE).

In embodiments of the invention, the (R,R)-Ar-BPE or (S,S)-Ar-BPE of the enantioselective silylation catalytic system is (R,R)-Ph-BPE or (S,S)-Ph-BPE, wherein the aryl ring (Ar) of (R,R)-Ar-BPE or (S,S)-Ar-BPE is a phenyl ring (Ph).

Furthermore, within the silylation catalytic system, the components can be independently varied, as is evident to a skilled person.

For example, various suitable copper salts may be used, preferably a copper(I) or copper(II) salt can be used. Examples of such copper salts are disclosed in the detailed description below.

Furthermore, the inorganic or organometallic base can be selected from a wide range, as is evident for the person skilled in the art, and suitable and preferred examples are disclosed herein.

In embodiments, the chiral alcohol is an alcohol according to Formula III,

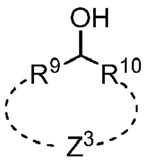
Formula III

wherein

- $R^9$ and $R^{10}$ are not the same, and
- $R^9$ and $R^{10}$ form a cyclic structure, wherein
  $R^9$ and $R^{10}$ are selected from alkyl, cycloalkyl, aryl, and heteroaryl, and
  the aryl or heteroaryl can optionally be substituted with substituents that can be the same or different, selected from alkyl, cycloalkyl, aryl, heteroaryl, halo, pseudohalo, $NO_2$, (per)fluoroalkyl, Oalkyl, Ocycloalkyl, Oaryl, $OSiR^{14}_3$, Salkyl, Scycloalkyl, Saryl, $SiR^{14}_3$, acetal, CN, $CO_2$alkyl, $CO_2$aryl, $CO_2H$, $OC(O)N(R^{14})R^{14}$, $N(R^{14})C(O)OR^{14}$, boryl, boronate, and combinations thereof, wherein $R^{14}$ is alkyl or aryl and different $R^{14}$ within one molecule can be the same or different, and
- the cyclic structure comprises only carbon atoms or comprises one or more heteroatoms $Z^3$, wherein $Z^3$ is preferably selected from the group comprising N, O, and S,
  wherein the cyclic structure preferably has 5 to 7 members, and
  optionally one or more members of the cyclic structure can be substituted with substituents that can be the same or different, selected from alkyl, cycloalkyl, aryl, heteroaryl, halo, pseudohalo, $NO_2$, (per)fluoroalkyl, Oalkyl, Ocycloalkyl, Oaryl, $OSiR^{14}_3$, Salkyl, Scycloalkyl, Saryl, $SiR^{14}_3$, CN, $CO_2$alkyl, $CO_2$aryl, $CO_2H$, $OC(O)N(R^{14})R^{14}$, $N(R^{14})C(O)OR^{14}$, boryl, boronate, and combinations thereof, or
- $R^9$ and $R^{10}$ do not form a cyclic structure and are selected from alkyl, aryl, and heteroaryl, and
  the aryl or heteroaryl can optionally be substituted with substituents that can be the same or different, selected from alkyl, cycloalkyl, aryl, heteroaryl, halo, pseudohalo, $NO_2$, (per)fluoroalkyl, Oalkyl, Ocycloalkyl, Oaryl, $OSiR^{14}_3$, Salkyl, Scycloalkyl, Saryl, $SiR^{14}_3$, acetal, CN, $CO_2$alkyl, $CO_2$aryl, $CO_2H$, $OC(O)N(R^{14})R^{14}$, $N(R^{14})C(O)OR^{14}$, boryl, boronate, and combinations thereof, wherein $R^{14}$ is alkyl or aryl and different $R^{14}$ within one molecule can be the same or different.

Based on the examples provided herein, it is evident to a skilled person that the DKR process of the invention can be performed using any kind of chiral secondary alcohol with the following features:

In a preferred embodiment, the substrate is an acyclic chiral secondary alcohol wherein

$R^9$ is a (hetero)aryl group carrying one or more substitutents that can be the same or different, selected from alkyl, cycloalkyl, aryl, pyridyl, thienyl, furanyl, F, Cl, Br, (per)fluoroalkyl, OMe, $OSiMe_2t$Bu, $NR^{14}$Boc, 1,3-dioxolanyl, $CO_2t$Bu, and $R^{10}$ is a non-tethered, alkyl or aralkyl group that may contain a heteroatom, preferably selected from the group comprising N, O and S. In a particularly preferred embodiment, the (hetero)aryl group may carry substituents

with little steric demand on any carbon atom, the (hetero)aryl group does not carry sterically demanding substituents on the γ-carbon atom with respect to the hydroxy group, and $R^9$ is sterically much more demanding than $R^{10}$.

In an alternative preferred embodiment, the substrate is a cyclic chiral secondary alcohol wherein $R^9$ is a (hetero)aryl group carrying one or more substitutents that can be the same or different, selected from alkyl, cycloalkyl, aryl, pyridyl, thienyl, furanyl, F, Cl, Br, (per)fluoroalkyl, OMe, $OSiMe_2$*t*Bu, $NR^{14}$Boc, 1,3-dioxolanyl, $CO_2$*t*Bu, and $R^{10}$ is a tethered, alkyl or aralkyl group that may contain a heteroatom, preferably selected from the group comprising N, O and S. In a particularly preferred embodiment, the (hetero)aryl group may carry substituents with little steric demand on any carbon atom, the (hetero)aryl group does not carry sterically demanding substituents on the γ-carbon atom with respect to the hydroxy group, and $R^9$ is sterically much more demanding than $R^{10}$.

It is understood that in the context of the present invention and the chiral alcohol according to formula III, a sterically demanding substituent attached to $R^9$ or $R^{10}$ is an atom or a group of atoms that impedes or prohibits the interaction of the substrate with the catalyst by its spatial dimensions. Examples include a bromine atom, a branched alkyl group (such as an isopropyl-group), an α-branched alkoxy group (such as an isopropoxy-group), a thioalkoxy group, a silyl group (such as $SiR^{14}$), a perhaloalkyl group (such as a $CF_3$-group), an acetal, an ester, a carbamate, a boryl group, a boronate. A skilled person is able to identify such sterically demanding substituent based on these explanations and examples.

In further embodiments of the DKR process of the invention, the chiral alcohol is an alcohol according to Formula IV,

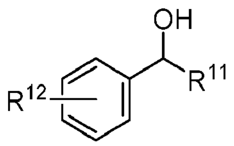

Formula IV

wherein

- $R^{11}$ = alkyl, aryl, or heteroaryl,
- $R^{12}$ = alkyl, cycloalkyl, aryl, heteroaryl, halo, pseudohalo, $NO_2$, (per)fluoroalkyl, Oalkyl, Ocycloalkyl, Oaryl, $OSiR^{14}_3$, Salkyl, Scycloalkyl, Saryl, $SiR^{14}_3$, acetal, CN, $CO_2$alkyl, $CO_2$aryl, $CO_2H$, $OC(O)N(R^{14})R^{14}$, $N(R^{14})C(O)OR^{14}$, boryl, boronate, and (multiple) combinations thereof, wherein $R^{14}$ is alkyl or aryl and different $R^{14}$ within one molecule can be the same or different.

In embodiments, $R^{11}$ is not alkenyl and alkinyl.

In further embodiments, the chiral alcohol is an alcohol according to Formula IV,

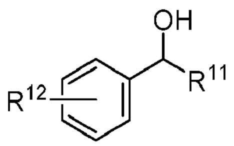

Formula IV

wherein

- $R^{11}$ = alkyl, aryl, or heteroaryl, and not alkenyl and alkinyl,
- $R^{12}$ = alkyl, cycloalkyl, aryl, heteroaryl, halo, pseudohalo, $NO_2$, (per)fluoroalkyl, Oalkyl, Ocycloalkyl, Oaryl, $OSiR^{14}_3$, Salkyl, Scycloalkyl, Saryl, $SiR^{14}_3$, acetal, CN, $CO_2$alkyl, $CO_2$aryl, $CO_2H$, $OC(O)N(R^{14})R^{14}$, $N(R^{14})C(O)OR^{14}$, boryl, boronate, and (multiple) combinations thereof, wherein $R^{14}$ is alkyl or aryl and different $R^{14}$ within one molecule can be the same or different.

In a preferred embodiment, the phenyl group may be substituted with one or more substituents $R^{12}$ that can be the same or different, selected from Me, Ph, pyridyl, thienyl, furanyl, F, Cl, Br, (per)fluoroalkyl, OMe, $OSiMe_2$*t*Bu, $NR^{14}$Boc, 1,3-dioxolanyl, $CO_2$*t*Bu, and $R^{11}$ is an alkyl or aralkyl group that may contain a heteroatom, preferably selected from the group comprising N, O and S. In a particularly preferred embodiment, the phenyl group may carry one or more substituents with little steric demand in *ortho*, *meta*, and *para* position, but does not carry sterically demanding substituents

in the *ortho* position, such as bromine, and $R^{11}$ is sterically much less demanding than the (substituted) phenyl group.

Furthermore, in embodiments the chiral alcohol is an alcohol according to Formula V,

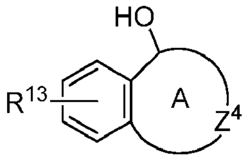

Formula V

wherein

- $R^{13}$ = alkyl, cycloalkyl, aryl, heteroaryl, halo, pseudohalo, $NO_2$, (per)fluoroalkyl, Oalkyl, Ocycloalkyl, Oaryl, $OSiR^{14}_3$, Salkyl, Scycloalkyl, Saryl, $SiR^{14}_3$, CN, $CO_2$alkyl, $CO_2$cycloalkyl, $CO_2$aryl, $CO_2H$, $OC(O)N(R^{14})R^{14}$, $N(R^{14})C(O)OR^{14}$, boryl, boronate, and (multiple) combinations thereof, and

- ring A is a cyclic structure comprising only carbon atoms or comprising one or more heteroatoms $Z^4$, wherein $Z^4$ is preferably selected from the group comprising N, O, and S,
  wherein preferably the cyclic structure has 5 to 7 members, and
  wherein optionally the cyclic structure A can be substituted with substituents that can be the same or different, selected from alkyl, cycloalkyl, aryl, heteroaryl, halo, pseudohalo, $NO_2$, (per)fluoroalkyl, Oalkyl, Ocycloalkyl Oaryl, $OSiR^{14}_3$, Salkyl, Scycloalkyl, Saryl, $SiR^{14}_3$, CN, $CO_2$alkyl, $CO_2$aryl, $CO_2H$, $OC(O)N(R^{14})R^{14}$, $N(R^{14})C(O)OR^{14}$, boryl, boronate, and combinations thereof, and

- wherein $R^{14}$ is alkyl or aryl and different $R^{14}$ within one molecule can be the same or different.

In a preferred embodiment the aryl group may be substituted with one or more substituents $R^{13}$ that can be the same or different, selected from Me, Ph, pyridyl, thienyl, furanyl, F, Cl, Br, (per)fluoroalkyl, OMe, $OSiMe_2$*t*Bu, $NR^{14}$Boc, 1,3-dioxolanyl, $CO_2$*t*Bu, and the annulated Ring A comprises 5 to 7 members of either only carbon atoms or comprising a heteroatom, preferably selected from the group comprising N, O, and S. In a particularly preferred embodiment the bicyclic core structure is selected from the group comprising or consisting of 2,3-dihydro-1*H*-inden-1-ol, 1,2,3,4-tetrahydronaphthalen-1-ol, 6,7,8,9-tetrahydro-5*H*-benzo[7]annulen-5-ol, chroman-4-ol, isochroman-4-ol, thiochroman-4-ol, isothiochroman-4-ol, *tert*-butyl 4-hydroxy-3,4-dihydroquinoline-1 (2*H*)-carboxylate, *tert*-butyl 4-hydroxy-3,4-dihydroisoquinoline-2(1*H*)-carboxylate, wherein the aryl group of the respective compound may be substituted with one or more substituents $R^{13}$ that can be the same or different, selected from Me, Ph, pyridyl, thienyl, furanyl, F, Cl, Br, (per)fluoroalkyl, OMe, $OSiMe_2$*t*Bu, $NR^{14}$Boc, 1,3-dioxolanyl, $CO_2$*t*Bu, of which substituents with little steric demand may be attached to any of its carbon atoms and sterically demanding substituents are not attached to the $\gamma$-carbon atom with respect to the hydroxy group.

It is understood that in the context of the present invention and the chiral alcohol according to formulas IV and V, a sterically demanding substituent $R^{11}$ or $R^{12}$, or $R^{13}$ is an atom or a group of atoms that impedes or prohibits the interaction of the substrate with the catalyst by its spatial dimensions. Examples include a bromine atom, a branched alkyl group (such as an isopropyl-group), an $\alpha$-branched alkoxy group (such as an isopropoxy-group), a thioalkoxy group, a silyl group (such as $SiR^{14}$), a perhaloalkyl group (such as a $CF_3$-group), an acetal, an ester, a carbamate, a boryl group, a boronate. A skilled person is able to identify such sterically demanding substituent based on these explanations and examples.

In embodiments of the DKR process of the invention, the hydrosilane functioning as a substrate together with the fast-reacting enantiomer in the silylation reaction, is a triorganosilane selected from the group comprising trialkylsilanes, triarylsilanes, and mixed substitution patterns thereof, wherein in a preferred embodiment the hydrosilane is tri-*n*-butylsilane (*n*$Bu_3SiH$).

In embodiments, the hydrosilane can be selected from the group comprising the following triorganosilanes: triethylsilane ($Et_3SiH$), tri-*n*-propylsilane (*n*$Pr_3SiH$), tri-*n*-butylsilane (*n*$Bu_3SiH$), tri-*n*-pentylsilane ($Pe_3SiH$), tri-*n*-hexylsilane ($Hx_3SiH$), triisobutylsilane, triisopentylsilane, tris(4-methylpentyl)silane, tris(2-ethylbutyl)silane, tribenzylsilane, triphenethylsilane, dimethylphenylsilane, diethylphenylsilane and dibutylphenylsilane.

In embodiments, the DKR process is performed in an arene solvent, such as benzene or toluene, or a higher alcohol solvent, such as *tert*-amyl alcohol (2-Methylbutan-2-ol) or other tertiary alcohols.

In alternative embodiments, suitable solvents for the DKR of the invention can be selected by a skilled person from the group comprising (halogenated) arene solvents, such as benzene, toluene, and fluorobenzene, halogenated alkanes, such as dichloromethane, ethers, such as diethylether, tetrahydrofuran, and 1,4-dioxane, acetonitrile,

*N*,*N*-dimethylformamide, dimethyl sulfoxide, and tertiary alcohols, such as tert-amyl alcohol. The solvent can be deuterated.

In embodiments, the DKR process of the invention is performed at room temperature, including temperatures in the range from 0 - 40 °C, such as about 18 to 28 °C. Furthermore, in embodiments the DKR can be performed in at the following temperatures: 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40 °C.

Suitable concentrations of the chiral alcohol are typically in the range of 0.2 -2.5 mol/L, depending on the solubility of the alcohol in the selected solvent, with the hydrosilane concentration ranging from 1.0 to 1.5 times the alcohol concentration. Suitable concentrations are disclosed in the examples disclosed herein.

The concentration of the components of the racemization catalyst system are preferably in the range of 0.02 to 0.1 times the alcohol concentration, such as 0.03, 0.04, 0.05, 0.06, 0.07, 0.08, 0.09, or 0.1.

The concentration of the components of the silylation catalyst system are preferably in the range of 0.02 and 0.1 times the alcohol concentration, such as 0.03, 0.04, 0.05, 0.06, 0.07, 0.08, 0.09, or 0.1.

In embodiments, the reaction times for the DKR process are in the range of 8 hours and 7 days, such as 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, or 48 hours or, 2.5, 3, 3.5, 4, 4.5, 5, 5.5, 6, 6.5, or 7 days.

It is preferred that in the context of the DKR process of the invention the racemization of the first enantiomer to the second enantiomer is faster than generating a silyl ether from the first enantiomer and the hydrosilane in presence of the enantioselective silylation catalyst.

In other words, in the context of the DKR process of the invention, the racemization of the first and the second enantiomer of the chiral alcohol catalyzed by the racemization catalyst is faster than the silylation of the first (slow-reacting) enantiomer of the chiral alcohol in presence of the enantioselective silylation catalyst. This property of the process of the invention enables conversion of the slow-reacting first enantiomer to the fast-reacting second enantiomer prior to generation of the unwanted enantiomer of the silyl ether (that is based on the slow-reacting first enantiomer) by means of the silylation catalyst.

Furthermore, it is particularly preferred in the context of the process of the invention that the racemization catalyst does not promote racemization of the silyl ether or promotes racemization of the silyl ether at a negligible rate.

In embodiments, the racemization catalyst does not promote dehydrogenative coupling of the chiral alcohol and the hydrosilane or the racemization catalyst promotes dehydrogenative coupling of the chiral alcohol and the hydrosilane at a negligible rate.

In a further aspect the present invention relates to a system for performing a DKR process as described herein, the system comprising an enantioselective silylation catalyst and a racemization catalyst that are compatible to perform the racemization reaction and the enantioselective silylation reaction in the same reaction well in parallel.

The invention therefore relates to a system for a non-enzymatic dynamic kinetic resolution (DKR) process for enantioselective silylation of a chiral alcohol, comprising

- an enantioselective silylation catalyst that is a catalytic system comprising a copper salt, an inorganic or organometallic base and (-)-1,2-bis((2R,5R)-2,5-diarylphospholano)ethane or (+)-1,2-bis((2S,5S)-2,5-diarylphospholano)ethane ((R,R)-Ar-BPE or (S,S)-Ar-BPE), and
- a racemization catalyst according to Formula I

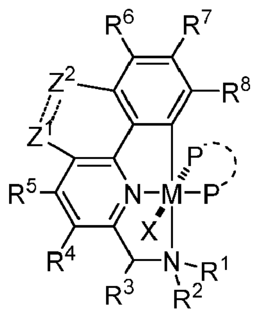

Formula I

wherein

- M = Ru or Os,
- $R^1$ = H or methyl (Me),

- $R^2$ = H
- $R^3$ = H, alkyl, cycloalkyl, or aryl,
- $R^4$ = H, halo, Oalkyl, Ocycloalkyl, Oaryl, alkyl, cycloalkyl, or aryl,
- $R^5$ = H, halo, Oalkyl, Ocycloalkyl, Oaryl, alkyl, cycloalkyl, or aryl,
- $R^6$ = H, halo, Oalkyl, Ocycloalkyl, Oaryl, alkyl, cycloalkyl, or aryl,
- $R^7$ = H, halo, Oalkyl, Ocycloalkyl, Oaryl, alkyl, cycloalkyl, or aryl,
- $R^8$ = H, halo, Oalkyl, Ocycloalkyl, Oaryl, alkyl, cycloalkyl, or aryl,
- $Z^1$ and $Z^2$ are the same or different, and
  $Z^1$ and $Z^2$ are linked by a covalent bond resulting in formation of an aromatic 6 membered ring, wherein $Z^1$ and $Z^2$ = CH, Chalo, COalkyl, COcycloalkyl, COaryl, Calkyl, Ccycloalkyl, or Caryl, or
  $Z^1$ and $Z^2$ are not linked by a covalent bond, wherein $Z^1$ and $Z^2$ = H, halo, Oalkyl, Ocycloalkyl, Oaryl, alkyl, cycloalkyl, or aryl,
- $P^1$ and $P^2$ are organic or organometallic structures covalently linked to M via a phosphorus atom,
  wherein $P^1$ and $P^2$ form a single organic or organometallic structure ($P^1 \cap P^2$) selected from the group comprising bis(diorganophosphino)alkanes, 1,1'-bis(diorganophosphino)ferrocenes, 1,2-bis(diorganophosphino)benzenes, 1,8-bis(diorganophosphino)naphthalenes, and 2,2'-bis(diorganophosphino)diaryls, or
  wherein $P^1$ and $P^2$ are two organic structures not linked to each other and are triarylphosphine or trialkylphosphine, and
- X = H, halo, pseudohalo, Oalkyl, Ocycloalkyl, Oaryl, $OSiR^{14}_3$, $O(O)CR^{15}$, or $OS(O)_2R^{15}$, wherein $R^{14}$ is alkyl or aryl and different $R^{14}$ within one molecule can be the same or different, and $R^{15}$ is alkyl, aryl, or (per)haloalkyl.

All features of the DKR process of the invention and in particular features of the silylation catalyst and the racemization catalyst are herewith also disclosed in the context of the system for performing a non-enzymatic DKR of the present invention.

## DETAILED DESCRIPTION OF THE INVENTION

All cited documents of the patent and non-patent literature are hereby incorporated by reference in their entirety.

The present invention is directed to a non-enzymatic dynamic kinetic resolution (DKR) process for enantioselective silylation of a chiral alcohol, the process comprising

- reacting a substrate comprising a first enantiomer of the chiral alcohol using a racemization catalyst to give a second enantiomer of the chiral alcohol, and
- generating from said second enantiomer and a hydrosilane a silyl ether using an enantioselective silylation catalyst, **wherein**
- the enantioselective silylation catalyst is a catalytic system comprising a copper salt, an inorganic or organometallic base and (-)-1,2-bis((2R,5R)-2,5-diarylphospholano)ethane or (+)-1,2-bis((2S,5S)-2,5-diarylphospholano)ethane ((R,R)-Ar-BPE or (S,S)-Ar-BPE),
  and
- the racemization catalyst is a compound according to Formula I.

As used herein, "kinetic resolution" is understood as a means of differentiating and separating two enantiomers in a racemic mixture. In kinetic resolution, two enantiomers react with different reaction rates in a chemical reaction with a chiral catalyst or reagent, resulting in (highly) enantioenriched samples of the less reactive enantiomer (unreacted starting material) and the more reactive enantiomer (product). As opposed to chiral resolution, kinetic resolution does not rely on different physical properties of diastereomeric products, but rather on the different chemical properties of the

enantiomeric starting materials. The enantiomeric excess (ee) of the unreacted starting material continually rises as more product is formed, reaching 100% just before full completion of the reaction. At the same time, the ee of the product declines with progression of the reaction from an initial value, approaching 0% at full completion of the reaction. Kinetic resolution relies upon differences in reactivity between enantiomers upon temporary interaction with an enantiopure agent (e.g. reagent, catalyst, solvent,...). Kinetic resolution is a concept in organic chemistry and can be used for the preparation of (highly) enantioenriched chiral molecules in organic synthesis. Kinetic resolution is however limited to a maximum yield of 50%, since the racemic starting material comprises merely 50% of the desired enantiomer.

In the context of the present invention, it is understood that "dynamic kinetic resolution" (DKR) refers to a type of kinetic resolution where up to 100% of a racemic compound (substrate) can be converted into a (highly) enantioenriched compound (product). In DKR the process of continuous rapid racemization of the substrate is combined with kinetic resolution to overcome the limitation in yield of KR. To maintain and, if starting from a scalemic mixture, initially generate a 50:50 ratio of the substrate enantiomers in equilibrium, an in-situ conversion of the slow reacting enantiomer into the fast reacting one is occurring. The fast reacting substrate enantiomer is therefore never depleted, and the process will give a theoretical yield of 100% of the desired (highly) enantioenriched product. DKR is applied in asymmetric synthesis, for example, and has become a much explored field due to the challenge of creating a compound with a single 3D structure and the even more challenging task of taking a racemic mixture and having only one chiral product left after a reaction. According to the definition of KR stated above, the second enantiomer of the substrate is converted to the desired product at a higher rate due to a favorable interaction with the enantiopure agent (e.g. reagent, catalyst, solvent,...), leading to the selective formation of the second enantiomer of the product. Simultaneously, DKR exploits an intrinsic or by introduction of a catalyst induced configurational lability in a chiral molecule, e.g. a configurationally labile chiral center or axis, so that the first and the second enantiomer are rapidly interconverted throughout the reaction process. Consequently, the second enantiomer is replenished by racemization of the first enantiomer, thereby maintaining a racemic mixture of the substrate enantiomers at all times and enabling a theoretical 100% yield of the second product enantiomer.

In the context of the invention it is understood that an effective DKR process results in an ee of the silyl ether corresponding to the second enantiomer of the chiral alcohol of at least 20%, preferably at least 25%, more preferably at least 30%.

In embodiments, the DKR process of the invention results in an ee of the silyl ether generated from the second enantiomer and the hydrosilane of at least 20, 25, 30, 32, 34, 36, 38, 40, 44, 48, 52, 56, 60, 65, 70, 75, 80, 85 or 90 %.

It is understood that enantiomeric excess (ee) is a measurement of purity used for chiral substances. It reflects the degree to which a sample contains one enantiomer in greater amounts than the other. A racemic mixture has an ee of 0%, while a single completely pure enantiomer has an ee of 100%. A sample with 70% of one enantiomer and 30% of the other has an ee of 40% (70% - 30%).

In other words, DKR can be used to produce a third compound stereoselectively by reacting a first enantiomer of a substrate with a racemization catalyst to give a second enantiomer of the substrate, and concurrently reacting the second enantiomer of the substrate in the presence of a suitable stereoselective catalyst, where required with a fourth compound, to give the third compound, which is the (highly) enantioenriched, stereoselectively produced product of the DKR. Therein, the first enantiomer of the substrate is the slow reacting enantiomer with respect to the reaction catalyzed by the stereoselective catalyst, and the second enantiomer of the substrate is the fast reacting enantiomer with respect to the reaction catalyzed by the stereoselective catalyst. In the context of the present invention, the substrate may comprise a racemic or scalemic mixture of the first and the second enantiomer of the chiral alcohol, and in the latter case a racemic mixture will be rapidly obtained by in-situ racemization with the racemization catalyst, wherein the second enantiomer is subsequently employed in the silylation reaction. Here, the fourth compound is a hydrosilane, the stereoselective catalyst is an enantiopure silylation catalyst, and the third compound is a stereoselectively produced silyl ether.

As used herein, the term "catalyst" refers to a compound or substance that increases the rate of a chemical reaction, wherein the catalyst is not consumed in the catalyzed reaction but can act repeatedly. Chemical reactions occur faster in the presence of a catalyst because the catalyst provides an alternative reaction pathway - or mechanism - with a lower activation energy than the non-catalyzed mechanism. In catalyzed mechanisms, the catalyst usually interacts with one or more substrates to form one or more intermediates, forming the product along the way and finally regenerating the original catalyst.

In the context of the invention, the term "catalytic system" refers to a catalyst that is composed of several components/compounds/substances that act together for catalyzing a specific reaction. In particular, the enantioselective silylation catalyst of the invention is a catalytic system comprising at least three components, namely a copper salt, an inorganic or organometallic base and (-)-1,2-bis((2R,5R)-2,5-diarylphospholano)ethane or (+)-1,2-bis((2S,5S)-2,5-diarylphospholano)ethane ((R,R)-Ar-BPE or (S,S)-Ar-BPE).

In the context of the present invention, the enantioselective silylation catalytic system can comprise any kind of copper salt, in particular a copper(I) or copper(II) salt.

Copper (Cu) is a chemical element with the atomic number of 29. Copper has a range of different organic and inorganic salts, having varying oxidation states ranging from (+I) to (+III), and copper is one of the most common salt-forming transition metals, along with iron.

Copper(I) and (II) salts that can be used in the context of the catalytic system of the invention comprise all common copper salts known to the skilled person, such as CuX (X = F, Cl, Br, I, CN, SCN), CuOalkyl, CuOaryl, $CuOSiR^{14}_3$, CuOAc, CuTc, CuOTf, $(MeCN)_4CuBF_4$, Cu(alkyl), Cu(aryl), $Cu(OAc)_2$.

As is known to the skilled person, in organic chemistry the abbreviation "Ac" stands for an acetyl moiety, which is the acyl with chemical formula $CH_3CO$. However, in embodiments of the invention, Ac can also stand for any other acyl group.

Further examples of possible copper salts comprise Copper(I) oxide, Copper(I) chloride, Copper(I) iodide, Copper(I) cyanide, Copper(I) thiocyanate, Copper(I) sulfate, Copper(I) sulfide, Copper(I) acetylide, Copper(I) bromide, Copper(I) fluoride, Copper(I) hydroxide, Copper(I) hydride, Copper(I) nitrate, Copper(I) phosphide, Copper(I) thiophene-2-carboxylate, Copper(I) t-butoxide, Copper(II) sulfate, Copper(II) chloride, Copper(II) hydroxide, Copper(II) nitrate, Copper(II) oxide, Copper(II) acetate, Copper(II) fluoride, Copper(II) bromide, Copper(II) carbonate, Copper(II) carbonate hydroxide, Copper(II) chlorate, Copper(II) arsenate, Copper(II) azide, Copper(II) acetylacetonate, Copper(II) aspirinate, Copper(II) cyanurate, Copper(II) glycinate, Copper(II) phosphate, Copper(II) perchlorate, Copper(II) selenite, Copper(II) sulfide, Copper(II) thiocyanate, Copper(II) triflate, Copper(II) tetrafluoroborate, Copper(II) acetate triarsenite, Copper(II) benzoate, Copper(II) arsenite, Copper(II) chromite, Copper(II) gluconate, Copper(II) peroxide, Copper(II) usnate.

In embodiments, the copper salt or preferably the copper(I) or copper(II) salt to be used in the catalytic system of the invention is (i) sufficiently basic to directly deprotonate the substrate, namely the chiral alcohol, (ii) comprises a counter anion that is readily exchangeable for an external alcoholate base, or (iii) comprises a counter anion which can be silylated directly, such as for example an alcoholate, carboxylate or sulfonate.

Suitable examples of copper salts that can be used in the context of the DKR process of the invention are disclosed in the examples below, such as CuCl.

Furthermore, the enantioselective silylation catalytic system comprises an inorganic or organometallic base. In embodiments, the inorganic or organometallic base of the catalytic system is (i) sufficiently basic to deprotonate the chiral alcohol substrate of the process of the invention or (ii) comprises a counter anion that exchanges with the anion of the copper salt and is readily silylated. The inorganic or organometallic base can be the copper salt of the catalytic system or can be a separate component.

In embodiments, the inorganic or organometallic base is an alkoxide. An alkoxide is the conjugate base of an alcohol and therefore consists of an organic group bonded to a negatively charged oxygen atom. They are written as RO-, where R is the organic substituent. Alkoxides are strong bases and, when R is not bulky, good nucleophiles and good ligands.

In embodiments, the inorganic or organic base is a metal hydride suitable for the deprotonation of an alcohol, such as NaH. In embodiments, the inorganic or organometallic base is MOalkyl, MOcycloalkyl, MOaryl, $MOSiR_3$, MH, MR, $M_2CO_3$, wherein M = Li, Na, K or Cs, and R = aryl or alkyl. In a preferred embodiment, the inorganic or organic base is sodium *tert*-butoxide (NaO*t*Bu).

The enantioselective silylation catalytic system of the DKR process of the invention further comprises (-)-1,2-bis((2R,5R)-2,5-diarylphospholano)ethane or (+)-1,2-bis((2S,5S)-2,5-diarylphospholano)ethane ((R,R)-Ar-BPE or (S,S)-Ar-BPE). The abbreviation Ar stands for aryl, as is known to the skilled person.

An enantioselective silylation catalyst requires a chiral, enantiopure catalytic component which in the context of the present invention is either (R,R)-Ar-BPE or (S,S)-Ar-BPE. Use of (R,R)-Ar-BPE or (S,S)-Ar-BPE is decisive for specifying which of the two enantiomers of the chiral alcohol is the second/fast-reacting enantiomer. In preferred embodiments, (R,R)-Ar-BPE or (S,S)-Ar-BPE correspond to (R,R)-Ph-BPE or (S,S)-Ph-BPE, wherein the abbreviation Ph stand for phenyl, as is known to the person skilled in the art.

The structural formula (R,R)-Ph-BPE is

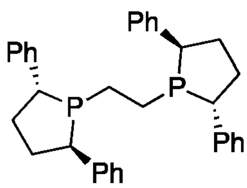

(*R*,*R*)-Ph-BPE .

The structural formula (S,S)-Ph-BPE is

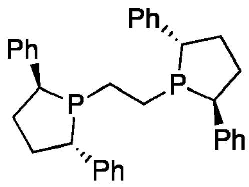

(*S*,*S*)-Ph-BPE .

In alternative embodiments, the Ar-BPE ligand may be selected from (*R*,*R*)-3,5-xylyl-BPE, (*S*,*S*)-3,5-xylyl-BPE, (*R*,*R*)-3,5-diisopropylphenyl-BPE, (*S*,*S*)-3,5-diisopropylphenyl-BPE, (*R*,*R*)-3,5-di-*tert*-butylphenyl-BPE, (*S*,*S*)-3,5-di-*tert*-butylphenyl-BPE, (*R*,*R*)-3,5-dimethoxyphenyl-BPE, (*S*,*S*)-3,5-dimethoxyphenyl-BPE, (*R*,*R*)-3,5-bis(trifluoromethyl)phenyl-BPE, (*S*,*S*)-bis(trifluoromethyl)phenyl-BPE, (*R*,*R*)-mesityl-BPE, (*S*,*S*)-mesityl-BPE, among others.

As used herein, the term "silylation" refers to a chemical reaction corresponding to the introduction of a (usually) substituted silyl group ($R_3Si$) to a molecule. A broad range of functional groups, including unactivated C-H bonds, can be silylated. Typical compound classes are alcohols and amines as well as arenes. In the context of the invention, silylation is carried out using an alcohol and a hydrosilane. Silylation involves the replacement of a proton with a trialkylsilyl group, such as trimethylsilyl ($SiMe_3$). Generally, the substrate is deprotonated with a suitable strong base followed by treatment with a silyl chloride (e.g. trimethylsilyl chloride). The silylation of hydroxy groups in alcohols can be done with alkyl or aryl silicon chlorides and is an important functionalization in organic chemistry. Pertinent to the present invention, alcohols and hydrosilanes can also be coupled in a dehydrogenative process with release of dihydrogen gas. Since the silyl group can be removed easily from the products formed, it is often also referred to as a protective group.

In the context of the invention, "hydrosilanes" are a class of compounds in which one to three hydrogen atoms of monosilane are replaced by typically alkyl, aryl, or alkoxy groups. According to the IUPAC rules, "silanes" are a group of chemical compounds consisting of a silicon skeleton and hydrogen, similar to alkanes. Silanes can have a branched (iso- and neo-silanes) or unbranched (n-silanes) structure. The general empirical formula of acyclic (open-chain, also called catena-silanes) silanes is $Si_nH_{2n+2}$. Ring-shaped silicon-hydrogen compounds are called cyclosilanes (general empirical formula: $Si_nH_{2n}$). Monosilane ($SiH_4$, sometimes referred to a silane) is the simplest representatives of silanes and thus the silicon analogue of methane.

In preferred embodiments of the invention, the hydrosilane is substituted with three alkyl and/or aryl groups. Accordingly, preferred hydrosilanes of the invention comprise all kinds of triorganohydrosilanes substituted with aryl and/or alky groups, wherein the aryl or alkyl groups can comprise further common substitution patterns known to the skilled person, such as various functional groups or halogens.

In particularly preferred embodiments, the hydrosilane can be selected from the group comprising triethylsilane ($Et_3SiH$), tri-*n*-propylsilane ($n Pr_3SiH$), tri-*n*-butylsilane ($n Bu_3SiH$), tri-*n*-pentylsilane ($Pent_3SiH$), tri-*n*-hexylsilane ($Hex_3SiH$), triisobutylsilane, triisopentylsilane, tris(4-methylpentyl)silane, tris(2-ethylbutyl)silane, tribenzylsilane, triphenethylsilane, dimethylphenylsilane, diethylphenylsilane, dibutylphenylsilane.

An "enantiomer" (in the past also termed optical isomer, antipode, or optical antipode) is one of two stereoisomers that are mirror images of each other and that are non-superposable (not identical), similar to a left and a right hand. A single chiral center or similar structural feature (i.e. other chiral elements, that may be classified as planar, axial, or helical) in a compound causes that compound to have two possible three dimensional structures which are non-superposable, each a mirror image of the other. The presence of multiple chiral features in a given compound increases the number of geometric forms possible, though there may still be some perfect-mirror-image pairs. A sample of a chemical compound is considered enantiopure (also termed enantiomerically pure) when it consists, within the limits of detection, of only one enantiomer of said compound.

A molecule is called chiral if it cannot be superposed on its mirror image by any combination of rotations and translations. This geometric property is called chirality. A chiral molecule exists in two stereoisomers that are mirror images of each other, called enantiomers; they are often distinguished as either "right-handed" or "left-handed" by their absolute configuration or some other criterion. The two enantiomers have the same chemical properties, except when reacting with other chiral compounds. They also have the same physical properties, except that they often have opposite optical activities. A homogeneous mixture of the two enantiomers in equal parts is said to be racemic, and it usually differs chemically and physically from the pure enantiomers. A chiral molecule or ion must have at least one chiral element that may be classified as central, planar, axial, or helical. When that chiral element coincides with an atom, the substance is said to have point chirality. In chiral organic compounds, a stereocenter is often an asymmetrically substituted carbon atom. A chiral alcohol is an alcohol comprising the hydroxy group coupled to an asymmetrically substituted carbon atom as a stereocenter.

When present in a symmetric environment, enantiomers have identical chemical and physical properties except for their ability to rotate plane-polarized light (+/-) by equal amounts but in opposite directions (although the polarized

light can be considered an asymmetric medium). Such compounds are therefore described as optically active, with specific terms for each enantiomer based on the direction: a dextrorotatory compound rotates light a clockwise (+) direction whereas a levorotatory compound rotates light in a counter-clockwise (-) direction.

A mixture of equal number of both enantiomers is called a racemic mixture or a racemate. In a racemic mixture, the amount of positive rotation is counteracted by the equal amount of negative rotation, so the net rotation is zero (the mixture is not optically active).

Different enantiomers of the same compound can be discriminated by the same enantiomer of a second compound, e.g. in a chemical transformation or adduct formation. Since many biological molecules are enantiomers, there is sometimes a marked difference in the effects of two enantiomers on biological organisms. In drugs, for example, often only one of a drug's enantiomers is responsible for the desired physiological effects, while the other enantiomer is less active, inactive, or sometimes even productive of adverse effects. Owing to this discovery, drugs composed of only one enantiomer ("enantiopure") can be developed to make the drug work better and sometimes eliminate some side effects. One enantiomer is responsible for all the desired effects, while the other enantiomer may be inactive.

The R/S system is an important nomenclature system used to denote distinct enantiomers. Another system is based on prefix notation for optical activity: (+)- and (-)- or D- and L-. The Latin words for left are laevus and sinister, and the word for right is dexter (or rectus in the sense of correct or virtuous). The English word right is a cognate of rectus. This is the origin of the L/D and S/R notations, and the employment of prefixes levo- and dextro- in common names.

Herein, the term "stereoselective" catalyst and "enantioselective" catalyst are used interchangeably and refer to catalysts that are selective for one enantiomer of a racemic mixture to be used as a substrate in a chemical reaction, such as a silylation. In other words, in the context of the present invention, the enantioselective silylation catalyst catalyzes the reaction of the fast-reacting second enantiomer of the chiral alcohol and the hydrosilane faster than the reaction of the slow-reacting first enantiomer and the hydrosilane. Accordingly, enantioselective silylation refers to a silylation reaction that preferably employs one specific enantiomer of a racemic mixture of a chiral alcohol as a substrate.

Racemization is the conversion of an optically active compound into an optically inactive form, wherein half of the optically active substance becomes its mirror image (enantiomer). Corresponding mixtures of both (+) and (-) enantiomers in equal amounts are referred to as racemic mixtures, whereas mixtures of both (+) and (-) enantiomers in unequal amounts are referred to as scalemic mixtures. A "racemization catalyst" is a catalyst that promotes/accelerates racemization. If the racemization results in a mixture where the D and L enantiomers are present in equal quantities, the resulting sample is described as a racemic mixture or a racemate. Racemization can proceed through a number of different mechanisms, and it has particular significance in pharmacology as different enantiomers may have different pharmaceutical effects.

In the context of (dynamic) kinetic resolution, the term "non-enzymatic" relates to reactions that employ catalysts that neither classify as enzymes (proteins that act as biological catalysts (biocatalysts)) nor as other biocatalysts, such as ribozymes.

As used herein, the term "covalent bond" refers to a molecular bond, which is a chemical bond that involves the sharing of electron pairs between atoms. These electron pairs are known as shared electron pairs or bonding electron pairs, and the stable balance of attractive and repulsive forces between atoms, when they share electrons, is known as covalent bonding. In many cases, the sharing of electrons allows each atom to attain the equivalent of a full outer shell, corresponding to a stable electronic configuration.

*Chemical compounds and substituents*

With respect to the chemical compounds described herein, the term "alkyl" refers to a branched or unbranched saturated hydrocarbon group of preferably 1 to 7 carbon atoms, such as methyl, ethyl, n-propyl, isopropyl, n-butyl, isobutyl, sec-butyl, pentyl, hexyl, heptyl, and the like. Preferred alkyl groups have 1-7 carbon atoms, more preferably 1-6, 1-5, 1-4 or 1-3, 2 or 1 carbon atoms. Any one or more of the alkyl groups described herein may be "substituted alkyls", wherein one or more hydrogen atoms are substituted with a substituent such as halogen, cycloalkyl, alkoxy, hydroxyl, aryl, or carboxyl. Accordingly, the term "alkyl" comprises also aralkyl substituents, representing an aryl substituted alkyl.

The term "aryl" refers to any carbon-based aromatic group including, but not limited to, benzene, naphthalene, and the like. The term "aromatic" also includes "heteroaryl group," which is defined as an aromatic group that has at least one heteroatom incorporated within the ring of the aromatic group. Examples of heteroatoms include, but are not limited to, nitrogen, oxygen, sulfur. The aryl group can be substituted with one or more groups including, but not limited to, alkyl, aryl, halogen, nitro, hydroxy, carboxylic acid, or alkoxy, or the aryl group can be unsubstituted.

The terms "heteroaryl" (unsaturated aromatic ring structure), "heterocycloalkyl" (saturated ring structure) and "heterocycloalkenyl" (partly unsaturated ring structure) are understood to relate to hydrocarbon rings containing from 3 to 15 carbon atoms in a mono- or bicyclic , fused, bridged or spirocyclic ring in which 1 to 5 carbon atoms of the 3 to 15 ring carbon atoms are replaced by heteroatoms such as nitrogen, oxygen or sulfur in which further the heteroatoms can

be oxidized, for example N=O, S=O, SO2. Non-limiting examples of heterocycles are acridinyl, azaindole (1H-pyrrolopyridinyl), azabenzimidazolyl, azaspirodecanyl, azepinyl, azetidinyl, aziridinyl, benzimidazolyl, benzofuranyl, dihydrobenzofuranyl, benzothiofuranyl, benzothiophenyl, benzoxazolyl, benzthiazolyl, benztriazolyl, benztetrazolyl, benzisoxazolyl, benzisothiazolyl, carbazolyl, 4aH-carbazolyl, carbolinyl, chromanyl, chromenyl, cinnolinyl, decahydrochinolinyl, 4,5-dihydrooxazolinyl, dioxazolyl, dioxazinyl, 1,3-dioxolanyl, 1,3-dioxolenyl, 3,3-dioxo[1,3,4]oxathiazinyl, 6H-1,5,2-dithiazinyl, dihydrofuro[2,3-b]-tetrahydrofuranyl, furanyl, furazanyl, imidazolidinyl, imidazolinyl, imidazolyl, 1H-indazolyl, indolinyl, indolizinyl, indolyl, 3H-indolyl, isobenzofuranyl, isochromanyl, isoindazolyl, isoindolinyl, isoindolyl, isoquinolinyl (benzimidazolyl), isothiazolyl, isothiazolidinyl, isothiazolinyl, isoxazolyl, isoxazolinyl, isoxazolidinyl, 2-isoxazolinyl, ketopiperazinyl, morpholinyl, naphthyridinyl, octahydroisoquinolinyl, oxadiazolyl, 1,2,3-oxadiazolyl, 1,2,4-oxadiazolyl, 1,2,5-oxadiazolyl, 1,3,4-oxadiazolyl, 1,2-oxa-thiepanyl, 1,2-oxathiolanyl, 1,4-oxazepanyl, 1,4-oxazepinyl, 1,2-oxazinyl, 1,3-oxazinyl, 1,4-oxazinyl, oxazolidinyl, oxazolinyl, oxazolyl, oxetanyl, oxocanyl, phenanthridinyl, phenanthrolinyl, phenazinyl, phenothiazinyl, phenoxathiinyl, phenoxazinyl, phthalazinyl, piperazinyl, piperidinyl, pteridinyl, purinyl, pyranyl, pyrazinyl, pyrazolidinyl, pyrazolinyl, pyrazolyl, pyridazinyl, pyridooxazolyl, pyridoimidazolyl, pyridothiazolyl, pyridinyl, pyridyl, pyrimidinyl, pyrrolidinyl, pyrrolidinonyl, pyrrolinyl, 2H-pyrrolyl, pyrrolyl, quinazolinyl, quinolinyl, 4H-quinolizinyl, quinoxalinyl, quinuclidinyl, tetrahydrofuranyl, tetrahydroisoquinolinyl, tetrahydroquinolinyl, tetrahydrofuranyl, tetrahydropyranyl, tetrahydropyridinyl, tetrahydrothiophenyl, tetrazinyl, tetrazolyl, 6H-1,2,5-thiadiazinyl, 1,2,3-thiadiazolyl, 1,2,4-thiadiazolyl, 1,2,5-thiadiazolyl, 1,3,4-thiadiazolyl, thianthrenyl, 1,2-thiazinyl, 1,3-thiazinyl, 1,4-thiazinyl, 1,3-thiazolyl, thiazolyl, thiazolidinyl, thiazolinyl, thienyl, thietanyl, thienothiazolyl, thienooxazolyl, thienoimidazolyl, thiomorpholinyl, thiophenolyl, thiophenyl, thiopyranyl, 1,2,3-triazinyl, 1,2,4-triazinyl, 1,3,5-triazinyl, 1,2,3-triazolyl, 1,2,3-triazolyl, 1,2,4-triazolyl, 1,2,5-triazolyl, 1,3,4-triazolyl and xanthenyl.

The term "alkenyl" refers to a straight, branched or cyclic hydrocarbon configuration and combinations thereof, including preferably 2 to 7 carbon atoms, more preferably 2 to 4 carbon atoms, that would form if a hydrogen atom is removed from an alkene, for example resulting in ethenyl, or the like.

The term "alkynyl" refers a straight, branched or cyclic hydrocarbon configuration and combinations thereof, including preferably 2 to 7 carbon atoms, more preferably 2 to 4 carbon atoms, that would form if a hydrogen atom is removed from an alkyne, for example resulting in ethynyl, or the like.

The term "cycloalkyl" refers to a configuration derived from a cycloalkane by removal of an atom of hydrogen, thereby forming preferably cyclopropyl, cyclobutyl, cyclopentyl, cyclohexyl or cycloheptyl, or the like.

The term "alkoxy" refers to a straight, branched or cyclic hydrocarbon configuration and combinations thereof, including preferably 1-7 carbon atoms, more preferably 1-6, 1-5, 1-4 or 1-3 carbon atoms, that include an oxygen atom at the point of attachment (such as Oalkyl). An example of an "alkoxy group" is represented by the formula -OR, or -ROR, where R can be an alkyl group, optionally substituted with halogen, aryl, cycloalkyl, halogenated alkyl. Suitable alkoxy groups include methoxy, ethoxy, n-propoxy, i-propoxy, n-butoxy, i-butoxy, sec-butoxy, cyclohexyloxy, and the like.

The term halogen or halo comprises all halogen atoms, in particular fluorine (F), chlorine (Cl), bromine (Br), iodine (I), and astatine (At).

The terms Oalkyl and Oaryl refer to groups of the formula -O-alkyl or -O-aryl, wherein the alkyl or aryl group as defined herein is linked to the respective residue of the compound by an oxygen atom.

The terms Calkyl and Caryl refer to groups of the formula -C-alkyl or -C-aryl, wherein the alkyl or aryl group as defined herein is linked to the respective residue of the compound by a carbon atom.

The terms Oalkyl and Oaryl refer to groups of the formula -S-alkyl or -S-aryl, wherein the alkyl or aryl group as defined herein is linked to the respective residue of the compound by a sulfur atom.

The term Chalo refers to a group of the formula $-CH_2$-halo, wherein to a halogen (halo), such as preferably Cl, Br or F, is linked to the respective residue of the compound by a carbon atom that is substituted with two hydrogens ($-CH_2$-halo).

The terms COalkyl and COaryl refer to groups of the formula -CO-alkyl or -CO-aryl, wherein the alkyl or aryl group as defined herein is linked to the respective residue of the compound by a carbonyl group.

The terms Salkyl and Saryl refer to groups of the formula -S-alkyl or -S-aryl, wherein the alkyl or aryl group as defined herein is linked to the respective residue of the compound by a sulfur atom in which further the sulfur atom can be oxidized, for example S=O or $SO_2$.

The terms $CO_2$alkyl and $CO_2$aryl refer to groups of the formula -CO-O-alkyl or -CO-O-aηl, wherein the alkyl or aryl group as defined herein is linked to the respective residue of the compound by a carboxylate ester bond.

As used herein, the term "acetal" refers to a functional group with the connectivity $R_2C(OR')_2$). Here, the R groups can be organic substituents (a carbon atom, with arbitrary other atoms attached to it) or hydrogen, while the R' groups must be organic substituents and not hydrogen. The two R' groups can be equivalent to each other (a "symmetric acetal") or not (a "mixed acetal") and may be linked, resulting in the formation of a saturated or partially saturated heterocyclic structure. The central carbon atom has four bonds to it, and is therefore saturated and has tetrahedral geometry.

The term "boryl" relates to boryl groups as substitutents of the molecules described herein. Boronic acids, and

boronic esters (also called boronate esters) are common boryl groups incorporated into organic molecules through borylation reactions. Metal-catalyzed C-H borylation reactions are transition metal catalyzed organic reactions that produce an organoboron compound through functionalization of aliphatic and aromatic C-H bonds and are therefore useful reactions for carbon-hydrogen bond activation. Metal-catalyzed C-H borylation reactions utilize transition metals to directly convert a C-H bond into a C-B bond. This route can be advantageous compared to traditional borylation reactions by making use of cheap and abundant hydrocarbon starting material, limiting prefunctionalized organic compounds, reducing toxic byproducts, and streamlining the synthesis of biologically important molecules. Boronic acids are trivalent boron-containing organic compounds that possess one alkyl substituent and two hydroxyl groups. Similarly, boronic esters possess one alkyl substituent and two ester groups. Boronic acids and esters are classified depending on the type of carbon group (R) directly bonded to boron, for example alkyl-, alkenyl-, alkynyl-, and aryl-boronic esters. The most common type of starting materials that incorporate boronic esters into organic compounds for transition metal catalyzed borylation reactions have the general formula $(RO)_2B\text{-}B(OR)_2$. For example, bis(pinacolato)diboron ($B_2Pin_2$), and bis(catecholato)diborane ($B_2Cat_2$) are common boron sources of this general formula.

As disclosed herein, the racemization catalyst of the DKR process of the invention comprises

- $P^1$ and $P^2$ are organic or organometallic structures covalently linked to M via a phosphorus atom, wherein $P^1$ and $P^2$ form a single organic or organometallic structure ($P^1 \cap P^2$) selected from the group comprising bis(diorganophosphino)alkanes, 1,1'-bis(diorganophosphino)ferrocenes, 1,2-bis(diorganophosphino)benzenes, 1,8-bis(diorganophosphino)naphthalenes, and 2,2'-bis(diorganophosphino)diaryls,

- $P^1$ and $P^2$ form a single organic or organometallic structure ($P^1 \cap P^2$) selected from the group comprising bis(diphenylphosphino)butane and 1,1'-bis(diphenylphosphino)ferrocene, or
  wherein $P^1$ and $P^2$ are two organic structures not linked to each other and are triphenylphosphine.

As used herein, the term "organo" refers to alkyl and aryl groups as defined herein.

Furthermore, it is understood that an organometallic structure refers to a substituent that is a organometallic compound containing at least one metal-to-carbon bond in which the carbon is part of an organic group. Organometallic compounds constitute a very large group of substances that are used to a large extent as catalysts (substances that increase the rate of reactions without themselves being consumed) and as intermediates in the laboratory and in industry. The class includes such compounds as ferrocene, a remarkably stable compound in which an iron atom is sandwiched between two hydrocarbon rings.

In embodiments, $P^1$ and $P^2$ form a single organic or organometallic structure ($P^1 \cap P^2$) selected from the group comprising bis(diorganophosphino)alkanes, 1,1'-bis(diorganophosphino)ferrocenes, 1,2-bis(diorganophosphino)benzenes, 1,8-bis(diorganophosphino)naphthalenes, and 2,2'-bis(diorganophosphino)diaryls, such as bis(diphenylphosphino)butane and 1,1'-bis(diphenylphosphino)ferrocene.

In embodiments, $P^1$ and $P^2$ form a single organic or organometallic structure ($P^1 \cap P^2$) selected from the group comprising bis(diphenylphosphino)butane and 1,1'-bis(diphenylphosphino)ferrocene.

The term "amine" refers to a group of the formula -NRR', where R and R' can be, independently, hydrogen or an alkyl, alkenyl, alkynyl, aryl, aralkyl, cycloalkyl, halogenated alkyl, or heterocycloalkyl group described above.

The term "amide" or "amido" is represented by the formula -C(O)NRR', where R and R' independently can be a hydrogen, alkyl, alkenyl, alkynyl, aryl, aralkyl, cycloalkyl, halogenated alkyl, or heterocycloalkyl group described above. A suitable amido group is acetamido.

"Carbonyl" refers to a group of the formula -C(O)-. Carbonyl-containing groups include any substituent containing a carbon-oxygen double bond (C=O), including acyl groups, amides, carboxy groups, esters, ureas, carbamates, carbonates and ketones and aldehydes, such as substituents based on -COR or -RCHO where R is an aliphatic, heteroaliphatic, alkyl, heteroalkyl, hydroxyl, or a secondary, tertiary, or quaternary amine, phenyl, a substituted phenyl (substituted with, for example, halogen, C1-C3 alkyl, alkoxy, amine), carboxyl, alkoxycarbonyl, amine, aryl.

The term "alkyl amino" refers to alkyl groups as defined above where at least one hydrogen atom is replaced with an amino group.

"Aminocarbonyl" alone or in combination, means an amino substituted carbonyl (carbamoyl) radical, wherein the amino radical may optionally be mono- or di-substituted, such as with alkyl, aryl, aralkyl, cycloalkyl, cycloalkylalkyl, alkanoyl, alkoxycarbonyl, aralkoxycarbonyl and the like. An aminocarbonyl group may be -N(R)-C(O)-R (wherein R is a substituted group or H) or -C(O)-N(R).

"Carboxyl" refers to a -COOH radical. Substituted carboxyl refers to -COOR where R is aliphatic, heteroaliphatic, alkyl, heteroalkyl, or a carboxylic acid or ester.

The term "hydroxyl" is represented by the formula -OH.

The term "hydroxyalkyl" refers to an alkyl group that has at least one hydrogen atom substituted with a hydroxyl group. The term "alkoxyalkyl group" is defined as an alkyl group that has at least one hydrogen atom substituted with

an alkoxy group described above.

Herein the term "aralkyl" refers to a radical in which an aryl group is substituted for an alkyl H atom. The term is derived from "arylated alkyl". In other words, an aralkyl is an aryl group having an alkyl group, as defined above, attached to the aryl group, as defined above. An example of an aralkyl group is a benzyl group.

As disclosed herein, the terms "aryl" and "alkyl" comprise substituted aryl and alkyl groups. Accordingly, compounds disclosed herein comprising an aryl and/or alkyl substituents comprise compounds comprising substituted aryl and/or substituted alkyl substituents as well as compounds comprising unsubstituted aryl and/or unsubstituted alkyl substituents. Accordingly, such compounds comprise optionally substituted aryl and/or alkyl groups.

Optionally substituted groups, such as "optionally substituted alkyl," refers to groups, such as an alkyl group, that when substituted, can have for example from 1-5 substituents, typically 1, 2 or 3 substituents, selected from alkoxy, optionally substituted alkoxy, acyl, acylamino, acyloxy, amino, aminoacyl, aminoacyloxy, aryl, carboxyalkyl, optionally substituted cycloalkyl, optionally substituted cycloalkenyl, halogen, optionally substituted heteroaryl, optionally substituted heterocyclyl, hydroxy, sulfonyl, thiol and thioalkoxy.

In particular, optionally substituted alkyl groups include, by way of example, haloalkyl groups, such as fluoroalkyl groups, including, without limitation, trifluoromethyl groups. These potential optional substituents apply to any group of the formulas disclosed herein. Preferable optional substituents are hydroxyl, alkyl, alkoxy, carbonyl, alkoxycarbonyl, $NO_2$, amine.

The term "aldehyde" is represented by the formula -CHO, consisting of a carbonyl center (a carbon double-bonded to oxygen) with the carbon atom also bonded to hydrogen and to an R group, preferably the backbone of the formula.

The term "carboxyester" is represented by the formula -C(O)-O-R.

The term "carboxamide" is represented by the formula -C(O)-N(R)-R.

The term "primary, secondary or tertiary amine" is represented by the formula -N(R)-R.

The term "carbamate" is represented by the formula -NR-C(O)-O-R.

The term "amide amine" is represented by the formula -NH-C(O)-NH-R.

The term "sulfide" is represented by the formula -S-R

The terms "amine sulfoxide", "sulfonamide", "sulfonamide amine" are preferably selected from the groups $-N(R)-S(O)_u-R$, wherein u is 1 or 2, or $-S(O)_v-N(R)-R$, wherein v is 1 or 2, preferably from the groups $-NHSO_2CH_3$, $-SO_2NHCH_3$, $-NHSO_2N(CH_3)_2)$.

The terms "sulfoxide" or "sulfone are preferably selected from the groups $-SO_r-R$, wherein r is 1-3, preferably from the groups -S(O)R, $-SO_2R$, $-SO_2H$, and $-SO_3H$.

The term "sulfonamide haloalkyl" is preferably selected from $-NHSO_2CF_3$, $-NHSO_2CH_2CF_3$.

The term "imide" is represented by the formula -C(O)-N(R)-C(O)-R'.

The term "sulfide" is represented by the formula -SR.

The term "sulfurtrihalide" is represented by the formula $-SX_3$.

The term "sulfurpentahalide" is represented by the formula $-SX_5$.

The term "sulfinyl" is represented by the formula -S(O)R.

The term "sulfonyl" is represented by the formula $-SO_2R$.

The term "sulfino" is represented by the formula $-SO_2H$.

The term "sulfo" is represented by the formula $-SO_3H$.

For the definitions above, preferably the terms R, R' are independently selected from the group of H, alkyl, alkylhalo, alkoxy, or amine, and wherein X is halogen. The terms R, R' also comprise the possibility of any given group being appended to R.

The term "nitro" refers to an $NO_2$ group.

The term "5-membered heterocyclyl or heteroaryl" refers to a configuration comprising a 5-membered heterocyclic optionally aromatic ring structure, comprising preferably C and one or more of N, O and/or S, preferably selected from a configuration if a hydrogen atom is removed from furan, pyrrole, oxazole, thiophene, thiazole, pyrazole, imidazole, and the like.

The "5- or 6-membered heterocyclyl or heteroaryl" as described herein relates preferably to a cycloalkyl, cycloalkane non-aromatic cyclic structures, such as cyclopentyl or cyclohexyl, and optionally to aromatic cyclic structures, such as phenyl, and the like.

The "6-membered heterocycle" as described herein relates preferably to a cycloalkyl, cycloalkane non-aromatic cyclic structures, such as cyclohexyl, or to aromatic cyclic structures, such as phenyl, and the like.

The "6-membered aromatic heterocycle, comprising one or more of N, O and/or S" as described herein refers to a configuration comprising a 6-membered ring structure comprising C and one or more of N, O and/or S, preferably selected from a configuration if a hydrogen atom is removed from pyridine, pyridazine, pyrimidine, pyrazine, pyran, triazine, thiazine, thiopyran, oxazine, and the like.

In some embodiments, the "6-membered aromatic heterocycle" comprises 1 or 2 N atoms, referring to a configuration comprising a 6-membered ring structure comprising C and 1 or 2 N atoms, preferably selected from pyridine, pyridazine, pyrimidine, pyrazine, triazine, thiazine, oxazine, and the like. Preferred heterocycles comprise only 1 or 2 N atoms.

Where reference is made to "C1-C7, C1-C5 or C1-C3" alkyl, cycloalkyl, alkoxy, aryl, or the like, the number of carbon atoms C1-C7 preferably refers to each of the substituents mentioned, although in some embodiments the shorter substituents of C1-C5 or C1-C3 apply to the alkyl, cycloalkyl and/or alkoxy groups, whereby aryl may remain preferably C1-C7, such as C6 phenyl.

Protected derivatives of the disclosed compound also are contemplated, for example for use in the synthesis of the disclosed compounds. A variety of suitable protecting groups for use with the disclosed compounds are disclosed in Greene and Wuts Protective Groups in Organic Synthesis; 3rd Ed.; John Wiley & Sons, New York, 1999. In general, protecting groups are removed under conditions which will not affect the remaining portion of the molecule. These methods are well known in the art and include acid hydrolysis, hydrogenolysis and the like. The compound disclosed in the context of the invention may also comprise deuterium replacing hydrogen.

## FIGURES

The invention is further described by the following figures. These are not intended to limit the scope of the invention but represent preferred embodiments of aspects of the invention provided for greater illustration of the invention described herein.

**Figure 1:** Representative DKRs of alcohols by acylation (top) and planned silylation approach (bottom). DMAP = 4-dimethylaminopyridine, (*R*,*R*)-Ph-BPE = 1,2-bis[(2*R*,5*R*)-2,5-diphenylphospholan-1-yl]ethane.

**Figure 2:** Potential candidates for catalytic alcohol racemization.

**Figure 3:** Interrogation of potential background reactions. All reactions were performed on a 0.2 mmol scale. Enantiomeric excesses were determined by HPLC analysis on a chiral stationary phase after cleavage of the silyl ether. Conversions were determined by GLC analysis using tetracosane as an internal standard.

**Figure 4:** DKR of acyclic benzylic alcohols. All reactions were performed on a 0.2 mmol scale. Yields are isolated yields after flash chromatography on silica gel. Enantiomeric excesses were determined by HPLC analysis on chiral stationary phases after cleavage of the silyl ether. [a] The reaction time was 48 h. [b] Estimated enantiomeric excess since no baseline separation was achieved. [c] The reaction time was 36 h. [d] The reaction time was 84 h. Boc = *tert*-butoxycarbonyl.

**Figure 5:** DKR of aliphatic alcohols. All reactions were performed on a 0.2 mmol scale. Yields are isolated yields after flash chromatography on silica gel. Enantiomeric excesses were determined by HPLC analysis on a chiral stationary phase after cleavage of the silyl ether and derivatization as the p-nitrobenzoate. [a] The reaction time was 84 h. [b] The reaction time was 120 h after which 65% conversion of 1-cyclohexylpropanol was detected by GLC analysis using tetracosane as an internal standard. [c] Estimated enantiomeric excess since no baseline separation was achieved.

**Figure 6:** DKR of cyclic benzylic alcohols. All reactions were performed on a 0.2 mmol scale. Yields are isolated yields after flash chromatography on silica gel. Enantiomeric excesses were determined by HPLC analysis on chiral stationary phases after cleavage of the silyl ether.

## EXAMPLES

The invention is further described by the following examples. These are not intended to limit the scope of the invention but represent preferred embodiments of aspects of the invention provided for greater illustration of the invention described herein.

### Results of the Examples

*Identification of racemization catalyst candidates*

Our study commenced with an investigation of several ruthenium and osmium complexes as potential racemization catalysts with (*S*)-1-phenylethanol [(*S*)-**2a**] as the model substrate and benzene-$d_6$ as the solvent (Figure 2 and

Table 1). As expected, fast racemization of (*S*)-**2a** was seen using ruthenium complex **1** as the precatalyst and NaO*t*Bu as the base (entry 1). The situation changed dramatically under our established KR conditions. The racemization was substantially slowed down in the presence of 6.0 mol% of (R,R)-Ph-BPE and stopped almost entirely when 1.3 equiv of *n*$Bu_3$SiH were added (entries 2-4).[12] A similar result was obtained with the structurally related, more robust ruthenium complex **3a** where one carbonyl ligand is replaced by triphenylphosphine (entry 5).[3b] The electronic modification of this complex using electron-richer and -poorer phosphines as in **3b** and **3c** had no effect (entries 6 and 7). We then turned our attention towards bifunctional catalysts **4** bearing a metal-bound amino group that have been employed in transfer hydrogenation with great success).[13] In contrast to the half-sandwich complexes **1** and **3a-c** operating through an inner-sphere mechanism,[14] these catalysts likely operate through an outer-sphere mechanism involving hydrogen bonding to the $NH_2$ functionality as the crucial feature.[15] In recent years, transition-metal pincer complexes have emerged as highly active and robust catalysts, with [M(CNN)(dppb)Cl with M = Ru and Os] **4a** and **4b** as well as [Ru(PNP)(CO)HCl] **5** achieving particularly high turnover frequencies.[16] Also, ruthenium complex **5** was reported to facilitate the catalytic hydrogenolysis of chlorosilanes to produce hydrosilanes,[17] thereby making catalyst poisoning under our setup unlikely. Indeed, fast racemization of (*S*)-1-phenylethanol [(*S*)-**2a**] in the presence of both (*R*,*R*)-Ph-BPE and *n*$Bu_3$SiH was accomplished with all of the bifunctional catalysts **4a**, **4b**, and **5** (entries 8-10) and merely trace amounts of acetophenone were observed.

***Table 1:*** *Identification of a Suitable Racemization Catalyst*[a]

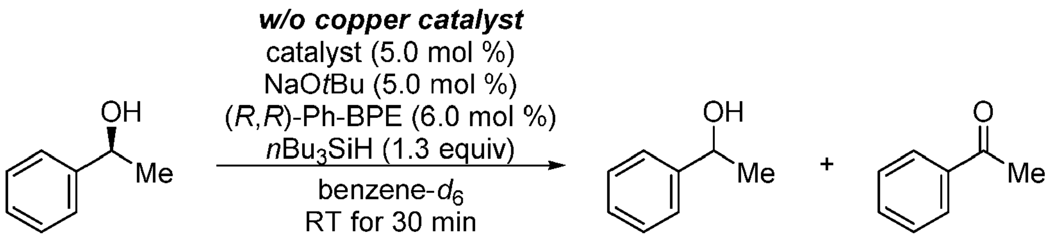


(*S*)-**2a**

*rac*-**2a**

>95 : <5[b]

| entry | catalyst | variation | ee (%)[c] |
|---|---|---|---|
| 1 | **1** | w/o (R,R)-Ph-BPE, *n*$Bu_3$SiH | 0 |
| 2 | **1** | w/o *n*$Bu_3$SiH | 32 |
| 3 | **1** | w/o (R,R)-Ph-BPE | 93 |
| 4 | **1** | - | 95 |
| 5 | **3a** | - | 93 |
| 6 | **3b** | - | 94 |
| 7 | **3c** | - | 90 |
| 8 | **4a** | - | 0 |
| 9 | **4b** | - | 0 |
| 10 | **5** | - | 0 |

[a] All reactions were performed on a 0.1 mmol scale. [b] Estimated by in-situ $^1H$ NMR analysis; ratio based on the integration of baseline-separated proton resonances. [c] Determined by HPLC analysis on a chiral stationary phase.

*Candidates activity in potential racemic background reactions*

With three promising candidates as racemization catalysts in hand, we next investigated their activity in the aforementioned racemic background reactions (Figure 3). Importantly, none of the pincer complexes catalyzed the racemization of the silyl ether (*S*)-**6a** in basic medium (Figure 3, top). Additionally, both the Ru- and the Os-CNN complexes **4a** and **4b** did not promote the dehydrogenative coupling of 1-phenylethanol (**2a**) and *n*$Bu_3$SiH (Figure 3, bottom). Conversely, when Ru-PNP complex **5** was employed as the precatalyst, substantial amounts of silyl ether **6a** were formed within 14 h, therefore thwarting its suitability for our endeavor. Without any differences in catalytic activity between

**4a** and **4b**, we continued with Ru-CNN complex **4a** as the designated racemization precatalyst.

*DKR in the presence of a copper catalyst*

We then tried the DKR of racemic 1-phenylethanol (**2a**) in the presence of a copper catalyst, employing ruthenium complex **4a** and our established resolving system consisting of CuCl, NaO*t*Bu, (*R*,*R*)-Ph-BPE, and $n\text{Bu}_3\text{SiH}$ in toluene. With 1.1 equiv of the hydrosilane, quantitative conversion of the alcohol was achieved after stirring for 14 h at room temperature, and the corresponding silyl ether (*S*)-**6a** was isolated with 84% ee. It is worth noting that the reaction also proceeded smoothly in polar protic solvents such as *tert*-amyl alcohol with unchanged reactivity and enantioselectivity (see the Supporting Information for details). However, reducing the reaction temperature to 0 °C did not improve the enantiomeric excess although good reactivity was maintained.

*DKR of acyclic benzylic alcohols*

With suitable conditions established, we explored the scope of this DKR (Figure 4). Various sterically and electronically modified benzylic alcohols **2a-z** were tested, and the corresponding silyl ethers (*S*)-**6a**-**y** were generally obtained in almost quantitative yields with good to high levels of enantioselection. Both electron-donating (Me and OMe) and electron-withdrawing substituents (aryl, heteroaryl, halogen atoms, $CF_3$, and $CO_2t\text{Bu}$) were well tolerated but a trend regarding the reactivity or selectivity was not apparent.

A detailed survey of the influence of the aryl group's steric effects revealed that monosubstitution of the parent 1-phenylethanol (**2a**) with methyl groups in the *ortho*-, *meta*- and *para*-positions as in **2b**, **2d**, and **2f** was compatible with only little influence on the enantiomeric excess.

However, when a bulkier bromine atom was installed in either of these positions a more pronounced effect was observed. Here, *ortho*-substituted (*S*)-**6c** was obtained with considerably lower ee, pointing towards a possible limitation of the racemization catalyst **4a**. Conversely, the enantioselectivities observed for *meta*- and *para*-substituted derivatives (*S*)-**6e** and (*S*)-**6j** were in the expected range yet noticeably higher in the former case.

Accordingly, disubstitution in the *meta*-position led to the silyl ethers (*S*)-**6n-p** with improved enantioselectivities while *ortho*,*ortho*-dimethylated **6q** was isolated with somewhat reduced enantiomeric excess and after prolonged reaction time.

The latter result stands in stark contrast to the outstanding selectivity factor of 170 observed in the KR of **2q** with the same copper catalyst.[10e] Consequently, steric bulk in the *ortho*-position exerts a strong effect on racemization ability of catalyst **4a**. In line with these findings, both α- and β-naphthyl-substituted derivatives **2r** and **2s** as well as alcohols bearing heterocyclic furan-2-yl and thien-2-yl units as in **2t** and **2u** exhibited high reactivity and good enantioselectivity. Also, for 1-(pyridin-4-yl)ethan-1-ol (**2v**) the enantiodifferentiation stayed in the same range. As expected from our previous work,[10e] both the enantiomeric excess and the reactivity decreased with increasing size of the alkyl group Me < Et < Bn << *i*Pr [**2a** and **2w-y** → (*S*)-**6a** and (*S*)-**6w-y**]. This trend was further corroborated in an application to 7, a precursor of duloxetine (Figure 4, gray box, left). The thien-2-yl unit had been shown to be compatible before [cf. **2u** → (*S*)-**6u**] but the ethylene-tethered, Boc-protected amino group was detrimental, affording (*S*)-**9** with moderate 62% ee; the coordination ability of the Boc group could however contribute to this outcome. In another application, carbamate-containing **8** participated in the DKR with good efficiency to yield the rivastigmine precursor (*S*)-**10** in 93% ee (Figure 4, gray box, right).

*DKR of acyclic aliphatic alcohols*

Selected aliphatic alcohols were also included into this study (Figure 5), especially to compare 1-phenylethanol **2a** with fully saturated 1-cyclohexylethanol. The corresponding silyl ether (*S*)-**11a** (79% ee) did form with slightly diminished ee compared to (*S*)-**6a** (86% ee), and the reaction had a significantly smaller reaction rate (days versus hours). Both substitution of the cyclohexyl moiety with a cyclopentyl group (as in (*S*)-**11b**) and slight chain elongation (i.e. Me → Et as in (*S*)-**11c**) led to slightly lower enantioselectivity.

*DKR of cyclic benzylic alcohols*

We also investigated cyclic benzylic alcohols **12a-h** with different ring sizes as substrates for our reaction (Figure 6). Again, yields were nearly quantitative and enantioselectivities were usually slightly better than for their acyclic counterparts. Hence, five- to seven-membered carbocyclic alcohols **12a-c** smoothly underwent the reaction, although the benzosuberol-derived silyl ether (*S*)-**13c** was obtained with slightly lower ee. Substitution with a heteroatom in the saturated ring was also tolerated, and the highly functionalized (thio)chromanol-derived silyl ethers (*S*)-**13d-f** and (*S*)-**13g** were amenable with high ee. Furthermore, the position of the heteroatom had no significant effect on the selectivity

of our reaction as evident from the tetrahydro(iso)quinolinol-derived silyl ethers (*S*)-**13h** and (*R*)-**14** (gray box).

*Summary*

DKR of secondary alcohols is typically achieved by enantioselective acylation techniques for which several chemoenzymatic protocols are available.[1a] Fu's nonenzymatic process had remained an isolated example[5] and is also a beautiful example of orthogonal tandem catalysis.[18] A cognate tool relying on the stereoselective silylation of alcohols has been unprecedented so far. We reported here a DKR of secondary alcohols by means of a Cu-H-catalyzed dehydrogenative coupling with the simple hydrosilane $n\mathrm{Bu_3SiH}$. The choice of the racemization catalyst is crucial as commonly used ruthenium half-sandwich complexes fail under our previously established, commercially available resolving system.[10e] In turn, bifunctional ruthenium and osmium pincer complexes were identified as suitable alternatives and were successfully combined with our KR procedure.[10e] Our method is applicable to a broad range of acyclic and cyclic benzylic alcohols and exhibits good functional-group tolerance. An extension of this approach to allylic[10e,19] and propargylic[10f] alcohols will require further catalyst design and is currently under investigation in our laboratory.

**Materials and Methods of the Examples**

***1. General Information***

*Reagents and solvents*

Standard reagents and solvents were obtained from *ABCR*, *Acros Organics*, *Alfa Aesar*, *Carbolution*, *Merck*, *Sigma-Aldrich,* or *Tokyo Chemical Industry* (*TCI*). $n\mathrm{Bu_3SiH}$ obtained from *TCI*, (*R*,*R*)-Ph-BPE and $RuCl_3{\cdot}xH_2O$ (39-42 wt% Ru) obtained from *ABCR*, and $OsO_4$ (4 wt% in $H_2O$) obtained from *TCI* were used as received. $Ru_3(CO)_{12}$ was obtained from *Carbolution*, stored in a glovebox under an argon atmosphere, and used as received. $Ph_3P$ was obtained from *ABCR*, recrystallized from dried and degassed n-hexane, and dried *in vacuo* prior to use. Diethyl ether, tetrahydrofuran (THF), n-hexane, and toluene were dried over sodium/benzo-phenone and freshly distilled prior to use. Dichloromethane, n-pentane, and triethylamine were dried over $CaH_2$ and freshly distilled prior to use. Methanol and isopropanol were dried over $CaH_2$, distilled, and stored over thermally activated molecular sieves under a nitrogen atmosphere. Acetonitrile and diglyme (99.8%, extra dry, over molecular sieves, AcroSeal®) were purchased from *Acros Organics.* All solvents used for reactions involving transition metals and phosphines were degassed by three freeze-pump-thaw cycles. Brine refers to a saturated solution of NaCl in deionized water.

*Reactions*

All reactions were performed using standard Schlenk techniques or in an *MBraun* glovebox under a static pressure of nitrogen or argon (glovebox). Glassware for reactions outside a glovebox was dried under vacuum using a heat gun. Glassware for reactions performed inside a glovebox was dried overnight at 120 °C, and plastic syringes, needles, and septa were dried overnight at 60 °C before being transferred into the glovebox. Liquids and solutions were transferred with syringes. All reactions were stirred with magnetic followers. All stated temperatures refer to external bath temperatures.

*Chromatography*

**Flash column chromatography** was performed on *Grace* 60 (40-63 μm, 230-400 mesh, ASTM) silica gel according to the method reported by W. C. Still and coworkers.[S1] Technical grade solvents were distilled prior to use.

**Thin-layer chromatography** was performed on *Macherey-Nagel* Alugram® Xtra SIL G/$UV_{254}$ silica gel 60 precoated aluminum-backed plates (200 μm layer thickness). Product spots were visualized under UV light ($\lambda_{max}$ = 254 nm) and/or by staining with a ceric ammonium molybdate solution.

Analytical **gas liquid chromatography** (GLC) was performed on an *Agilent Technologies* 7820A gas chromatograph equipped with an *Agilent Technologies* J&W HP-5 capillary column (30 m × 0.32 mm, 0.25 μm film thickness) by using the following conditions: $N_2$ carrier gas, injection temperature: 250 °C, detector temperature: 300 °C, flow rate: 1.7 mL/min; tempera-ture program: start temperature: 40 °C, heating rate: 10 °C/min, end temperature: 280 °C for 10-30 min.

Analytical **high performance liquid chromatography** (HPLC) was performed on an *Agilent Technologies* 1290 Infinity instrument equipped with a chiral stationary column (*Daicel* Chiralcel® OD-H, *Daicel* Chiralcel® OJ-H, *Daicel* Chiralpak® AD-H, *Daicel* Chiralpak® AS-H,or *Daicel* Chiralpak® ID) using n-heptane/isopropanol mixtures as the mobile phase.

*Spectroscopy*

**Nuclear magnetic resonance** (NMR) spectra were recorded in $CD_2Cl_2$, $CDCl_3$, or $C_6D_6$ on a *Bruker* AV 400, AV 500, or AV 700 with the deuterated solvent acting as an internal deuterium lock. $^{1}H$ NMR spectra were recorded at 400, 500, or 700 MHz. $^{13}C$ NMR spectra were recorded at 100, 126, or 175 MHz, $^{19}F$ spectra at 471 MHz, $^{29}Si$ spectra at 99 MHz, and $^{31}P$ spectra at 203 MHz using broadband proton decoupling when indicated. $^{1}H$ and $^{13}C$ NMR spectra are referenced to the residual protic solvent resonances and the deuterated solvent carbon resonances, respectively ($CDHCl_2$: $\delta$ = 5.32 ppm for $^{1}H$ NMR and $CD_2Cl_2$: $\delta$ = 53.84 ppm for $^{13}C$ NMR, $CHCl_3$: $\delta$ = 7.26 ppm for $^{1}H$ NMR and $CDCl_3$: $\delta$ = 77.16 ppm for $^{13}C$ NMR, $C_6D_5H$: $\delta$ = 7.16 ppm for $^{1}H$ NMR and $C_6D_6$: $\delta$ = 128.06 ppm for $^{13}C$ NMR). Chemical shifts are reported relative to tetramethylsilane to the 0.01 for $^{1}H$ NMR spectra and to the 0.1 ppm for $^{13}C$, $^{19}F$, $^{29}Si$, and $^{31}P$ NMR spectra. Coupling constants are quoted to the nearest 0.1 Hz for $^{1}H$ NMR spectra and to full Hz for $^{13}C$, $^{19}F$, and $^{31}P$ NMR spectra. $^{19}F$, $^{29}Si$, and $^{31}P$ NMR spectra were calibrated according to the IUPAC recommendation, using a unified chemical shift scale based on the proton resonance of tetramethylsilane as the primary reference.[S2] Data are reported as follows: chemical shift, multiplicity (s = singlet, d = doublet, t = triplet, q = quartet, sept = septet, m = multiplet, $m_c$ = centrosymmetric multiplet, br = broad, and combinations thereof), coupling constant(s) (Hz), and integration.

**Infrared** (IR) spectra were recorded from neat samples on an *Agilent Technologies* Cary 630 FTIR spectrometer equipped with a diamond ATR unit. Selected absorption maxima are reported in wavenumbers ($cm^{-1}$).

*Mass Spectrometry*

High resolution mass spectra (HRMS) were recorded on a *Thermo Scientific* LTQ Orbitrap XL by the *Analytical Facility* at the *Institut für Chemie, Technische Universität Berlin* using atmospheric-pressure chemical ionization (APCI), electrospray ionization (ESI) or liquid injection field desorption/ionization (LIFDI) methods. Only the respective molecular ion peak or a characteristic fragment is reported; detailed fragmentation patterns are omitted.

*Optical Rotation*

Optical rotations were measured on a *Schmidt & Haensch* Polartronic H532 polarimeter. $[\alpha]_\lambda^T$ values are reported in $10^{-1}$ (° $cm^2$ $g^{-1}$); with the concentration *c* in g/100mL, the temperature T, and the wavelength $\lambda$ indicated.

*Melting Points*

Melting points (M.p.) were determined on a *Leica* Galen III hot-stage microscope and are uncorrected.

## 2. General Procedures

*2.1 General Procedure for the Reduction of Aromatic and Aliphatic Ketones (GP 1)*

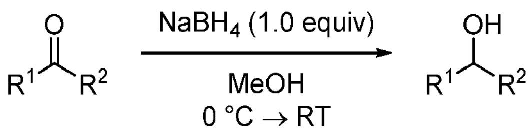


Following a modified literature procedure,[S3] the indicated ketone (1.0 equiv) is dissolved in methanol (1 mL/mmol), and the solution is cooled to 0 °C. $NaBH_4$ (1.0 equiv) is added portionwise, and the reaction mixture is stirred at 0 °C for 10 min and at room temperature for a further 30 min. Water is added, and the aqueous phase is extracted with *tert*-butyl methyl ether (3 ×). The combined organic layers are washed with brine, dried over anhydrous $MgSO_4$, filtered, and concentrated *in vacuo.* The residue is purified by flash column chromatography on silica gel using cyclohexane:*tert*-butyl methyl ether or *n*-pentane:diethyl ether mixtures as the eluent to afford the respective alcohol.

*2.2 General Procedure for the 1,2-Reduction of Enones (GP 2)*

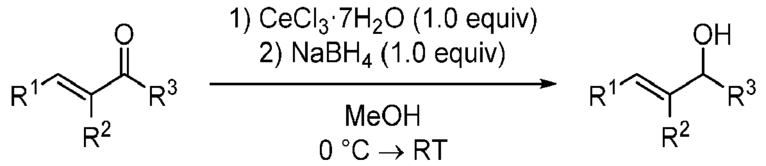


Following a modified literature procedure,[S3] the indicated α,β-unsaturated ketone (1.0 equiv) and $CeCl_3 \cdot 7H_2O$ are dissolved in methanol (10 mL). The solution is cooled to 0 °C, and $NaBH_4$ (1.0 equiv) is added portionwise. The reaction mixture is stirred at 0 °C for 10 min and at room temperature for a further 30 min. Water is added, and the aqueous phase is extracted with *tert*-butyl methyl ether (3 ×). The combined organic layers are washed with brine, dried over anhydrous $MgSO_4$, filtered, and concentrated *in vacuo.* The residue is purified by flash column chromatography on silica gel using cyclohexane:*tert*-butyl methyl ether or *n*-pentane:diethyl ether mixtures as the eluent to afford the respective alcohol.

*2.3 General Procedure for the 1,2-Addition of Grignard Reagents to Aromatic Aldehydes (GP 3)*

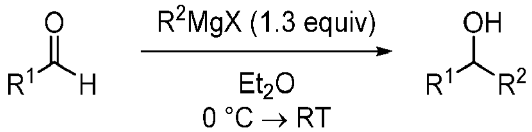


Following a modified literature procedure,[S3] an oven-dried Schlenk tube is charged with the indicated aldehyde (1.0 equiv), and diethyl ether (1 mL/mmol) is added. The solution is cooled to 0 °C before a solution of the indicated Grignard reagent (1.3 equiv) is added dropwise over 5 min. The reaction mixture is stirred at 0 °C for 30 min and subsequently at room temperature over night. Hydrochloric acid (2 m) is added, and the aqueous phase is extracted with *tert*-butyl methyl ether (3 ×). The combined organic layers are washed with brine, dried over anhydrous $MgSO_4$, filtered, and concentrated *in vacuo.* The residue is purified by flash column chromatography on silica gel using cyclohexane:*tert*-butyl methyl ether or *n*-pentane:diethyl ether mixtures as the eluent to afford the respective alcohol.

*2.4 General Procedure for the Racemization of (S)-1-Phenylethanol [(S)-2a] (GP 4)*

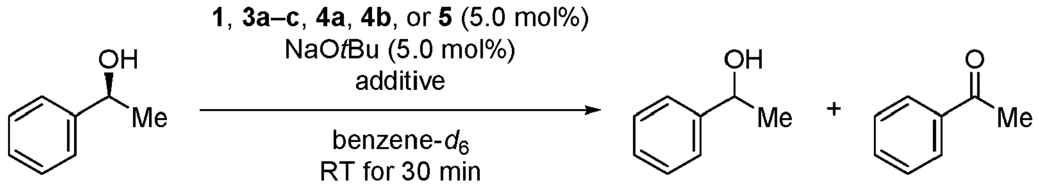


(*S*)-**2a** *rac*-**2a**

In a glovebox, an oven-dried screw top vial is charged with the indicated ruthenium or osmium complex (5 μmol, 5 mol%) and NaO*t*Bu (0.5 mg, 5 μmol, 5 mol%). Benzene-$d_6$ (0.1 mL) is added, and the mixture is stirred at room temperature for 2 min. Then, a solution of (*S*)-1-phenylethanol [(*S*)-**2a**, 12 mg, 0.10 mmol, 1.0 equiv] and the indicated additive in benzene-$d_6$ (0.2 mL) is added, and the parent vial is rinsed with benzene-$d_6$ (2 × 0.1 mL). The resulting reaction mixture is stirred at room temperature for 30 min after which half of the solution is transferred into a J. Young NMR tube, diluted with benzene-$d_6$ (0.3 mL), and directly analyzed by $^1H$ NMR spectroscopy. The remainder is transferred out of the glovebox, water (0.5 mL) is added, and the aqueous phase is extracted with *tert*-butyl methyl ether (3 × 0.5 mL). The combined organic layers are filtered over a plug of silica and directly analyzed by HPLC on a chiral stationary phase.

*2.5 General Procedure to Investigate a Potential Racemization of the Silyl Ether [(S)-6a] (GP 5)*

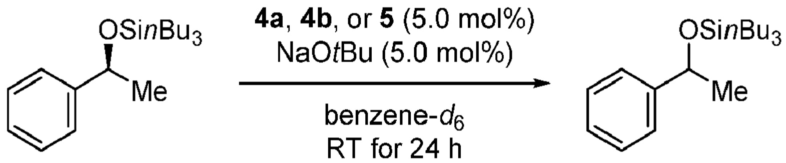


(*S*)-**6a**: 98% ee

*rac*-**6a**

In a glovebox, an oven-dried screw top vial is charged with the indicated ruthenium or osmium complex (10 μmol, 5.0 mol%) and NaO*t*Bu (1.0 mg, 10 μmol, 5.0 mol%). Benzene-$d_6$ (0.2 mL) is added, and the mixture is stirred at room temperature for 2 min. Then, a solution of (*S*)-tributyl(1-phenylethoxy)silane [(*S*)-**6a**, 64 mg, 0.20 mmol, 1.0 equiv] in benzene-$d_6$ (0.4 mL) is added, and the parent vial is rinsed with benzene-$d_6$ (2 × 0.2 mL). The resulting reaction mixture is stirred at room temperature for 24 h and subsequently analyzed by GLC and $^1$H NMR spectroscopy. The reaction vessel is transferred out of the glovebox, and the mixture is filtered over a plug of silica using cyclohexane as the eluent to afford (*S*)-tributyl(1-phenyl-ethoxy)silane (*S*)-**6a** in analytically pure form. The enantiomeric excess of the reisolated silyl ether (*S*)-**6a** was determined by HPLC analysis on a chiral stationary phase after cleavage of the silyl ether according to **GP 8**.

*2.6 General Procedure to Investigate a Potential Racemic Dehydro-genative Coupling Catalyzed by the Racemization Catalysts (GP 6)*

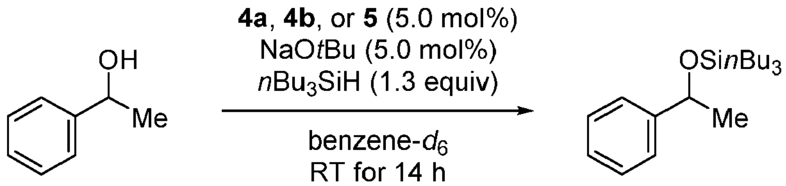


*rac*-**2a**

*rac*-**6a**

In a glovebox, an oven-dried screw top vial is charged with the indicated ruthenium or osmium complex (10 μmol, 5.0 mol%) and NaO*t*Bu (1.0 mg, 10 μmol, 5.0 mol%). Benzene-$d_6$ (0.2 mL) is added, and the mixture is stirred at room temperature for 2 min. Then, a solution of *rac*-1-phenylethanol (*rac*-**2a**, 24 mg, 0.20 mmol, 1.0 equiv), $n$Bu$_3$SiH (52 mg, 0.26 mmol, 1.3 equiv), and a small amount of tetracosane in benzene-$d_6$ (0.4 mL) is added, and the parent vial is rinsed with benzene-$d_6$ (2 × 0.2 mL). The resulting reaction mixture is stirred at room temperature for 14 h and subsequently analyzed by GLC and NMR spectroscopy.

*2.7 General Procedure for the Dynamic Kinetic Resolution of Benzvlic Alcohols (GP 7)*

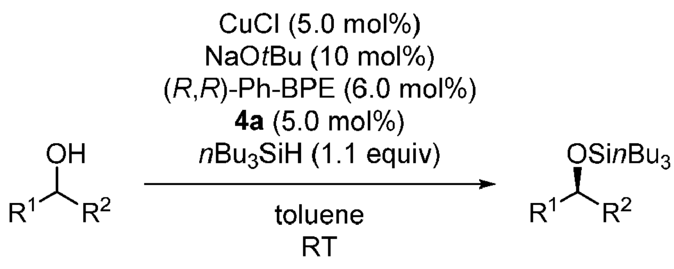


In a glovebox, an oven-dried screw top vial is charged with CuCl (1.0 mg, 10 μmol, 5.0 mol%), NaO*t*Bu (1.0 mg, 10 μmol, 5.0 mol%), and (R,R)-Ph-BPE (6.1 mg, 12 μmol, 6.0 mol%). Toluene (0.1 mL) is added, and the resulting

mixture is stirred at room temperature for 10 min to give a pale yellow solution. In a second oven-dried screw top vial, Ru-CNN complex **4a** (7.6 mg, 10 μmol, 5.0 mol%) and NaO*t*Bu (1.0 mg, 10 μmol, 5.0 mol%) are suspended in toluene (0.1 mL), and the resulting mixture is stirred for 2 min. The dark green suspension is transferred to a mixture of the indicated alcohol (0.2 mmol, 1.0 equiv) and $n$Bu$_3$SiH (44 mg, 0.22 mmol, 1.1 equiv) via pipette, and the parent vial is rinsed with toluene (2 × 0.05 mL). To the resulting red solution is added the copper catalyst solution via pipette, and the parent vial is rinsed with toluene (2 × 0.05 mL). The reaction mixture is stirred at the indicated temperature for the indicated period, and the conversion is monitored by GLC analysis. Upon completion, the reaction vessel is transferred out of the glovebox, and the brown mixture is concentrated *in vacuo.* The residue is purified by flash column chromatography on silica gel using cyclohexane:*tert*-butyl methyl ether or *n*-pentane:diethyl ether mixtures as the eluent to afford the respective silyl ether.

*2.8 General Procedure for the Cleavage of the Silyl Ethers (GP 8)*

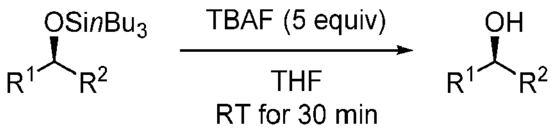


A round-bottom flask is charged with the indicated silyl ether (0.1 mmol, 1 equiv), and tetra-n-butylammonium fluoride (TBAF, 1 m in THF, 0.5 mL, 5 equiv) is added. The resulting mixture is stirred at room temperature for 30 min. Water (4 mL) is added, and the aqueous phase is extracted with *tert*-butyl methyl ether (3 × 10 mL). The combined organic layers are dried over anhydrous $MgSO_4$, filtered, and concentrated *in vacuo.* The residue is purified by flash column chromatography on silica gel using cyclohexane:*tert*-butyl methyl ether or n-pentane:diethyl ether mixtures as the eluent to afford the respective alcohol.

*2.9 General Procedure for the Esterification of Secondary Aliphatic Alcohols (GP 9)*

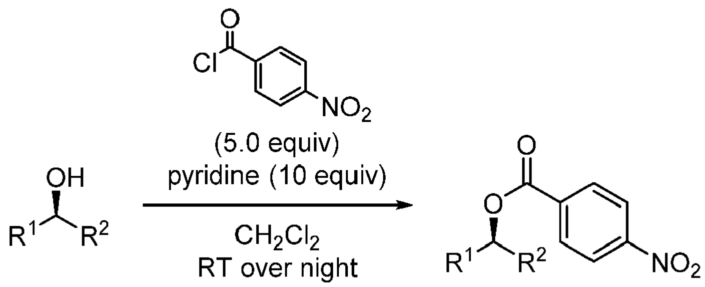


In an oven-dried Schlenk tube, the indicated alcohol (0.10 mmol, 1.0 equiv) is dissolved in dichloromethane (0.5 mL), and the solution is cooled to 0 °C. Pyridine (40 μL, 0.50 mmol, 5.0 equiv) and 4-nitrobenzoyl chloride (46 mg, 0.25 mmol, 2.5 equiv) are added sequentially, and the resulting mixture is stirred at room temperature over night. The suspension is diluted with dichloromethane (2.0 mL), and a small amount of silica gel is added. The solvent is removed *in vacuo*, and the residue is purified by flash column chromatography on silica gel using cyclohexane:*tert*-butyl methyl ether or n-pentane:diethyl ether mixtures as the eluent to afford the respective benzoate.

**3. Preparation of the Substrates**

*3.1 Preparation of Benzvlic and Aliphatic Secondary Alcohols*

Benzylic alcohols were synthesized either by reduction of the corresponding ketones with $NaBH_4$ according to **GP 1** or by 1,2-addition of Grignard reagents to the corresponding alde-hydes according to **GP 3**. Allylic alcohols were synthesized by reduction of the corresponding α,β-unsaturated ketones with $NaBH_4$ in the presence of $CeCl_3$ according to **GP 2**. *tert*-Butyl 4-acetylbenzoate,[S4] *tert*-butyl methyl(3-oxo-3-(thiophen-2-yl)propyl)carbamate,[S5] 3-acetyl-phenyl

ethyl(methyl)carbamate,[S6] *tert*-butyl 4-oxo-3,4-dihydroquinoline-1(2*H*)-carboxylate,[S7] and 2-benzyl-2,3-dihydroisoquinolin-4(1*H*)-one[S8] were synthesized according to literature known procedures. All other ketones and aldehydes were obtained from commercial sources and used as received if not stated otherwise.

*rac*-**2a**: *rac*-1-Phenylethan-1-ol was prepared from acetophenone (5.0 mmol) according to **GP 1**. Yield: 93%. The NMR spectroscopic data are in accordance with those reported in the literature.ls9l

*rac*-**2b**: *rac*-1-(*o*-Tolyl)ethan-1-ol was prepared from 2'-methylacetophenone (5.0 mmol) according to **GP 1**. Yield: 96%. The NMR spectroscopic data are in accordance with those reported in the literature.[S9]

*rac*-**2c**: *rac*-1-(2-Bromophenyl)ethan-1-ol was prepared from 2'-bromoacetophenone (5.0 mmol) according to **GP 1**. Yield: 92%. The NMR spectroscopic data are in accordance with those reported in the literature.[S10]

*rac*-**2d**: *rac*-1-(*m*-Tolyl)ethan-1-ol was prepared from 3'-methylacetophenone (5.0 mmol) according to **GP 1**. Yield: 99%. The NMR spectroscopic data are in accordance with those reported in the literature.[S9]

*rac*-**2e:** *rac*-1-(3-Bromophenyl)ethan-1-ol was prepared from 3'-bromoacetophenone (5.0 mmol) according to **GP 1**. Yield: 88%. The NMR spectroscopic data are in accordance with those reported in the literature.[S9]

*rac*-**2f**: *rac*-1-(*p*-Tolyl)ethan-1-ol was prepared from 4'-methylacetophenone (5.0 mmol) according to **GP 1**. Yield: 99%. The NMR spectroscopic data are in accordance with those reported in the literature.[S9]

*rac*-**2g**: *rac*-1-([1,1'-Biphenyl]-4-yl)ethan-1-ol was prepared from 4-acetylbiphenyl (5.0 mmol) according to **GP 1**. Yield: 98 %. The NMR spectroscopic data are in accordance with those reported in the literature.[S9]

*rac*-**2h**: *rac*-1-(4-Fluorophenyl)ethan-1-ol was prepared from 4'-fluoroacetophenone (5.0 mmol) according to **GP 1**. Yield: 85%. The NMR spectroscopic data are in accordance with those reported in the literature.[S9]

*rac*-**2i**: *rac*-1-(4-Chlorophenyl)ethan-1-ol was prepared from 4'-chloroacetophenone (5.0 mmol) according to **GP 1**. Yield: 99%. The NMR spectroscopic data are in accordance with those reported in the literature.[S9]

*rac*-**2j:** *rac*-1-(4-Bromophenyl)ethan-1-ol was prepared from 4'-bromoacetophenone (5.0 mmol) according to **GP 1**. Yield: 90%. The NMR spectroscopic data are in accordance with those reported in the literature.[S10]

*rac*-**2k**: *rac*-1-(4-(Trifluoromethyl)phenyl)ethan-1-ol was prepared from 4'-(trifluoromethyl)acetophenone (5.0 mmol) according to **GP 1**. Yield: 89%. The NMR spectroscopic data are in accordance with those reported in the literature.[S10]

*rac*-**2l**: *tert*-Butyl *rac*-4-(1-hydroxyethyl)benzoate was prepared from *tert*-butyl 4-acetylbenzoate (2.5 mmol) according to **GP 1**. Yield: 98%. $\mathbf{R_f}$ = 0.10 (cyclohexane:*tert*-butyl methyl ether = 8:1). **$^1$H NMR** (400 MHz, $CDCl_3$): δ/ppm = 1.48 (d, *J* = 6.5 Hz, 3H), 1.58 (s, 9H), 2.13 (br s, 1H), 4.93 (q, *J* = 6.5 Hz, 1H), 7.40 ($m_c$, 2H), 7.94 ($m_c$, 2H). **$^{13}$C{$^1$H} NMR** (100 MHz, $CDCl_3$): δ/ppm = 25.4, 28.3 (3C), 70.1, 81.1, 125.2 (2C), 129.8 (2C), 131.2, 150.6, 165.8. **IR** (ATR): $\tilde{v}$/cm$^{-1}$ = 3421, 2974, 2930, 1709, 1367, 1289, 1160, 1014, 847, 705. **HRMS** (APCI) calculated for $C_{13}H_{19}O_3^+$ [(M+H)$^+$]: 223.1329; found: 223.1329.

*rac*-**2m** *rac*-1-(4-Methoxyphenyl)ethan-1-ol was prepared from 4'-methoxyacetophenone (2.5 mmol) according to **GP 1**. Yield: 98%. The NMR spectroscopic data are in accordance with those reported in the literature.[S9]

*rac*-**2n**: *rac*-1-(3,5-Dimethylphenyl)ethan-1-ol was prepared from 3',5'-dimethylacetophe-none (1.0 mmol) according to **GP 1**. Yield: 92%. The NMR spectroscopic data are in accordance with those reported in the literature.[S11]

*rac*-**2o**: *rac*-1-(3,5-Bis(trifluoromethyl)phenyl)ethan-1-ol was prepared from 3',5'-bis(trifluoromethyl)acetophenone (5.0 mmol) according to **GP 1**. Yield: 83%. The NMR spectroscopic data are in accordance with those reported in the literature.[S9]

*rac*-**2p**: *rac*-1-(3,5-Dimethoxyphenyl)ethan-1-ol was prepared from 3',5'-dimethoxyaceto-phenone (5.0 mmol) according to **GP 1**. Yield: 96%. The NMR spectroscopic data are in accordance with those reported in the literature.[S12]

*rac*-**2q**: *rac*-1-(2,6-Dimethylphenyl)ethan-1-ol was prepared from 2,6-dimethylbenzalde-hyde (10 mmol) and MeMgBr (3.0 m in $Et_2O$) according to **GP 3**. Yield: 90%. The NMR spectroscopic data are in accordance with those reported in the literature.[S13]

*rac*-**2r**: *rac*-1-(Naphthalen-1-yl)ethan-1-ol was prepared from 1-acetonaphthone (10 mmol) according to **GP 1**. Yield: 97%. The NMR spectroscopic data are in accordance with those reported in the literature.[S9]

*rac*-**2s**: *rac*-1-(Naphthalen-2-yl)ethan-1-ol was prepared from 2-acetonaphthone (10 mmol) according to **GP 1**. Yield: 99%. The NMR spectroscopic data are in accordance with those reported in the literature.[S9]

*rac*-**2t**: *rac*-1-(Furan-2-yl)ethan-1-ol was prepared from 2-acetylfuran (10 mmol) according to **GP 1**; purified by bulb-to-bulb distillation. Yield: 45%. The NMR spectroscopic data are in accordance with those reported in the literature.[S9]

*rac*-**2u**: *rac*-1-(Thiophen-2-yl)ethan-1-ol was prepared from 2-acetylthiophene (5.0 mmol) according to **GP 1**. Yield: 90%. The NMR spectroscopic data are in accordance with those reported in the literature.[S9]

*rac*-**2v**: *rac*-1-(Pyridin-4-yl)ethan-1-ol was prepared from 4-acetylpyridine (5.0 mmol) according to **GP 1**. Yield: 80%. The NMR spectroscopic data are in accordance with those reported in the literature.[S14]

*rac*-**2w**:*rac*-1-Phenylpropan-1-ol was prepared from propiophenone (5.0 mmol) according to **GP 1**. Yield: 94%. The NMR spectroscopic data are in accordance with those reported in the literature.[S9]

*rac*-**2x**: *rac*-1,2-Diphenylethan-1-ol was prepared from 2-phenylacetophenone (5.0 mmol) according to **GP 1**. Yield: 95%. The NMR spectroscopic data are in accordance with those reported in the literature.[S15]

*rac*-**2y**: *rac*-2-Methyl-1-phenylpropan-1-ol was prepared from isobutyrophenone (5.0 mmol) according to **GP 1**. Yield:

96%. The NMR spectroscopic data are in accordance with those reported in the literature.[S9]

*rac*-**2z**: *rac*-2-Chloro-1-phenylethan-1-ol was prepared from 2-chloroacetophenone (5.0 mmol) according to **GP 1**. Yield: 92%. The NMR spectroscopic data are in accordance with those reported in the literature.[S12]

*rac*-**7**: *tert*-Butyl *rac*-(3-hydroxy-3-(thiophen-2-yl)propyl)(methyl)carbamate was prepared from *tert*-butyl methyl(3-oxo-3-(thiophen-2-yl)propyl)carbamate (5.0 mmol) according to **GP 1**. Yield: 92%. The NMR spectroscopic data are in accordance with those reported in the literature.[S5]

*rac*-**8**: *rac*-3-(1-Hydroxyethyl)phenyl ethyl(methyl)carbamate was prepared from 3-acetylphenyl ethyl(methyl)carbamate (5.0 mmol) according to **GP 1**. Yield: 98%. The NMR spectroscopic data are in accordance with those reported in the literature.[S9]

*rac*-**S1**: *rac*-1-Cyclohexylethan-1-ol was prepared from 1-cyclohexylethan-1-one (5.0 mmol) according to **GP 1**. Yield: 88%. The NMR spectroscopic data are in accordance with those reported in the literature.[S9]

*rac*-**S2**: *rac*-1-Cyclopentylethan-1-ol was prepared from 1-cyclopentylethan-1-one (2.5 mmol) according to **GP 1**. Yield: 56%. The NMR spectroscopic data are in accordance with those reported in the literature.[S16]

*rac*-**S3**: *rac*-1-Cyclohexylpropan-1-ol was prepared from 1-cyclohexylpropan-1-one (2.5 mmol) according to **GP 1**. Yield: 75%. The NMR spectroscopic data are in accordance with those reported in the literature.[S17]

*rac*-**12a**: *rac*-Indan-1-ol was prepared from indan-1-one (5.0 mmol) according to **GP 1**. Yield: 90%. The NMR spectroscopic data are in accordance with those reported in the literature.[S9]

*rac*-**12b**: *rac*-Tetral-1-ol was prepared from freshly distilled tetral-1-one (10 mmol) according to **GP 1**. Yield: 96%. The NMR spectroscopic data are in accordance with those reported in the literature.[S9]

*rac*-**12c**: *rac*-Benzosuber-1-ol was prepared from benzosuber-1-one (5.0 mmol) according to **GP 1**. Yield: 93%. The NMR spectroscopic data are in accordance with those reported in the literature.[S9]

*rac*-**12d**: *rac*-Chroman-4-ol was prepared from chroman-4-one (5.0 mmol) according to **GP 1**. Yield: 91%. The NMR spectroscopic data are in accordance with those reported in the literature.[S9]

*rac*-**12e**: *rac*-6-Bromo-8-chlorochroman-4-ol was prepared according to the route depicted in Scheme S1 (*vide infra*) starting from 4-bromo-2-chlorophenol and 3-chloropro-pan-1-ol. For experimental details and analytical data, see chapter 3.2.4.

*rac*-**12f**: *rac*-8-Chloro-6-(1,3-dioxolan-2-yl)chroman-4-ol was prepared according to the route depicted in Scheme S1 (*vide infra*) starting from 4-bromo-2-chlorophenol and 3-chloropropan-1-ol. For experimental details and analytical data, see chapter 3.2.7.

*rac*-**12g**: *rac*-Thiochroman-4-ol was prepared from thiochroman-4-one (5.0 mmol) according to **GP 1**. Yield: 84%. The NMR spectroscopic data are in accordance with those reported in the literature.[S9]

*rac*-**12h**: *tert*-Butyl *rac*-4-hydroxy-3,4-dihydroquinoline-1(2*H*)-carboxylate was prepared from *tert*-butyl 4-oxo-3,4-dihydroquinoline-1(2*H*)-carboxylate (5.0 mmol) according to **GP 1**. Yield: 97%. The NMR spectroscopic data are in accordance with those reported in the literature.[S3]

*rac*-**S4**: An oven-dried screw top vial was charged with 2,3-dihydroisoquinolin-4(1*H*)-one hydrochloride (603 mg, 2.20 mmol, 1.00 equiv) and Pd/C (10 wt%, 47 mg, 44 μmol, 2.0 mol%). The vial was sealed with a septum, evacuated and backfilled with nitrogen three times, and methanol (11 mL) was added. The vial was then placed in an autoclave, and the septum was pierced with a syringe needle under nitrogen counterflow. The autoclave was purged with nitrogen (3 × 10 bar) and hydrogen (3 × 5 bar). The reaction mixture was stirred under a hydrogen atmosphere (5 bar) at room temperature for 19 h. Filtration of the crude mixture over a plug of Celite® using methanol as the eluent and subsequent evaporation of the solvent *in vacuo* afforded 1,2,3,4-tetrahydroisoquinolin-4-ol hydrochloride and 1,2,3,4-tetrahydroisoquinoline hydrochloride as a 4:1 mixture (398 mg).

The crude product was suspended in dry dichloromethane (20 mL) under a nitrogen atmosphere. Then, triethylamine (0.58 mL, 4.2 mmol, 2.1 equiv) and di-*tert*-butyl dicarbonate (0.48 g, 2.2 mmol, 1.1 equiv) were added, and the resulting mixture was stirred at room temperature for 20 h. Dichloromethane was removed *in vacuo,* and the residue was redissolved in *tert*-butyl methyl ether (50 mL). The organic layer was washed with saturated aqueous $NaHCO_3$ solution (20 mL) and brine (20 mL), dried over $Na_2SO_4$, filtered, and concentrated *in vacuo.* The residue was purified by flash column chromatography on silica gel using cyclohexane:*tert*-butyl methyl ether (4:1 → 2:1 → 1:1) as the eluent to afford *tert*-butyl *rac*-4-hydroxy-3,4-dihydroisoquinoline-2(1*H*)-carboxylate *rac*-**S4** (0.38 g, 1.5 mmol, 69% over two steps). The NMR spectroscopic data are in accordance with those reported in the literature.[S18]

*rac*-**S5**: *rac*-(*E*)-4-Phenylbut-3-en-2-ol was prepared from (*E*)-4-phenylbut-3-en-2-one (10 mmol) according to **GP 2**. Yield: 92%. The NMR spectroscopic data are in accordance with those reported in the literature.[S19]

*3.2 Preparation of Functionalized Chroman-4-ols rac-12e and rac-12f.*

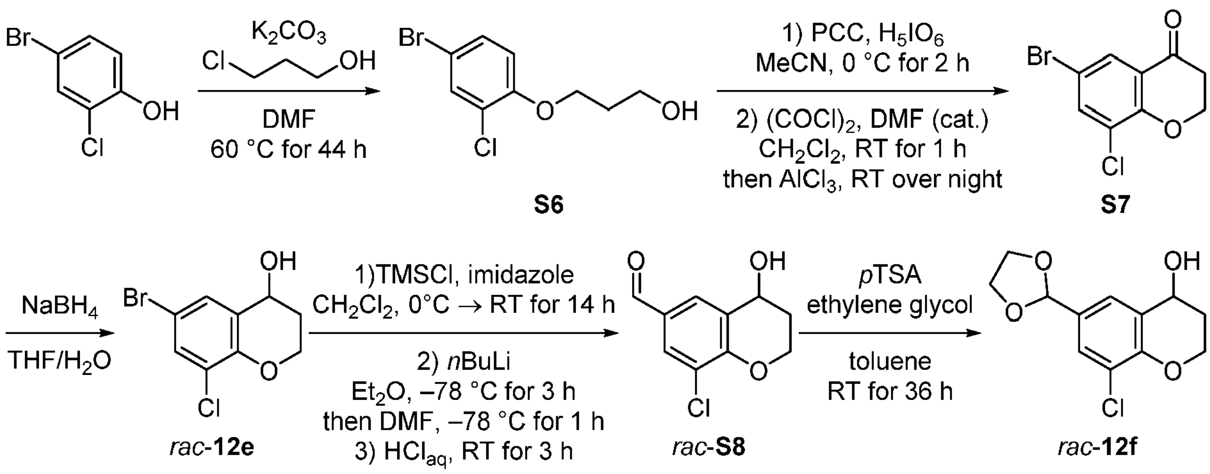


**Scheme S1**. Preparation of functionalized chroman-4-ols *rac*-**12e** and *rac*-**12f**. DMF = *N,N*-dimethylformamide, PCC = pyridinium chlorochromate, TMSCl = trimethylsilyl chlorid, *p*TSA = *p*-toluenesulfonic acid.

*3.2.1 3-(4-Bromo-2-chlorophenoxy)propan-1-0l (S6)*

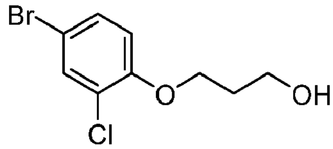

**S6**
$C_9H_{10}BrClO_2$
M = 265.53 g/mol

4-Bromo-2-chlorophenol (10.4 g, 50.0 mmol, 1.00 equiv) and $K_2CO_3$ (11.7 g, 85.0 mmol, 1.70 equiv) were suspended in dry DMF (25 mL) under a nitrogen atmosphere. 3-Chloropropan-1-ol (6.3 mL, 75 mmol, 1.5 equiv) were added and the reaction mixture was stirred at 60 °C for 40 h. After cooling to room temperature, hydrochloric acid (1 m, 200 mL) was added, and the aqueous phase was extracted with *tert*-butyl methyl ether (4 × 175 mL). The combined organic layers were washed with brine (3 × 80 mL), dried over $MgSO_4$, filtered, and concentrated. The solid residue was purified by flash column chromatography using cyclohexane:*tert*-butyl methyl ether (4:1 → 1:1) as the eluent to afford 3-(4-bromo-2-chlorophenoxy)propan-1-ol (**S6**, 12.8 g, 48.2 mmol, 96%) as an off-white solid.

$\mathbf{R_f}$ = 0.26 (cyclohexane:*tert*-butyl methyl ether = 1:1). M.p.: 53-55 °C (cyclohexane). **$^1$H NMR** (400 MHz, $CDCl_3$): δ/ppm = 2.00 (s, 1H), 2.09 (tt, *J* = 5.8 Hz, *J* = 5.8 Hz, 2H), 3.89 (t, *J* = 5.7 Hz, 2H), 4.16 (t, *J* = 5.9 Hz, 2H), 6.81 (d, *J* = 8.8 Hz, 1H), 7.31 (dd, *J* = 8.8 Hz, *J* = 2.4 Hz, 1H), 7.49 (d, *J* = 2.4 Hz, 1H). **$^{13}$C{$^1$H} NMR** (100 MHz, $CDCl_3$): δ/ppm = 31.8, 60.6, 67.6, 112.9, 114.4, 124.0, 130.7, 132.7, 153.7. **IR** (ATR): $\tilde{\nu}$/cm$^{-1}$ = 3346, 2938, 2883, 1465, 1382, 1287, 1051, 953, 801, 721. **HRMS** (APCI) calculated for $C_9H_{11}BrClO_2^+$ [(M+H)$^+$]: 264.9625; found: 264.9628.

*3.2.2 3-(4-Bromo-2-chlorophenoxy)propanoic acid (S9)*

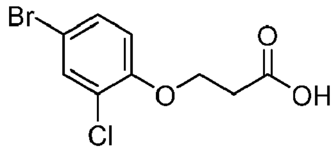

**S9**
$C_9H_8BrClO_3$
M = 279.51 g/mol

In accordance with a literature procedure,[S20] $H_5IO_6$ (23.3 g, 102 mmol, 2.2 equiv) was suspended in acetonitrile (380 mL) under a nitrogen atmosphere. The resulting mixture was stirred at room temperature for 20 min and subsequently cooled to 0 °C. 3-(4-Bromo-2-chlorophen-oxy)-propan-1-ol (**S6**, 12.3 g, 46.5 mmol, 1.00 equiv) was added, followed by a solution of pyridinium chlorochromate (201 mg, 0.932 mmol, 2.00 mol%) in acetonitrile (5 mL + 2 × 2.5 mL rinse), and the reaction mixture was stirred at 0 °C for 3 h. Excess oxidants were quenched by the slow addition of $Na_2SO_3$-solution (200 mL) at 0 °C. The resulting mixture was stirred for 15 min and subsequently extracted with ethyl acetate (3 × 200 mL). The combined organic layers were washed with saturated aqueous $Na_2CO_3$-solution (150 mL) and brine (150 mL), dried over $MgSO_4$, filtered, and concentrated. 3-(4-Bromo-2-chlorophenoxy)propanoic acid (S9, 12.2 g, 43.7 mmol, 94%) was obtained as a pale yellow solid and used without any further purification.

M.p.: 97-99 °C (ethyl acetate). **$^1$H NMR** (500 MHz, $CDCl_3$): δ/ppm = 2.91 (t, *J* = 6.3 Hz, 2H), 4.28 (t, *J* = 6.3 Hz, 2H), 6.83 (d, *J* = 8.8 Hz, 1H), 7.32 (dd, *J* = 8.8 Hz, *J* = 2.4 Hz, 1H), 7.49 (d, *J* = 2.4 Hz, 1H), 9.32 (br s, 1H). **$^{13}$C{$^1$H} NMR** (100 MHz, $CDCl_3$): δ/ppm = 34.3, 64.8, 113.5, 115.3, 124.6, 130.7, 133.0, 153.5, 176.7. **IR** (ATR): $\tilde{\nu}$/cm$^{-1}$ = 2901, 2635, 2538, 1698, 1439, 1285, 1061, 941, 795, 674. **HRMS** (APCI) calculated for $C_9H_9BrClO_3^+$ [$(M+H)^+$]: 278.9418; found: 278.9417.

*3.2.3 6-Bromo-8-chlorochroman-4-one (S7)*

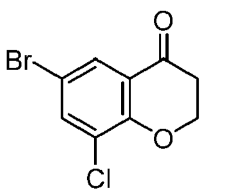

**S7**
$C_9H_6BrClO_2$
M = 261.50 g/mol

In accordance with a literature procedure,[S21] to a solution of 3-(4-bromo-2-chlorophenoxy)-propanoic acid (**S9**, 11.9 g, 42.5 mmol, 1.00 equiv) in dry dichloromethane under a nitrogen atmosphere was added dry DMF (0.50 mL, 6.5 mmol, 0.15 equiv). Then, oxalyl chloride (5.5 mL, 64 mmol, 1.5 equiv) was added in five portions over 20 min at room temperature, and the reaction mixture was stirred for a further hour. After cooling to 0 °C, $AlCl_3$ (8.5 g, 64 mmol, 1.5 equiv) was added in multiple portions, and the reaction mixture was allowed to warm to room temperature and was stirred over night. The reaction was quenched by the slow addition of aqueous NaOH-solution (2 m, 150 mL) at 0 °C. The phases were separated and the aqueous phase was extracted with ethyl acetate (3 × 150 mL). The combined organic layers were washed with brine (2 × 100 mL), dried over $MgSO_4$, filtered, and concentrated. The solid residue was purified by flash column chromatography using cyclohexane:ethyl acetate (30:1 → 8:1) as the eluent to afford 6-bromo-8-chlorochroman-4-one (**S7**, 10.6 g, 40.5 mmol, 95%) as an off-white solid.

**$R_f$** = 0.40 (cyclohexane:*tert*-butyl methyl ether = 4:1). M.p.: 95-97 °C (cyclohexane). **$^1$H NMR** (400 MHz, $CDCl_3$): δ/ppm = 2.85 ($m_c$, 2H), 4.65 ($m_c$, 2H), 7.67 (d, *J* = 2.4 Hz, 1H), 7.92 (d, *J* = 2.4 Hz, 1H). **$^{13}$C{$^1$H} NMR** (100 MHz, $CDCl_3$): δ/ppm = 37.2, 67.8, 113.5, 123.4, 124.2, 128.5, 138.3, 156.6, 189.7. **IR** (ATR): $\tilde{\nu}$/cm$^{-1}$ = 3056, 1685, 1581, 1477, 1438, 1250, 1173, 1025, 875, 748. **HRMS** (APCI) calculated for $C_9H_6BrClO_2$+ [$M^+$]: 259.9234; found: 259.9232.

*3.2.4 rac-6-Bromo-8-chlorochroman-4-ol(rac-12e)*

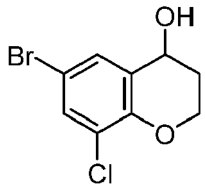

*rac*-**12e**
$C_9H_8BrClO_2$
M = 263.52 g/mol

In accordance with a literature procedure,[S22] 6-bromo-8-chlorochroman-4-one (S7, 3.14 g, 12.0 mmol, 1.00 equiv) was dissolved in THF (36 mL). Water (1.2 mL) and $NaBH_4$ (0.90 g, 24 mmol, 2.0 equiv) were added sequentially at room temperature, and the reaction mixture was stirred for 1 h. Water (36 mL) was added, the phases were separated and the aqueous phase was extracted with *tert*-butyl methyl ether (3 × 75 mL). The combined organic layers were washed with brine (50 mL), dried over $MgSO_4$, filtered, and concentrated. The solid residue was purified by flash column chromatography using cyclohexane:*tert*-butyl methyl ether (4:1 → 1:1) as the eluent to afford *rac*-6-bromo-8-chlorochroman-4-ol (*rac*-**12e**, 2.99 g, 11.4 mmol, 95%) as a white solid.

$\mathbf{R_f}$ = 0.42 (cyclohexane:*tert*-butyl methyl ether = 1:1). M.p.: 97-99 °C (cyclohexane). **$^1$H NMR** (400 MHz, $CDCl_3$): δ/ppm = 1.99-2.17 (m, 2H), 2.01 (br s, 1H), 4.31-4.43 (m, 2H), 4.76 (dd, *J* = 4.3 Hz, *J* = 4.3 Hz, 1H), 7.36 (dd, *J* = 2.5 Hz, *J* = 0.6 Hz, 1H), 7.42 (d, *J* = 2.5 Hz, 1H). **$^{13}$C{$^1$H} NMR** (126 MHz, $CDCl_3$): δ/ppm = 30.5, 63.1, 63.2, 111.9, 122.9, 127.4, 130.8, 132.6, 149.8, 189.7. **IR** (ATR): $\tilde{\nu}$/cm$^{-1}$ = 3339, 2879, 1469, 1441, 1304, 1237, 1169, 1050, 866, 686.. **HRMS** (APCI) calculated for $C_9H_7BrClO_2^+$ [(M-H)$^+$]: 260.9312; found: 260.9311.

*3.2.5 rac-((6-Bromo-8-chlorochroman-4-yl)oxy)trimethylsilane (rac-S10)*

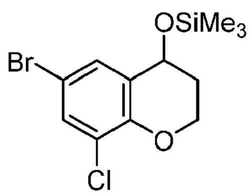

*rac*-**S10**
$C_{12}H_{16}BrClO_2Si$
M = 335.70 g/mol

*rac*-6-Bromo-8-chlorochroman-4-ol (*rac*-**12e**, 2.64 g, 10.0 mmol, 1.00 equiv) and imidazole (987 mg, 14.5 mmol, 1.45 equiv) were dissolved in dry dichloromethane (12 mL) under a nitrogen atmosphere. The solution was cooled to 0 °C, trimethylsilyl chloride (1.4 mL, 11 mmol, 1.1 equiv) was added dropwise over 2 min, and the reaction mixture was stirred at room temperature for 14 h. To the resulting colorless suspen-sion was added a small amount of silica gel and the solvent was removed *in vacuo.* Purification by flash column chromatography using cyclohexane:*tert*-butyl methyl ether (50:1 → 25:1) as the eluent afforded rac-((6-bromo-8-chlorochroman-4-yl)oxy)trimethylsilane (*rac*-**S10**, 3.18 g, 9.47 mmol, 95%) as a colorless oil.

$\mathbf{R_f}$ = 0.11 (cyclohexane). M.p.: 50-51 °C (cyclohexane). **$^1$H** NMR (500 MHz, $C_6D_6$): δ/ppm = -0.01 (s, 9H), 1.34-1.44 (m, 2H), 3.71-3.77 (m, 1H), 4.00 ($m_c$, 1H), 4.19 (dd, *J* = 4.6 Hz, *J* = 4.6 Hz, 1H), 7.24 (dd, *J* = 2.4 Hz, *J* = 0.6 Hz, 1H), 7.31 (d, *J* = 2.4 Hz, 1H). **$^{13}$C{$^1$H}** NMR (126 MHz, $C_6D_6$): δ/ppm = 0.3, 31.1, 63.0, 63.8, 111.6, 123.3, 128.4, 130.9, 132.3, 150.1. **29Si{$^1$H} DEPT NMR** (99 MHz, C6D6): δ/ppm = 16.8. **IR** (ATR): $\tilde{\nu}$/cm$^{-1}$ = 3345, 2958, 2889, 1471, 1443, 1249, 1055, 1013, 928, 837. **HRMS** (APCI) calculated for $C_{12}H$,rBrClO$_2$Si$^+$ [M$^+$]: 333.9786; found: 333.9789.

*3.2.6 rac-8-Chloro-4-hydroxychromane-6-carbaldehyde (rac-S8)*

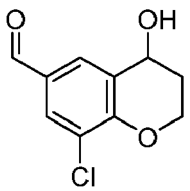

*rac*-**S8**
$C_{10}H_9ClO_3$
M = 212.63 g/mol

A dry Schlenk tube was charged with rac-((6-bromo-8-chlorochroman-4-yl)oxy)trimethylsilane (*rac*-**S10**, 1.68 g, 5.00 mmol, 1.00 equiv) and evacuated and backfilled with nitrogen thrice. Diethylether (30 mL) was added, and the solution was cooled to -78 °C. *n*-Butyllithium (2.7 m in hexanes, 2.3 mL, 6.3 mmol, 1.3 equiv) was added dropwise over 5 min, and the resulting mixture was stirred at -78 °C for 3 h. Then, DMF (0.58 mL, 7.5 mmol, 1.5 equiv) was added, and the reaction mixture was stirred at -78 °C for a further hour. The dry-ice bath was removed, hydrochloric acid (2 m, 30 mL) was added, and the mixture was stirred vigorously at room temperature for 3 h. The phases were separated, and the aqueous phase was extracted with *tert*-butyl methyl ether (3 × 50 mL). The combined organic layers were dried over $MgSO_4$, filtered and concentrated. The solid residue was purified by flash column chromatography using cyclohexane:*tert*-butyl methyl ether (2:1 → 1:2) as the eluent to afford *rac*-8-chloro-4-hydroxychromane-6-carbaldehyde (*rac*-**S8**, 993 mg, 4.72 mmol, 94%) as a colorless solid.

$\mathbf{R_f}$ = 0.14 (cyclohexane:*tert*-butyl methyl ether = 1:1). **$^1$H NMR** (400 MHz, $CDCl_3$): δ/ppm = 2.06-2.22 (m, 2H), 2.64 (br s, 1H), 4.44-4.52 (m, 2H), 4.88 (dd, *J* = 4.3 Hz, *J* = 4.3 Hz, 1H), 7.77 (dd, *J* = 2.0 Hz, *J* = 0.5 Hz, 1H), 7.79 (d, *J* = 2.0 Hz, 1H), 9.77 (s, 1H). **$^{13}$C{$^1$H} NMR** (100 MHz, $CDCl_3$): δ/ppm = 30.2, 63.0, 63.9, 123.1, 126.4, 129.6, 130.4, 131.3, 155.7, 190.0. **IR** (ATR): $\tilde{\nu}/cm^{-1}$ = 3466, 2888, 1675, 1593, 1485, 1258, 1131, 1058, 888, 756. **HRMS** (APCI) calculated for $C_{10}H_{10}ClO_3^+$ [$(M+H)^+$]: 213.0313; found: 213.0313.

*3.2.7 rac-8-Chloro-6-(1,3-dioxolan-2-yl)chroman-4-ol (rac-12f)*

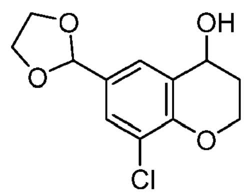

*rac*-**12f**
$C_{12}H_{13}ClO_4$
M = 256.68 g/mol

To a suspension of *rac*-8-chloro-4-hydroxychromane-6-carbaldehyde (*rac*-**S8**, 720 mg, 3.42 mmol, 1.00 equiv) and molecular sieves (4Å, 3.4 g) in dry toluene under a nitrogen atmosphere were added ethylene glycol (0.42 mL, 7.5 mmol, 2.2 equiv) and *p*-toluenesulfonic acid (65 mg, 0.34 mmol, 10 mol%). The reaction mixture was stirred vigorously at room temperature for 36 h, but not reaching complete conversion of ***rac*-12f.** The resulting brown slurry was filtered over a pad of Celite® using ethyl acetate as the eluent and concentrated *in vacuo* to afford a chromatographically inseparable mixture of *rac*-8-chloro-6-(1,3-dioxolan-2-yl)chroman-4-ol (*rac*-**12f**) and *rac*-8-chloro-4-hydroxychromane-6-carbaldehyde (*rac*-**S8**) as a colorless oil (820 mg). The mixture was redissolved in THF (10 mL), water (0.3 mL) and $NaBH_4$ (0.26 g, 6.8 mmol, 2.0 equiv) were added at room temperature, and the reaction mixture was stirred for 1 h. Water (10 mL) was added, the phases were separated, and the aqueous phase was extracted with *tert*-butyl methyl ether (3 × 25 mL). The combined organic layers were washed with saturated aqueous $Na_2CO_3$-solution (15 mL), dried

over $MgSO_4$, filtered, and concentrated. The solid residue was purified by flash column chromatography using cyclohexane:ethyl acetate (1:1 → 4:1) as the eluent to afford *rac*-8-chloro-6-(1,3-dioxolan-2-yl)chroman-4-ol (*rac*-**12f**, 535 mg, 2.08 mmol, 61%) as a colorless oil.

$R_f$ = 0.14 (cyclohexane:*tert*-butyl methyl ether = 1:1). **$^1$H NMR** (400 MHz, $C_6D_6$): δ/ppm = 1.38-1.48 (m, 2H), 2.23 (br d, $J$ = 5.0 Hz, 1H), 3.38-3.47 (m, 2H), 3.51-3.61 (m, 2H), 3.78-3.84 (m, 1H), 3.91-3.99 (m, 1H), 4.23 (br $m_c$, 1H), 5.53 (s, 1H), 7.29 (d, $J$ = 2.0 Hz, 1H), 7.59 (d, $J$ = 2.0 Hz, 1H). **$^{13}$C{$^1$H} NMR** (100 MHz, $C_6D_6$): δ/ppm = 30.5, 62.9, 63.0, 65.1, 65.2, 103.3, 122.0, 126.5, 127.1, 128.6, 131.1, 151.5. **IR** (ATR): $\tilde{v}$/cm$^{-1}$ = 3393, 2956, 2884, 1482, 1373, 1248, 1137, 1057, 874, 752. **HRMS** (APCI) calculated for $C_{12}H_{14}ClO_4^+$ [(M+H)$^+$]: 257.0575; found: 257.0572.

## 4. Preparation of the Racemization Precatalysts

### *4.1 Preparation of Ruthenium(II) Half Sandwich Complexes 1 and 3a-c*

1,2,3,4,5-Pentaphenyl-1,3-cyclopentadiene,[S23] trimethylamine-*N*-oxide,[S24] dicarbonyl(chloro)(η$^5$-pentaphenylcyclopentadienyl)ruthenium(II) (**1**),[S23] and carbonyl(chloro)(η$^5$-pentaphenylcyclopentadienyl)(triphenylphosphine)ruthenium(II) (**3a**)[S25] were synthesized according to literature procedures (Scheme S2).

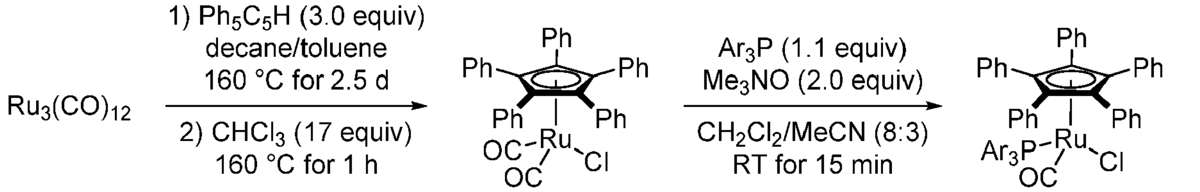


**1**

**3a** (Ar = Ph)
**3b** (Ar = 4-$FC_6H_4$)
**3c** (Ar = 4-$MeOC_6H_4$)

### *4.1.1 Carbonyl(chloro) (η$^5$-pentaphenylcyclopentadienyl)(triohenylphosphine)-ruthenium(II) (*3a*)*

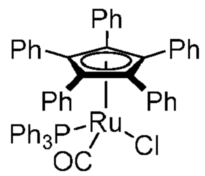

**3a**
$C_{54}H_{40}ClOPRu$
M = 872.41 g/mol

In accordance with a literature procedure,[S25] a Schlenk flask was charged with complex 1 (150 mg, 235 μmol, 1.00 equiv) and $Ph_3P$ (68 mg, 0.26 mmol, 1.1 equiv). The apparatus was evacuated and backfilled with nitrogen three times before dichloromethane (4 mL) was added. Then, a solution of trimethylamine-*N*-oxide (35 mg, 0.47 mmol, 2.0 equiv) in acetonitrile (1.5 mL) was added, and the resulting deep orange solution was stirred at room temperature for 15 min. The solvents were evaporated *in vacuo,* and the solid residue was purified by flash column chromatography using n-pentane:dichloromethane (1:1 → 1:2) as the eluent to afford complex **3a** (184 mg, 211 μmol, 90%) as an orange solid.

$R_f$ = 0.50 (cyclohexane:dichloromethane = 2:3). **$^1$H NMR** (400 MHz, $CDCl_3$): δ/ppm = 6.75-6.82 (m, 10H), 6.89 ($m_c$, 10H), 7.09 ($m_c$, 5H), 7.13 ($m_c$, 6H), 7.31 ($m_c$, 3H), 7.45 (br dd, $J_{H,H}$ ≈ 9.2 Hz, $J_{H,P}$ ≈ 9.2 Hz, 6H). **$^{13}$C{$^1$H}** NMR (100 MHz, $CDCl_3$): δ/ppm = 103.4 (5C), 127.3 (10C), 127.4 (5C), 128.1 (d, $J_{C,P}$ = 9.9 Hz, 6C), 130.1 (d, $J_{C,P}$ = 2.2 Hz, 3C), 131.7 (5C), 132.5 (10C), 134.6 (d, $J_{C,P}$ = 9.6 Hz, 6C), 206.4 (d, $J_{C,P}$ = 26 Hz). **$^1$H/13C HMBC NMR** (500/126 MHz, $CDCl_3$): δ/ppm = 7.13/134.4 (3C). **$^{31}$P{$^1$H} NMR** (202 MHz, $CDCl_3$): δ/ppm = 39.0. **HRMS** (ESI) calculated for $C_{56}H_{43}NOPRu^+$ [(M-Cl+$CH_3CN$)$^+$]: 878.2120; found: 878.2101.

The spectroscopic data are in accordance with those reported in the literature.[S25]

*4.1.2 Carbonyl(chloro)(tris(4-fluorophenyl)phosohine-κP)(η5-pentaphenylcyclopenytadienyl)ruthenium(II) (3b)*

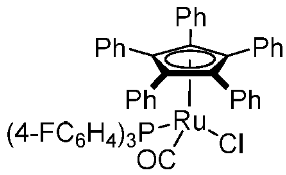

**3b**
$C_{54}H_{37}ClF_3OPRu$
M = 926.38 g/mol

According to a literature procedure,[S25] a Schlenk flask was charged with complex **1** (80 mg, 0.13 mmol, 1.0 equiv) and $(4\text{-}FC_6H_4)_3P$ (44 mg, 0.14 mmol, 1.1 equiv). The apparatus was evacuated and backfilled with nitrogen three times before dichloromethane (2 mL) was added. Then, a solution of trimethylamine-*N*-oxide (19 mg, 0.25 mmol, 2.0 equiv) in acetonitrile (0.8 mL) was added, and the resulting deep orange solution was stirred at room temperature for 2 h. The solvents were evaporated *in vacuo,* and the solid residue was purified by flash column chromatography using cyclohexane:dichloromethane (1:1) as the eluent to afford complex **3b** (81 mg, 87 μmol, 70%) as an orange solid.

$\mathbf{R_f}$ = 0.58 (cyclohexane:dichloromethane = 2:3). **$^1$H NMR** (400 MHz, $CDCl_3$): δ/ppm = 6.79 (d, $J_{H,H}$ = 7.5 Hz, 10H), 6.85 (dd, $J_{H,H}$ = 8.6 Hz, $J_{H,P}$ = 8.6 Hz, 6H), 6.92 (dd, $J_{H,H}$ = 7.8 Hz, $J_{H,H}$ = 7.8 Hz, 10H), 7.12 (t, $J_{H,H}$ = 7.4 Hz, 5H), 7.40 ($m_c$, 6H). **$^{13}$C{$^1$H} NMR** (100 MHz, $CDCl_3$): δ/ppm = 103.5 (5C), 115.5 (dd, $J_{C,F}$= 21 Hz, $J_{C,P}$ = 11 Hz, 6C), 127.4 (10C), 127.7 (5C), 129.9 (dd, $J_{C,P}$ = 48 Hz, $J_{C,F}$ = 3 Hz, 3C), 131.4 (5C), 132.4 (10C), 136.7 (dd, $J_{C,P}$ = 11 Hz, $J_{C,F}$ = 9 Hz, 6C), 164.1 (dd, $J_{C,F}$ = 253 Hz, $J_{C,P}$ = 2 Hz, 3C), 206.1 (d, $J_{C,P}$ = 26 Hz). **$^{19}$F NMR** (471 MHz, $CDCl_3$) δ/ppm = -109.6. **$^{31}$P{$^1$H} NMR** (202 MHz, $CDCl_3$): δ/ppm = 37.6. **IR** (ATR): $\tilde{v}/cm^{-1}$ = 1921 (CO), 1587, 1493, 1233, 1159, 1088, 824, 737, 696 **HRMS** (ESI) calculated for $C_{56}H_{40}F_3NOPRu^+$ $[(M\text{-}Cl+CH_3CN)^+]$: 932.1838; found: 932.1819.

*4.1.3 Carbonyl(chloro)(tris(4-methoxyphenyl)phosphine-κP)(η5-pentaphenylcyclopentadienyl)ruthenium(II) (3c)*

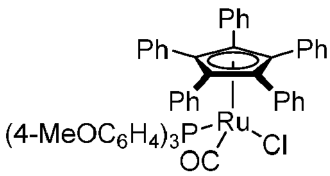

**3c**
$C_{57}H_{46}ClO_4PRu$
M = 962.48 g/mol

According to a literature procedure,[S25] a Schlenk flask was charged with complex **1** (80 mg, 0.13 mmol, 1.0 equiv) and $(4\text{-}MeOC_6H_4)_3P$ (49 mg, 0.14 mmol, 1.1 equiv). The apparatus was evacuated and backfilled with nitrogen three times before dichloromethane (2 mL) was added. Then, a solution of trimethylamine-*N*-oxide (19 mg, 0.25 mmol, 2.0 equiv) in acetonitrile (0.8 mL) was added, and the resulting deep orange solution was stirred at room temperature for 2 h. The solvents were evaporated *in vacuo,* and the solid residue was purified by flash column chromatography using cyclohexane:dichloromethane (1:4) as the eluent to afford complex **3c** (116 mg, 120 μmol, 96%) as an orange solid.

$\mathbf{R_f}$ = 0.23 (cyclohexane:dichloromethane = 2:3). **$^1$H NMR** (400 MHz, $CDCl_3$): δ/ppm = 3.76 (s, 9H), 6.65 (dd, $J_{H,H}$ = 8.7 Hz, $J_{H,H}$ = 1.5 Hz, 6H), 6.77-6.82 (m, 10H), 6.90 ($m_c$, 10H), 7.09 ($m_c$, 5H), 7.36 (br dd, $J_{H,H}$ ≈ 9.2 Hz, $J_{H,P}$ ≈ 9.2 Hz, 6H). **$^{13}$C{$^1$H} NMR** (100 MHz, $CDCl_3$): δ/ppm = 55.3 (3C), 103.4 (5C), 113.5 (d, $J_{C,P}$ = 11 Hz, 6C), 126.1 (d, $J_{C,P}$ = 52 Hz, 3C), 127.2 (10C), 127.3 (5C), 131.8 (5C), 132.5 (10C), 136.1 (d, $J_{C,P}$ = 11 Hz, 6C), 160.9 (d, $J_{C,P}$ = 2 Hz, 3C), 206.6 (d, $J_{C,P}$ = 26 Hz). **$^{31}$P{$^1$H} NMR** (202 MHz, $CDCl_3$): δ/ppm = 35.5. **IR** (ATR): $\tilde{v}/cm^{-1}$ = 1930 (CO), 1591, 1497, 1249, 1179, 1093, 1025, 798, 697. **HRMS** (ESI) calculated for $C_{59}H_{49}NO_4PRu^+$ $[(M\text{-}Cl+CH_3CN)^+]$: 968.2437; found: 968.2417.

*4.2 Preparation of Ruthenium(II)- and Osmium(II)-CNN Complexes 4a and 4b*

2-(*p*-Tolyl)pyridine-*N*-oxide (**S11**),[S26] 6-(p-tolyl)picolinonitrile (**S12**),[S27] (6-(*p*-tolyl)pyridin-2-yl)methanamine (**S13**),[S27] dichlorotris(triphenylphosphine )ruthenium(II) (**S14**),[S28] bis(tetraethylammonium) hexachloroosmate(II) (**S15**),[S29] dichlorotris(triphenylphosphine)osmium(II) (**S16**),[S30] (*OC*-6-23)-[2-[6-[(amino-κ*N*)methyl]-2-pyridinyl-κ*N*]-5-methylphenyl-κ*C*][1,1'-(1,4-butanediyl)-bis[1,1-diphenylphosphine-κ*P*]]chlororuthenium(II) (**4a**),[S31] and (*OC*-6-23)-[2-[6-[(amino-κ*N*)-methyl]-2-pyridinyl-κ*N*]-5-methylphenyl-κ*C*][1,1'-(1,4-butanediyl)bis[1,1-diphenylphosphine-κ*P*]]chloroosmium(II) (**4b**)[S32] were synthesized according to literature procedures (Scheme S3).

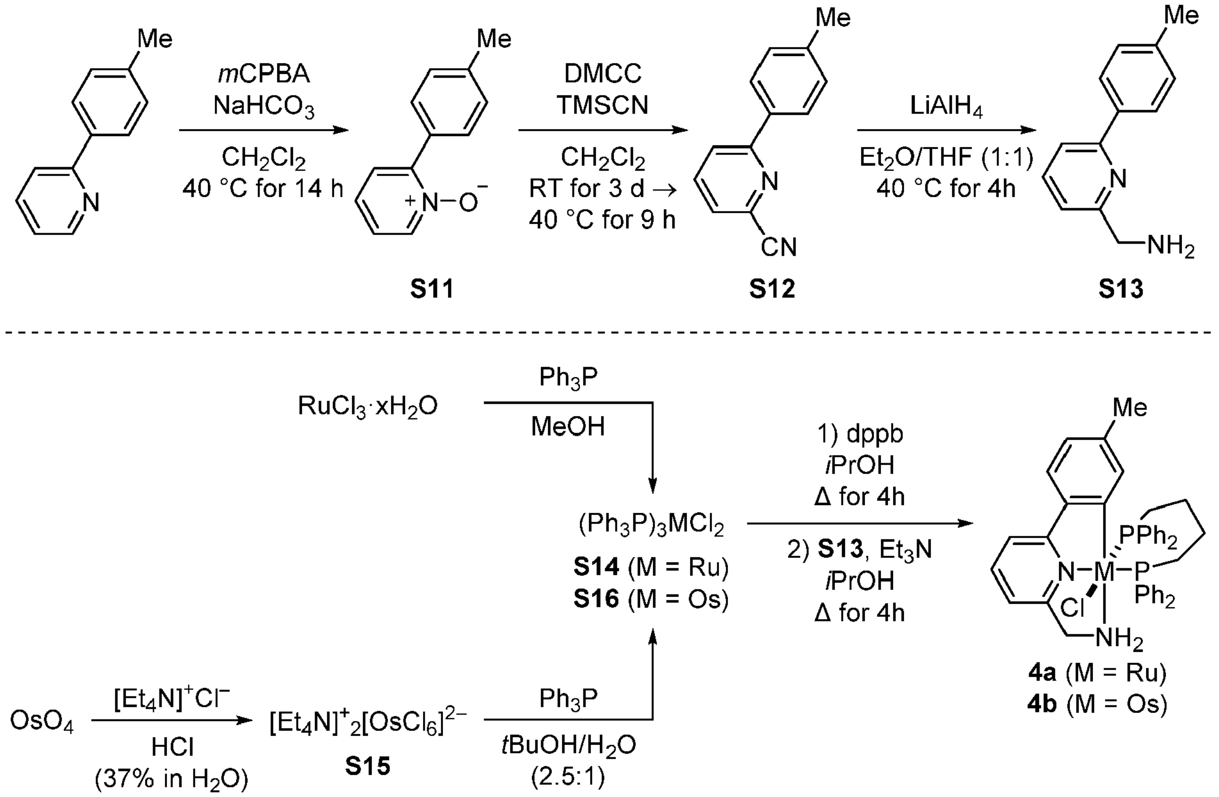


**Scheme S3.** Preparation of ruthenium(II)- and osmium(II)-CNN complexes **4a** and **4b.** mCPBA = *meta*-chloroperoxybenzoic acid, DMCC = dimethylcarbamoyl chlo-ride, TMSCN = trimethylsilyl cyanide, dppb = 1,4-bis(diphenylphosphino)bu-tane.

*4.2.1 (OC-6-23)-[2-[6-[(Amino-κN)methyl]-2-,pyridinyl-κN]-5-methylohenyl-κC][1,1'-(1,4-butanediyl)bis[1,1-diphenylphosphine-κP]]chlororuthenium(II) (4a)*

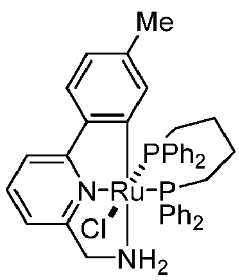

**4a**

$C_{41}H_{41}ClN_2P_2Ru$

M = 760.26 g/mol

According to a literature procedure,[S31] a two-necked round bottom-flask equipped with a reflux condenser was charged with $(Ph_3P)_3RuCl_2$ (**S14**, 2.11 g, 2.20 mmol, 1.00 equiv) and 1,4-bis(diphenylphosphino)butane (dppb, 0.948 g, 2.22 mmol, 1.01 equiv). The apparatus was evacuated and backfilled with nitrogen three times before dried and degassed isopropanol (10 mL) was added. The mixture was stirred under reflux for 2 h to result in a green suspension. After cooling to room temperature (6-(*p*-tolyl)pyridin-2-yl)methanamine (**S13**, 698 mg, 3.52 mmol, 1.60 equiv) and triethylamine (4.7 mL, 34 mmol, 15 equiv) were added sequentially. The mixture was stirred under reflux for a further 4 h and subsequently allowed to cool to room temperature. The resulting orange suspension was transferred onto a Schlenk frit via syringe and filtered *in vacuo.* The solid residue was washed with methanol (3 × 10 mL) and n-pentane (3 × 10 mL), dissolved in dichloromethane, concentrated, and dried *in vacuo* over night. The Ru-CNN complex **4a** (1.26 g, 1.66 mmol, 75%) was obtained as a yellow solid.

**$^1$H NMR** (500 MHz, $CD_2Cl_2$): δ/ppm = 1.05-1.19 (m, 1H), 1.61-1.77 (m, 1H), 1.80-2.03 (m, 3H), 2.18 ($m_c$, 1H), 2.25 (s, 3H), 2.32 (dd, $J_{H,H}$ = 14.4 Hz, $J_{H,H}$ = 9.2 Hz, 1H), 3.00 ($m_c$, 1H), 3.07 ($m_c$, 1H), 3.42 ($m_c$, 1H), 3.72 ($m_c$, 1H), 4.12 (dd, $J_{H,H}$ = 15.7 Hz, $J_{H,H}$ = 4.6 Hz, 1H), 6.00 (dd, $J_{H,H}$ = 8.2 Hz, $J_{H,P}$ = 8.2 Hz, 2H), 6.56-6.68 (m, 3H), 6.79 (d, $J_{H,H}$ = 7.8 Hz, 1H), 6.84 (td, $J_{H,H}$ = 7.4 Hz, $J_{H,H}$ = 0.9 Hz, 1H), 7.04 (d, $J_{H,H}$ = 8.1 Hz, 1H), 7.16 (dd, $J_{H,H}$ = 7.9 Hz, $J_{H,H}$ = 7.9 Hz, 1H), 7.25 (d, $J_{H,H}$ = 7.9 Hz, 1H), 7.27-7.37 (m, 4H), 7.38-7.54 (m, 7H), 7.64 (s, 1H), 7.77 (dd, $J_{H,H}$ = 7.9 Hz, $J_{H,P}$ = 7.9 Hz, 2H), 8.12 ($m_c$, 2H). **$^{13}C\{^1H\}$ NMR** (126 MHz, $CD_2Cl_2$): δ/ppm = 21.8, 22.1, 26.8, 30.7 (d, $J_{C,P}$ = 32 Hz), 33.4 (d, $J_{C,P}$ = 25 Hz), 52.6, 115.98 (d, $J_{C,P}$ = 2 Hz), 116.03, 121.2, 124.1, 126.6 (d, $J_{C,P}$ = 8 Hz, 2C), 127.34, 127.35 (d, $J_{C,P}$ = 8.8 Hz, 2C), 128.0 (d, $J_{C,P}$ = 8 Hz, 2C), 128.1, 128.4 (d, $J_{C,P}$ = 9 Hz, 2C), 129.5 (d, $J_{C,P}$ = 2 Hz), 130.0 (d, $J_{C,P}$ = 8 Hz, 2C), 130.3 (d, $J_{C,P}$ = 2 Hz), 131.4 (d, $J_{C,P}$ = 8 Hz, 2C), 134.2 (d, $J_{C,P}$ = 11 Hz, 2C), 134.7, 135.7 (d, $J_{C,P}$ = 32 Hz), 136.5 (d, $J_{C,P}$ = 11 Hz, 2C), 136.8, 137.3 (d, $J_{C,P}$ = 30 Hz), 140.3 (dd, $J_{C,P}$ = 43 Hz, $J_{C,P}$ = 2 Hz), 144.6 (d, $J_{C,P}$ = 33 Hz), 147.4 (d, $J_{C,P}$ = 2 Hz), 149.2 (d, $J_{C,P}$ = 2 Hz), 156.4, 163.7, 181.8 (dd, $J_{C,P}$ = 16 Hz, $J_{C,P}$ = 8 Hz). **$^{31}P\{^1H\}$ NMR** (203 MHz, $CD_2Cl_2$): δ/ppm = 42.1 (d, $J_{P,P}$ = 38 Hz), 56.7 (d, $J_{P,P}$ = 38 Hz). **HRMS** (ESI) calculated for $C_{41}H_{41}N_2P_2Ru^+$ [$(M-Cl)^+$]: 725.1783; found: 725.1783.

The spectroscopic data are in accordance with those reported in the literature.[S31]

*4.2.2 (OC-6-23)-[2-[6-[(Amino-κN)methyl]-2-,pyridinyl-κN]-5-methylphenyl-κC][1,1'-(1,4-butanediyl)bis[1,1-diphenylphosphine-κP]]chloroosmium(II) (4b)*

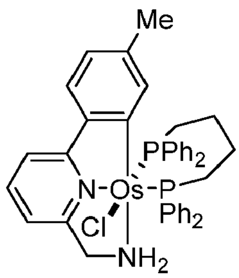

**4b**

$C_{41}H_{41}ClN_2OsP_2$

M = 849.42 g/mol

According to a literature procedure,[S32] a two-necked round bottom-flask equipped with a reflux condenser was charged with $(Ph_3P)_3OsCl_2$ (**S16**, 210 mg, 200 μmol, 1.00 equiv) and 1,4-bis(diphenylphosphino)butane (dppb, 102 mg, 239 μmol, 1.20 equiv). The apparatus was evacuated and backfilled with nitrogen three times before dried and degassed dichloromethane (5 mL) was added. The mixture was stirred at room temperature to result in a red suspension. Dichloromethane was removed *in vacuo,* and dried and degassed isopropanol (5 mL), (6-(*p*-tolyl)pyridin-2-yl)methanamine (**S13**, 48 mg, 0.24 mmol, 1.2 equiv), and triethylamine (0.33 mL, 2.4 mmol, 12 equiv) were added sequentially. The mixture was stirred under reflux for 19 h and subsequently allowed to cool to room remperature. The resulting red suspension was transferred onto a Schlenk frit via syringe and filtered *in vacuo.* The solid residue was washed with methanol (3 × 5 mL) and n-pentane (3 × 7 mL), dissolved in dichloromethane, concen-trated, and dried *in vacuo* over night. The Os-CNN complex **4b** (141 mg, 166 μmol, 83%) was obtained as a red solid.

**$^1$H** NMR (700 MHz, $CD_2Cl_2$): δ/ppm = 1.08 ($m_c$, 1H), 1.64-1.96 (m, 3H), 2.26 (s, 3H), 2.44 ($m_c$, 1H), 2.50 ($m_c$, 1H), 2.71 ($m_c$, 1H), 3.08 ($m_c$, 1H), 3.48 ($m_c$, 1H), 3.62-3.71 (m, 1H), 3.75-3.84 (m, 1H), 4.25 (dd, $J_{H,H}$ = 15.1 Hz, $J_{H,H}$ = 4.7 Hz, 1H), 6.00 (dd, $J_{H,H}$ = 8.2 Hz, $J_{H,P}$ = 8.2 Hz, 2H), 6.58-6.67 (m, 3H), 6.74 (d, $J_{H,H}$ = 7.7 Hz, 1H), 6.81 (t, $J_{H,H}$ = 7.2 Hz, 1H), 7.03 (d, $J_{H,H}$ = 8.1 Hz, 1H), 7.10 (dd, $J_{H,H}$ = 7.7 Hz, $J_{H,H}$ = 7.7 Hz, 1H), 7.21 (d, $J_{H,H}$ = 7.8 Hz, 1H), 7.23-7.32 (m, 4H), 7.33-7.38 (m, 2H), 7.39 (dd, $J_{H,H}$ = 7.0 Hz, $J_{H,H}$ = 7.0 Hz, 2H), 7.43 (dd, $J_{H,H}$ = 7.1 Hz, $J_{H,H}$ = 7.1 Hz, 2H), 7.46

(t, $J_{H,H}$ = 7.1 Hz, 1H), 7.59 (s, 1H), 7.69 (dd, $J_{H,H}$ = 7.8 Hz, $J_{H,P}$ = 7.8 Hz, 2H), 8.02 (dd, $J_{H,H}$ = 8.3 Hz, $J_{H,P}$ = 8.3 Hz, 2H). **$^{13}$C{$^1$H} NMR** (176 MHz, $CD_2Cl_2$): δ/ppm = 21.3, 21.7, 26.8, 30.6 (d, $J_{C,P}$ = 37 Hz), 35.4 (d, $J_{C,P}$ = 31 Hz), 54.8 (d, $J_{C,P}$ = 3 Hz), 115.6 (d, $J_{C,P}$ = 2 Hz), 116.0 (d, $J_{C,P}$ = 3 Hz), 120.4, 124.6, 126.7 (d, $J_{C,P}$ = 9 Hz, 2C), 127.2 (d, $J_{C,P}$ = 9 Hz, 2C), 127.3 (d, $J_{C,P}$ = 2 Hz), 127.9 (d, $J_{C,P}$ = 8 Hz, 2C), 128.0, 128.3 (d, $J_{C,P}$ = 9 Hz, 2C), 129.3 (d, $J_{C,P}$ = 2 Hz), 129.6 (d, $J_{C,P}$ = 7 Hz, 2C), 130.2 (d, $J_{C,P}$ = 2 Hz), 131.3 (d, $J_{C,P}$ = 8 Hz, 2C), 134.3 (br, 2C), 135.0, 135.6 (d, $J_{C,P}$ = 38 Hz), 136.5 (d, $J_{C,P}$ = 11 Hz, 2C), 136.8 (d, $J_{C,P}$ = 37 Hz), 138.1, 138.9 (d, $J_{C,P}$ = 51 Hz), 145.6 (d, $J_{C,P}$ = 39 Hz), 147.6 (d, $J_{C,P}$ = 3 Hz), 149.1, 156.8, 161.6 (dd, $J_{C,P}$ = 9 Hz, $J_{C,P}$ = 4 Hz), 166.0. **$^{31}$P{$^1$H} NMR** (203 MHz, $CD_2Cl_2$): δ/ppm = -0.3 (d, $J_{P,P}$ = 13 Hz), 0.1 (d, $J_{P,P}$ = 14 Hz). **HRMS** (ESI) calculated for $C_{41}H_{41}N_2OsP_2^+$ [(M-Cl)$^+$]: 815.2354; found: 815.2351.

The spectroscopic data are in accordance with those reported in the literature.[S32]

*4.3 Preparation of Ruthenium(II)-PNP complex 5*

Bis(2-chloroethyl)amine hydrochloride (**S17**),[S33] *N,N*-bis(2-chloroethyl)-1,1,1-trimethylsilan-amine (**S18**),[S34] bis(2-(diisopropylphosphaneyl)ethyl)amine (**S19**),[S35] (carbonyl)(chloro)(hydrido)tris(triphenylphosphine)ruthenium(II) (**S20**),[S36] and (OC-6-52)-[2-[bis(1-methylethyl)phosphino-κ*P*]-N-[2-[bis(1-methylethyl)phosphino-κ*P*]ethyl]ethanamine-κ*N*](carbonyl)(chloro)(hydrido)ruthenium(II) (**5**)[S37] were synthesized according to literature procedures (Scheme S4).

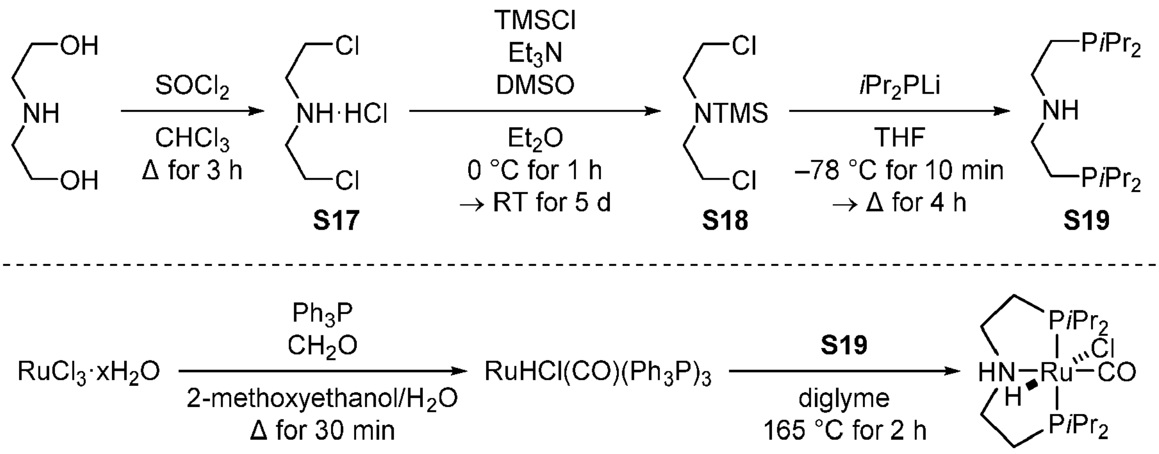


**S17** **S18** **S19**

**S20** **5**

*4.3.1 (OC-6-52)-[2-[Bis(1-methylethyl)phosphino-κP]-N-[2-[bis(1-methylethyl)phos-phino-κP]ethyl]ethanamine-κN](carbonyl)(chloro)(hydrido)ruthenium(II) (5)*

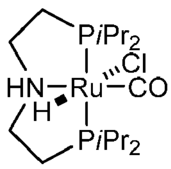

**5**

$C_{17}H_{38}ClNOP_2Ru$

M = 470.96 g/mol

According to a literature procedure,[S37] in a glovebox, a Schlenk tube was charged with $RuHCl(CO)(Ph_3P)_3$ (571 mg, 600 μmol, 1.00 equiv) and bis(2-(diisopropylphosphaneyl)ethyl)-amine (**S19,** 220 mg, 720 μmol, 1.20 equiv). The reaction vessel was sealed with a septum and transferred out of the glovebox. Diglyme (2 mL) was added, and the reaction mixture was stirred at 165 °C for 2 h. After cooling to room temperature, the mixture was stored at-20 °C over night to enhance the precipitation of complex **5.** Diglyme was removed via syringe. The solid residue was washed with diethyl ether (4 × 0.5 mL) at -20 °C and subsequently dried *in vacuo* over night. Ruthenium(II)-PNP complex **5** (236 mg,

501 μmol, 84%) was obtained as a white solid.

**$^1$H NMR** (500 MHz, $CD_2Cl_2$): δ/ppm = -16.31 (t, $J_{H,P}$ = 18.0 Hz, 1H), 1.10 ($m_c$, 6H), 1.17 ($m_c$, 6H), 1.25 ($m_c$, 6H), 1.42 ($m_c$, 6H), 1.69-1.83 (m, 2H), 2.15-2.34 (m, 6H), 2.66 ($m_c$, 2H), 3.13-3.30 (m, 2H), 3.43 (br t, $J_{H,H}$ ≈ 10Hz, 1H). **$^1$H{$^{31}$P} NMR** (500 MHz, $CD_2Cl_2$): δ/ppm = - 16.31 (s, 1H), 1.10 (d, $J_{H,H}$ = 6.9 Hz, 6H), 1.17 (d, $J_{H,H}$ = 6.7 Hz, 6H), 1.25 (d, $J_{H,H}$ = 7.1 Hz, 6H), 1.42 (d, $J_{H,H}$ = 7.3 Hz, 6H), 1.76 ($m_c$, 2H), 2.15-2.34 (m, 6H), 2.66 ($m_c$, 2H), 3.22 (br s, 2H), 3.43 (br t, $J_{H,H}$ ≈ 10Hz, 1H). **$^{13}$C{$^1$H} NMR** (126 MHz, $CD_2Cl_2$): δ/ppm = 17.5 (2C), 19.0 (2C), 20.9 ($m_c$, 4C), 24.2 (dd, $J_{C,P}$ = 13 Hz, $J_{C,P}$ = 12 Hz, 2C), 27.1 (dd, $J_{C,P}$ = 12 Hz, $J_{C,P}$ = 11 Hz, 2C), 30.2 (dd, $J_{C,P}$ = 9 Hz, $J_{C,P}$ = 9 Hz, 2C), 54.3 (2C), 208.3 (t, $J_{C,P}$ = 12 Hz). **$^{31}$P{$^1$H} NMR** (203 MHz, $CD_2Cl_2$): δ/ppm = 74.8. **HRMS** (ESI) calculated for $C_{17}H_{38}NOP_2Ru^+$ [$(M-Cl)^+$]: 436.1467; found: 436.1464.

The spectroscopic data are in accordance with those reported in the literature.[S37]

**5. Control Experiments and Variation of the Reaction Conditions**

*5.1 Investigation of Potential Racemic Background Reactions*

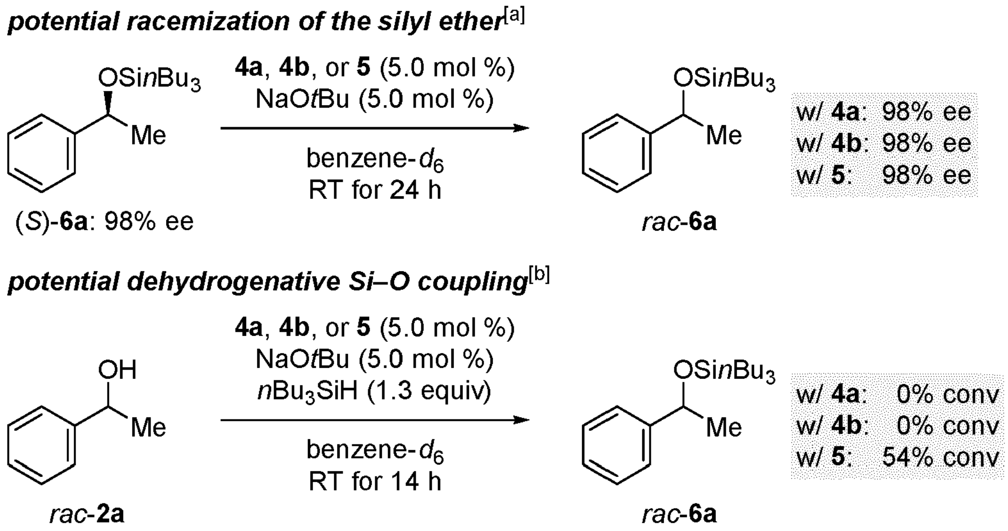

(*S*)-**6a**: 98% ee
*rac*-**6a**
*rac*-**2a**
*rac*-**6a**

**Scheme S5.** Investigation of potential racemic background reactions. [a] All reactions were performed on a 0.2 mmol scale according to **GP 5**. Enantiomeric excesses were determined by HPLC analysis on a chiral stationary phase after cleavage of the silyl ether. [b] All reactions were performed on a 0.2 mmol scale according to **GP 6**. Conversions were determined by GLC analysis using tetracosane as an internal standard.

*5.2 Variation of the Reaction Conditions*

**Table S1.** Variation of the reaction conditions for the DKR of *rac*-**12b**.[a]

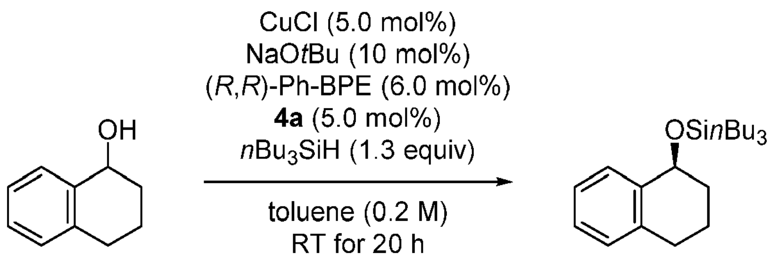


*rac*-**12b** (*S*)-**13b**

| entry | variation | conversion (%)[b] | ee (% )[c] |
|---|---|---|---|
| 1 | - | >99 | 92 |
| 2 | $n$Bu$_3$SiH (1.2 equiv) | >99 | 91 |
| 3 | $n$Bu$_3$SiH (1.1 equiv) | >99 | 91 |
| 4 | $n$Bu$_3$SiH (1.0 equiv) | 98 | 94 |
| 5 | *tert*-amyl alcohol (0.2 m), w/ 4 Å molecular sieves | >99 | 93 |
| 6 | T = 0 °C | >99 | 93 |
| 7 | $n$Bu$_3$SiH (1.1 equiv), toluene (0.5 m) | >99 | 93 |

[a] All reactions were performed on a 0.2 mmol scale according to **GP** 7. [b] Determined by GLC analysis using tetracosane as an internal standard. [c] Determined by HPLC analysis on a chiral stationary phase.

*5.3 Distinguishing Dehydrogenative Coupling and Hydrosilylation Pathways*

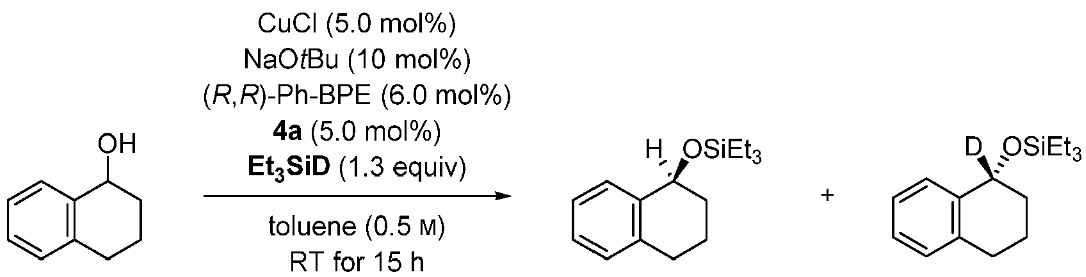


*rac*-**12b** (*S*)-**13b** (*S*)-**13b-*d*$_1$** *not observed* ($^2$H NMR)

**Scheme S6.** DKR of *rac*-**12b** employing a deuterated hydrosilane. Performed on a 0.2 mmol scale according to **GP 7**.

*5.4 Attempted DKR of an Allylic Alcohol*

***attempted DKR of an allylic alcohol***[a]

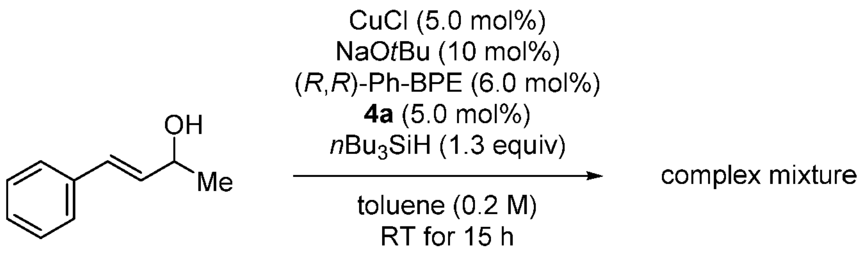


*rac*-**S5**

***allylic alcohol-ketone isomerization with the racemization catalyst[b]***

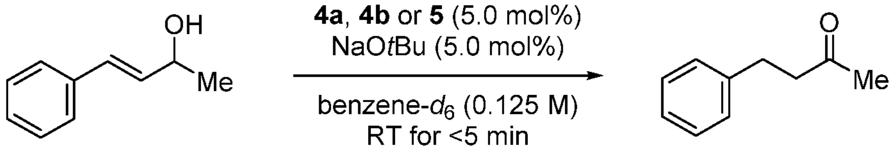


*rac*-**S5**

**Scheme S7.** Attempted DKR of allylic alcohol *rac*-**S5** and its competing fast isomerization. [a] Performed on a 0.2 mmol scale according to **GP 7**. [b] Performed on a 0.2 mmol scale according to **GP 4** with allylic alcohol *rac*-**S5** replacing (*S*)-1-phe-nylethan-1-ol [(*S*)-**2a**] as the substrate.

**6. Dynamic Kinetic Resolution of Secondary Benzylic Alcohols - Reaction Parameters and Characterization Data for the Silyl Ethers**

*6.1 (S)-Tributyl(1-phenylethoxy)silane [(S)-6a]*

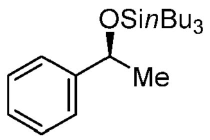

(*S*)-**6a**
$C_{20}H_{36}OSi$
M = 320.59 g/mol

Prepared according to **GP 7** from benzylic alcohol *rac*-**2a** (24.4 mg, 0.200 mmol, 1.00 equiv) and $n$Bu$_3$SiH (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (S)-**6a** (63.6 mg, 0.198 mmol, 99%, 86% ee) as a colorless oil.

$\mathbf{R_f}$ = 0.40 (cyclohexane). **$^1$H NMR** (500 MHz, $C_6D_6$): δ/ppm = 0.60-0.72 (m, 6H), 0.90 (t, *J* = 7.2 Hz, 9H), 1.29-1.44 (m, 12H), 1.44 (d, *J* = 6.3 Hz, 3H), 4.84 (q, *J* = 6.3 Hz, 1H), 7.08 ($m_c$, 1H), 7.19 ($m_c$, 2H), 7.34-7.38 (m, 2H). **$^{13}$C{$^1$H} NMR** (126 MHz, $C_6D_6$): δ/ppm = 14.0 (3C), 14.2 (3C), 25.9 (3C), 27.0 (3C), 27.7, 71.3, 125.7 (2C), 127.2, 128.5 (2C), 147.4. **$^1$H/29Si HMQC NMR** (500/99 MHz, optimized for *J* = 7 Hz, $C_6D_6$): δ/ppm = (0.60-0.72, 1.29-1.44, 4.84)/15.1. IR (ATR): $\tilde{\nu}$/cm$^{-1}$ = 2955, 2919, 2870, 1453, 1369, 1194, 1093, 955, 697. **HRMS** (APCI) calculated for $C_{20}H_{37}OSi^+$ [(M+H)$^+$]: 321.2608; found: 321.2614. **Optical Rotation:** $[\alpha]_D^{RT}$ = -34.3 (c 1.0, $CHCl_3$, 86% ee); -28.0 (c 1.3, $CHCl_3$, 56% ee) reported for the *S*-enantiomer.[S3] The enantiomeric excess of (*S*)-**6a** was determined by HPLC analysis on a chiral stationary phase after cleavage of the silyl ether according to **GP 8** (*Daicel* Chiralcel® OD-H column, column temperature: 20 °C, mobile phase: n-heptane:isopropanol = 95:5, flow rate: 0.8 mL/min, λ = 210 nm): $t_R$ = 11.2 min for (R)-2a, $t_R$ = 12.8 min for (S)-2a.

The analytical data are in accordance with those reported in the literature.[S3]

*6.2 (S)-Tributyl(1-(o-tolyl)ethoxy)silane [(S)-6b]*

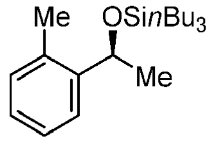

(*S*)-**6b**
$C_{21}H_{38}OSi$
M = 334.62 g/mol

Prepared according to GP 7 from benzylic alcohol rac-2b (27.2 mg, 0.200 mmol, 1.00 equiv) and $n$Bu$_3$SiH (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6b** (64.1 mg, 0.192 mmol, 96%, 79% ee) as a colorless oil.

**$R_f$** = 0.38 (cyclohexane). **$^1$H NMR** (500 MHz, $C_6D_6$): δ/ppm = 0.60-0.72 (m, 6H), 0.90 (t, *J* = 7.2 Hz, 9H), 1.28-1.44 (m, 12H), 1.42 (d, *J* = 6.3 Hz, 3H), 2.18 (s, 3H), 5.11 (q, *J* = 6.3 Hz, 1H), 6.97 (br d, *J* ≈ 7.5 Hz, 1H), 7.04 (ddd, *J* = 7.4 Hz, *J* = 7.4 Hz, *J* = 1.4 Hz, 1H), 7.17 (br dd, *J* ≈ 7.5 Hz, *J* ≈ 7.5 Hz, 1H), 7.74 (dd, *J* = 7.8 Hz, *J* = 1.1 Hz, 1H). **$^{13}$C{$^1$H} NMR** (126 MHz, $C_6D_6$): δ/ppm = 14.0 (3C), 14.2 (3C), 19.0, 25.9 (3C), 26.3, 27.1 (3C), 68.1, 125.9, 126.6, 127.0, 130.4, 133.0, 145.4. **29Si{$^1$H} DEPT NMR** (99 MHz, $C_6D_6$): δ/ppm = 14.9. **IR** (ATR): $\tilde{\nu}$/cm$^{-1}$ = 2955, 2919, 2870, 1459, 1372, 1193, 1092, 953, 755, 724. **HRMS** (APCI) calculated for $C_{21}H_{39}OSi^+$ [(M+H)$^+$]: 335.2765; found: 335.2772. **Optical Rotation:** $[\alpha]_D^{RT}$ = -36.3 (c 1.0, $CHCl_3$, 79% ee); -27.0 (c 1.8, $CHCl_3$, 61% ee) reported for the *S*-enantiomer.[S3] The enantiomeric excess of (*S*)-**6b** was determined by HPLC analysis on a chiral stationary phase after cleavage of the silyl ether according to **GP 8** (*Daicel* Chiralcel® AD-H column, column temperature 20 °C, mobile phase: *n*-heptane:isopropanol = 95:5, flow rate: 0.8 mL/min, λ = 254 nm): $t_R$ = 9.9 min for (*R*)-**2b**, $t_R$ = 11.0 min for (*S*)-**2b**.

The analytical data are in accordance with those reported in the literature.[S3]

*6.3 (S)-(1-(2-Bromophenyl)ethoxy)tributylsilane [(S)-6c]*

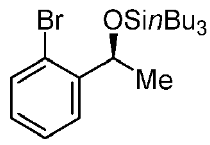

(*S*)-**6c**
$C_{20}H_{35}BrOSi$
M = 399.49 g/mol

Prepared according to **GP 7** from benzylic alcohol *rac*-**2c** (40.2 mg, 0.200 mmol, 1.00 equiv) and $n$Bu$_3$SiH (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (S)-6c (77.6 mg, 0.195 mmol, 97%, 34% ee) as a colorless oil.

**$R_f$** = 0.52 (cyclohexane). **$^1$H NMR** (500 MHz, $C_6D_6$): δ/ppm = 0.62-0.73 (m, 6H), 0.90 (t, *J* = 7.1 Hz, 9H), 1.25-1.45 (m, 12H), 1.48 (d, *J* = 6.3 Hz, 3H), 5.43 (q, *J* = 6.2 Hz, 1H), 6.69 (ddd, *J* = 7.6 Hz, *J* = 7.6 Hz, *J* = 1.5 Hz, 1H), 7.04 (dd, *J* = 7.5 Hz, *J* = 7.5 Hz, 1H), 7.31 (d, *J* = 8.0 Hz, 1H), 7.76 (dd, *J* = 7.8 Hz, *J* = 1.5 Hz, 1H). **$^{13}$C{$^1$H} NMR** (126 MHz, $C_6D_6$): δ/ppm = 14.0 (3C), 14.1 (3C), 25.9 (3C), 26.0, 27.0 (3C), 70.1, 121.3, 128.7, 132.5, 146.5. **$^{13}$C{$^1$H} DEPT NMR** (126 MHz, $C_6D_6$): δ/ppm = 127.9 (2C). **$^1$H/29Si HMQC NMR** (500/99 MHz, optimized for *J* = 7 Hz, $C_6D_6$): δ/ppm = (0.62-0.73, 1.25-1.45, 5.43)/16.0. **IR** (ATR): $\tilde{\nu}$/cm$^{-1}$ = 2955, 2919, 2869, 1464, 1197, 1095, 1021, 951, 751. **HRMS** (LIFDI) calculated for $C_{20}H_{36}BrOSi^+$ [(M+H)$^+$]: 399.1713; found: 399.1714. **Optical Rotation:** $[\alpha]_D^{RT}$ = -6.3 (c 1.0, $CHCl_3$, 34% ee). The enantiomeric excess of (*S*)-**6c** was determined by HPLC analysis on a chiral stationary phase after cleavage of the silyl ether according to **GP 8** (*Daicel* Chiralcel® OJ-H column, column temperature 20 °C, mobile phase: n-heptane:isopropanol = 97:3, flow rate: 0.8 mL/min, λ = 230 nm): $t_R$ = 15.1 min for (*S*)-**2c**, $t_R$ = 16.4 min for (*R*)-**2c.**

*6.4 (S)-Tributyl(1-(m-tolyl)ethoxy)silane [(S)-6d]*

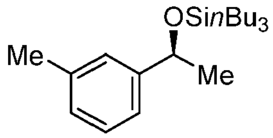

(*S*)-**6d**
$C_{21}H_{38}OSi$
M = 334.62 g/mol

Prepared according to **GP 7** from benzylic alcohol *rac*-**2d** (27.2 mg, 0.200 mmol, 1.00 equiv) and *n*$Bu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6d** (58.9 mg, 0.176 mmol, 88%, 88% ee) as a colorless oil.

$\mathbf{R_f}$ = 0.35 (cyclohexane). **$^1$H NMR** (500 MHz, $C_6D_6$): δ/ppm = 0.62-0.73 (m, 6H), 0.91 (t, *J* = 7.2 Hz, 9H), 1.30-1.44 (m, 12H), 1.48 (d, *J* = 6.3 Hz, 3H), 2.18 (s, 3H), 4.85 (q, *J* = 6.3 Hz, 1H), 6.93 (br d, *J* ≈ 7.5 Hz, 1H), 7.15 (br dd, *J* ≈ 7.7 Hz, *J* ≈ 7.7 Hz, 1H), 7.22 (br d, *J* ≈ 8.0 Hz, 1H), 7.23 (br s, 1H). **$^{13}$C{$^1$H} NMR** (126 MHz, $C_6D_6$): δ/ppm = 14.0 (3C), 14.3 (3C), 21.5, 26.0 (3C), 27.1 (3C), 27.7, 71.3, 122.9, 126.5, 128.0, 128.5, 137.8, 147.4. **29Si{$^1$H}** D**EPT NMR** (99 MHz, $C_6$D6): δ/ppm = 14.9. **IR** (ATR): $\tilde{v}$/cm$^{-1}$ = 2955, 2919, 2869, 1459, 1193, 1077, 961, 784, 701. **HRMS** (APCI) calculated for $C_{21}H_{39}OSi^+$ [(M+H)$^+$]: 335.2765; found: 335.2772. **Optical Rotation:** $[\alpha]_D^{RT}$ = -35.8 (c 1.0, $CHCl_3$, 88% ee); -27.6 (c 1.4, $CHCl_3$, 65% ee) reported for the *S*-enantiomer.[S3] The enantiomeric excess of (*S*)-**6d** was determined by HPLC analysis on a chiral stationary phase after cleavage of the silyl ether according to **GP 8** (*Daicel* Chiralcel® OD-H column, column temperature 20 °C, mobile phase: n-heptane:isopropanol = 95:5, flow rate: 0.8 mL/min, λ = 230 nm): $t_R$ = 10.0 min for (*R*)-**2d**, $t_R$ = 11.6 min for (*S*)-**2d**.

The analytical data are in accordance with those reported in the literature.[S3]

*6.5 (S)-(1-(3-Bromophenyl)ethoxy)tributylsilane [(S)-6e]*

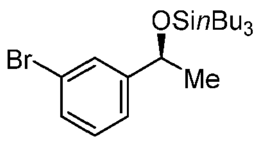

(*S*)-**6e**
$C_{20}H_{35}BrOSi$
M = 399.49 g/mol

Prepared according to **GP 7** from benzylic alcohol *rac*-**2e** (40.2 mg, 0.200 mmol, 1.00 equiv) and *n*$Bu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6e** (73.3 mg, 0.196 mmol, 98%, 93% ee) as a colorless oil.

$\mathbf{R_f}$ = 0.51 (cyclohexane). **$^1$H NMR** (500 MHz, $C_6D_6$): δ/ppm = 0.54-0.68 (m, 6H), 0.91 ($m_c$, 9H), 1.23-1.43 (m, 12H), 1.29 (d, *J* = 6.4 Hz, 3H), 4.66 (q, *J* = 6.3 Hz, 1H), 6.80 (dd, *J* = 7.8 Hz, *J* = 7.8 Hz, 1H), 7.11 (br d, *J* = 7.7 Hz, 1H), 7.20 ($m_c$, 1H), 7.60 ($m_c$, 1H). **$^{13}$C{$^1$H} NMR** (126 MHz, $C_6D_6$): δ/ppm = 14.0 (3C), 14.1 (3C), 25.9 (3C), 27.0 (3C), 27.4, 70.5, 122.8, 124.1, 129.0, 130.1, 130.3, 149.8. **29Si{$^1$H} DEPT NMR** (99 MHz, $C_6$D6): δ/ppm = 15.8. IR (ATR): $\tilde{v}$/cm$^{-1}$ = 2954, 2919, 2869, 1570, 1460, 1196, 1077, 957, 781. **HRMS** (LIFDI) calculated for $C_{16}H_{26}BrOSi^+$ [(M-$C_4H_9$)$^+$]: 341.0931; found: 341.0935. **Optical Rotation:** $[\alpha]_D^{RT}$ = -29.8 (c 1.0, $CHCl_3$, 93% ee). The enantiomeric excess of (*S*)-**6e** was determined by HPLC analysis on a chiral stationary phase after cleavage of the silyl ether according to **GP 8** (*Daicel* Chiralcel® OJ-H column, column temperature 20 °C, mobile phase: n-heptane:isopropanol = 97:3, flow rate: 0.8 mL/min, λ = 230 nm): $t_R$ = 18.4 min for (*S*)-**2e**, $t_R$ = 22.0 min for (*R*)-**2e**.

*6.6 (S)-Tributyl(1-(p-tolyl)ethoxy)silane [(S)-6f]*

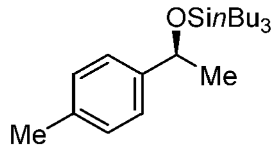

(*S*)-**6f**
$C_{21}H_{38}OSi$
M = 334.62 g/mol

Prepared according to **GP 7** from benzylic alcohol *rac*-**2f** (27.2 mg, 0.200 mmol, 1.00 equiv) and $nBu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6f** (62.3 mg, 0.186 mmol, 93%, 87% ee) as a colorless oil.

$\mathbf{R_f}$ = 0.40 (cyclohexane). **$^1$H NMR** (500 MHz, $C_6D_6$): δ/ppm = 0.62-0.73 (m, 6H), 0.91 (t, *J* = 7.2 Hz, 9H), 1.30-1.46 (m, 12H), 1.47 (d, *J* = 6.3 Hz, 3H), 2.13 (s, 3H), 4.86 (q, *J* = 6.3 Hz, 1H), 7.04 ($m_c$, 2H), 7.30 ($m_c$, 2H). **$^{13}$C{$^1$H} NMR** (126 MHz, $C_6D_6$): δ/ppm = 14.0 (3C), 14.3 (3C), 21.1, 26.0 (3C), 27.1 (3C), 27.8, 71.2, 125.7 (2C), 129.2 (2C), 136.5, 144.5. **29Si{$^1$H} DEPT NMR** (99 MHz, $C_6D_6$): δ/ppm = 14.8. **IR** (ATR): $\tilde{v}$/cm$^{-1}$ = 2955, 2919, 2869, 1459, 1368, 1195, 1092, 955, 729. **HRMS** (APCI) calculated for $C_{21}H_{39}OSi^+$ [$(M+H)^+$]: 335.2765; found: 335.2766. **Optical Rotation:** $[\alpha]_D^{RT}$ = -36.0 (c 1.0, $CHCl_3$, 87% ee); -30.1 (c 1.1, $CHCl_3$, 64% ee) reported for the *S*-enantiomer.[S3] The enantiomeric excess of (*S*)-**6f** was determined by HPLC analysis on a chiral stationary phase after cleavage of the silyl ether according to **GP 8** (*Daicel* Chiralcel® OJ-H column, column temperature 20 °C, mobile phase: n-heptane:isopropanol = 98:2, flow rate: 0.8 mL/min, λ = 210 nm): $t_R$ = 25.2 min for (*S*)-**2f**, $t_R$ = 29.9 min for (*R*)-**2f**.

The analytical data are in accordance with those reported in the literature.[S3]

*6.7 (S)-(1-([1,1'-Biphenyl]-4-yl)ethoxy)tributylsilane[(S)-6g]*

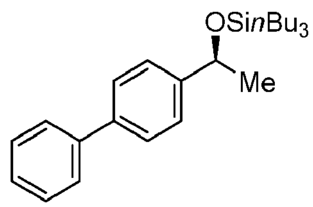

(*S*)-**6g**
$C_{26}H_{40}OSi$
M = 396.69 g/mol

Prepared according to **GP 7** from benzylic alcohol *rac*-**2g** (39.7 mg, 0.200 mmol, 1.00 equiv) and $nBu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6g** (77.7 mg, 0.196 mmol, 98%, 85% ee) as a colorless oil.

$\mathbf{R_f}$ = 0.29 (cyclohexane). **$^1$H NMR** (500 MHz, $C_6D_6$): δ/ppm = 0.64-0.75 (m, 6H), 0.91 (t, *J* = 7.2 Hz, 9H), 1.31-1.47 (m, 12H), 1.49 (d, *J* = 6.3 Hz, 3H), 4.89 (q, *J* = 6.3 Hz, 1H), 7.13 ($m_c$, 1H), 7.19-7.24 (m, 2H), 7.41 ($m_c$, 2H), 7.47-7.52 (m, 4H). **$^{13}$C{$^1$H} NMR** (126 MHz, $C_6D_6$): δ/ppm = 14.0 (3C), 14.3 (3C), 26.0 (3C), 27.1 (3C), 27.7, 71.1, 126.2 (2C), 127.35, 127.38 (2C), 127.45 (2C), 129.0 (2C), 140.5, 141.6, 146.4. **29Si{$^1$H} DEPT NMR** (99 MHz, $C_6D6$): δ/ppm = 15.2. **IR** (ATR): $\tilde{v}$/cm$^{-1}$ = 2954, 2919, 2869, 1458, 1193, 1092, 955, 761, 695. **HRMS** (APCI) calculated for $C_{26}H_{41}OSi^+$ [$(M+H)^+$]: 397.2921; found: 397.2926. **Optical Rotation:** $[\alpha]_D^{RT}$ = -43.3 (c 1.0, $CHCl_3$, 85% ee); -24.2 (c 1.0, $CHCl_3$, 47% ee) reported for the *S*-enantiomer.[S3] The enantiomeric excess of (*S*)-**6g** was determined by HPLC analysis on a chiral stationary phase after cleavage of the silyl ether according to **GP 8** (*Daicel* Chiralcel® AD-H column, column temperature 20 °C, mobile phase: *n*-heptane:isopropanol = 95:5, flow rate: 0.8 mL/min, λ = 230 nm): $t_R$ = 16.6 min for

(*S*)-**2g**, $t_R$ = 18.3 min for (*R*)-**2g**.

The analytical data are in accordance with those reported in the literature.[S3]

*6.8 (S)-Tributyl(1-(4-fluorophenyl)ethoxy)silane((S)-6h]*

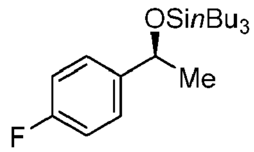

(*S*)-**6h**
$C_{20}H_{35}FOSi$
M = 338.58 g/mol

Prepared according to **GP 7** from benzylic alcohol *rac*-**2h** (28.0 mg, 0.200 mmol, 1.00 equiv) and $n$Bu$_3$SiH (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6h** (66.7 mg, 0.197 mmol, 98%, 81% ee) as a colorless oil.

$\mathbf{R_f}$ = 0.42 (cyclohexane). $^1$**H NMR** (500 MHz, $C_6D_6$): δ/ppm = 0.57-0.69 (m, 6H), 0.86-0.95 (m, 9H), 1.29-1.41 (m, 12H), 1.35 (d, *J* = 6.3 Hz, 3H), 4.73 (q, *J* = 6.3 Hz, 1H), 6.84 ($m_c$, 2H), 7.13 ($m_c$, 2H). $^{13}$**C{$^1$H} NMR** (126 MHz, $C_6D_6$): δ/ppm = 14.0 (3C), 14.2 (3C), 25.9 (3C), 27.0 (3C), 27.6, 70.5, 115.2 (d, $J_{C,F}$ = 22 Hz, 2C), 127.2 (d, $J_{C,F}$ = 8 Hz, 2C), 143.1 (d, $J_{C,F}$ = 4 Hz), 162.4 (d, $J_{C,F}$ = 244 Hz). **29Si{$^1$H} DEPT NMR** (99 MHz, $C_6$D6): δ/ppm = 15.3. **19F NMR** (471 MHz, $C_6$D6): δ/ppm = -116.1-(-116.0) (m). **IR** (ATR): $\tilde{\nu}$/cm$^{-1}$ = 2955, 2920, 2870, 1604, 1508, 1222, 1079, 955, 833. **HRMS** (APCI) calculated for $C_{20}H_{36}FOSi^+$ [(M+H)$^+$]: 339.2514; found: 339.2510. **Optical Rotation:** [α]$D^{RT}$ = -29.9 (c 1.0, $CHCl_3$, 81% ee). The enantiomeric excess of (*S*)-**6h** was determined by HPLC analysis on a chiral stationary phase after cleavage of the silyl ether according to **GP 8** (*Daicel* Chiralcel® OJ-H column, column temperature 20 °C, mobile phase: *n*-heptane:isopropanol = 95:5, flow rate: 0.8 mL/min, λ = 210 nm): $t_R$ = 20.8 min for (*S*)-**2h**, $t_R$ = 22.3 min for (*R*)-**2h**.

*6.9 (S)-Tributyl(1-(4-chlorophenyl)ethoxy)silane[(S)-6i]*

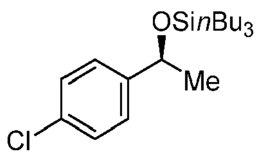

(*S*)-**6i**
$C_{20}H_{35}ClOSi$
M = 355.03 g/mol

Prepared according to **GP 7** from benzylic alcohol *rac*-**2i** (31.3 mg, 0.200 mmol, 1.00 equiv) and $n$Bu$_3$SiH (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6i** (67.9 mg, 0.191 mmol, 96%, 80% ee) as a colorless oil.

$\mathbf{R_f}$ = 0.51 (cyclohexane). $^1$**H NMR** (500 MHz, $C_6D_6$): δ/ppm = 0.56-0.68 (m, 6H), 0.85-0.95 (m, 9H), 1.27-1.42 (m, 12H), 1.32 (d, *J* = 6.3 Hz, 3H), 4.69 (q, *J* = 6.3 Hz, 1H), 7.08 ($m_c$, 2H), 7.15 ($m_c$, 2H). $^{13}$**C{$^1$H} NMR** (126 MHz, $C_6D_6$): δ/ppm = 14.0 (3C), 14.1 (3C), 25.9 (3C), 27.0 (3C), 27.5, 70.5, 127.1 (2C), 128.6 (2C), 132.9, 145.8. **29Si{$^1$H} DEPT NMR** (99 MHz, $C_6$D6): δ/ppm = 15.5. **IR** (ATR): $\tilde{\nu}$/cm$^{-1}$ = 2955, 2920, 2870, 1460, 1196, 1088, 1029, 954, 826, 730. **HRMS** (LIFDI) calculated for $C_{20}H_{36}ClOSi^+$ [(M+H)$^+$]: 355.2218; found: 355.2215. **Optical Rotation:** [α]$_D^{RT}$ = -35.0 (*c* 1.0, $CHCl_3$, 80% ee). The enantiomeric excess of (S)-6i was determined by HPLC analysis on a chiral stationary phase after cleavage of the silyl ether according to **GP 8** (*Daicel* Chiralcel® OJ-H column, column temperature 20 °C, mobile phase: n-heptane:isopropanol = 98:2, flow rate: 0.8 mL/min, λ = 230 nm): $t_R$ = 25.0 min for (*S*)-**2i**, $t_R$ = 28.1 min for (*R*)-**2i**.

*6.10 (S)-(1-(4-Bromophenyl)ethoxy)tributylsilane [(S)-6j]*

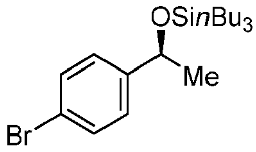

(*S*)-**6j**
$C_{20}H_{35}BrOSi$
M = 399.49 g/mol

Prepared according to **GP 7** from benzylic alcohol *rac*-**2j** (40.2 mg, 0.200 mmol, 1.00 equiv) and $n$$Bu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether **(S)-6j** (78.5 mg, 0.196 mmol, 98%, 81% ee) as a colorless oil.

$R_f$ = 0.50 (cyclohexane). **$^1$H NMR** (500 MHz, $C_6D_6$): δ/ppm = 0.55-0.67 (m, 6H), 0.86-0.94 (m, 9H), 1.28-1.39 (m, 12H), 1.31 (d, *J* = 6.4 Hz, 3H), 4.66 (q, *J* = 6.4 Hz, 1H), 7.01 ($m_c$, 2H), 7.29 ($m_c$, 2H). **$^{13}$C{$^1$H} NMR** (126 MHz, $C_6D_6$): δ/ppm = 14.0 (3C), 14.1 (3C), 25.9 (3C), 27.0 (3C), 27.4, 70.5, 121.0, 127.4 (2C), 131.6 (2C), 146.3. **29Si{$^1$H} DEPT NMR** (99 MHz, $C_6$D6): δ/ppm = 15.6. **IR**(ATR): $\tilde{v}$/cm$^{-1}$ = 2955, 2919, 2869, 1591, 1460, 1195, 1090, 954, 764. **HRMS** (LIFDI) calculated for $C_{20}H_{34}BrOSi^+$ [(M-H)$^+$]: 397.1557; found: 397.1559. **Optical Rotation:** $[\alpha]_D^{RT}$ = - 33.4 (c 1.0, $CHCl_3$, 81% ee). The enantiomeric excess of (*S*)-**6j** was determined by HPLC analysis on a chiral stationary phase after cleavage of the silyl ether according to **GP 8** *(Daicel* Chiralcel® OJ-H column, column temperature 20 °C, mobile phase: n-heptane:isopropanol = 95:5, flow rate: 0.8 mL/min, λ = 230 nm): $t_R$ = 14.2 min for (*S*)-**2j**, $t_R$ = 15.7 min for (*R*)-**2j**.

*6.11 (S)-Tributyl(1-(4-(trifluoromethyl)phenyl)ethoxy)silane ((S)-6k]*

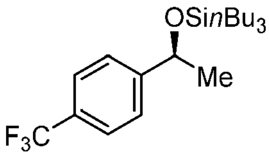

(*S*)-**6k**
$C_{21}H_{35}F_3OSi$
M = 388.59 g/mol

Prepared according to **GP 7** from benzylic alcohol *rac*-**2k** (38.0 mg, 0.200 mmol, 1.00 equiv) and $n$$Bu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (S)-6k (75.5 mg, 0.194 mmol, 97%, 79% ee) as a colorless oil.

$R_f$ = 0.56 (cyclohexane). **$^1$H** NMR (500 MHz, $C_6D_6$): δ/ppm = 0.55-0.68 (m, 6H), 0.85-0.94 (m, 9H), 1.25-1.40 (m, 12H), 1.30 (d, *J*= 6.4 Hz, 3H), 4.71 (q, *J*= 6.4 Hz, 1H), 7.18 (br d, *J*= 8.2 Hz, 2H), 7.39 (br d, *J* = 8.2 Hz, 2H). **$^{13}$C{$^1$H}** NMR (126 MHz, $C_6D_6$): δ/ppm = 14.0 (3C), 14.1 (3C), 25.9 (3C), 27.0 (3C), 27.3, 70.6, 125.1 (q, $J_{C,F}$ = 272 Hz), 125.5 (q, $J_{C,F}$ = 4 Hz, 2C), 125.9 (2C), 129.5 (q, $J_{C,F}$ = 32 Hz), 151.3. **29Si{$^1$H}** DEPT NMR (99 MHz, $C_6$D6): δ/ppm = 16.0. 19F NMR (471 MHz, $C_6$D6): δ/ppm = -62.1. **IR** (ATR): $\tilde{v}$/cm$^{-1}$ = 2954, 2921, 2871, 1619, 1460, 1323, 1124, 1093, 840. **HRMS** (LIFDI) calculated for $C_{21}H_{34}F_3OSi^+$ [(M-H)$^+$]: 387.2326; found: 387.2318. **Optical Rotation:** $[\alpha]_D^{RT}$ = -17.4 (c 1.0, $CHCl_3$, 79% ee). The enantiomeric excess of (*S*)-**6k** was determined by HPLC analysis on a chiral stationary phase after cleavage of the silyl ether according to **GP 8** (*Daicel* Chiralcel® AD-H column, column temperature 20 °C, mobile phase: *n*-heptane:isopropanol = 99.7:0.3, flow rate: 0.8 mL/min, λ = 210 nm): $t_R$ = 69.9 min for (*S*)-**2k**, $t_R$ = 74.4 min for (*R*)-**2k**.

*6.12 tert-Butyl (S)-4-(1-((tributylsiyl)oxy)ethyl)benzoate [(S)-6l]*

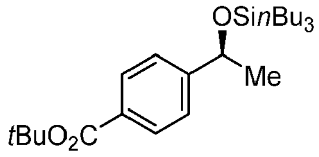

(*S*)-**6l**
$C_{25}H_{44}O_3Si$
M = 420.71 g/mol

Prepared according to **GP 7** from benzylic alcohol *rac*-**2l** (44.5 mg, 0.200 mmol, 1.00 equiv) and $n$Bu$_3$SiH (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6l** (80.2 mg, 0.191 mmol, 95%, 81% ee) as a colorless oil.

$\mathbf{R_f}$ = 0.24 (cyclohexane:*tert*-butyl methyl ether = 100:1). **$^1$H NMR** (500 MHz, $C_6D_6$): δ/ppm = 0.58-0.70 (m, 6H), 0.89 (m$_c$, 9H), 1.28-1.42 (m, 12H), 1.36 (d, *J* = 6.6 Hz, 3H), 1.46 (s, 9H), 4.79 (q, *J* = 6.4 Hz, 1H), 7.33 (d, *J* = 8.2 Hz, 2H), 8.19 (d, *J* = 8.2 Hz, 2H). **$^{13}$C{$^1$H} NMR** (126 MHz, $C_6D_6$): δ/ppm = 14.0 (3C), 14.2 (3C), 25.9 (3C), 27.0 (3C), 27.4, 28.2 (3C), 70.9, 80.3, 125.4 (2C), 130.0 (2C), 131.5, 151.9, 165.5. **$^1$H/29Si HMQC NMR** (500/99 MHz, optimized for *J* = 7 Hz, $C_6D_6$): δ/ppm = (0.58-0.70, 1.28-1.42, 4.79)/15.3. **IR** (ATR): $\tilde{\nu}$/cm$^{-1}$ = 2956, 2921, 2870, 1713, 1367, 1287, 1164, 1091, 953, 768. **HRMS** (APCI) calculated for $C_{25}H_{44}O_3Si^+$ [M$^+$]: 420.3054; found: 420.3058. **Optical Rotation:** $[\alpha]_D^{RT}$ = -31.8 (c 1.0, $CHCl_3$, 81% ee). The enantiomeric excess of (*S*)-**6l** was determined by HPLC analysis on a chiral stationary phase after cleavage of the silyl ether according to **GP 8** (*Daicel* Chiralcel® AS-H column, column temperature 20 °C, mobile phase: *n*-heptane:isopropanol = 90:10, flow rate: 0.8 mL/min, λ = 230 nm): $t_R$ = 6.8 min for (*R*)-**2l**, $t_R$ = 8.4 min for (*S*)-**2l**.

*6.13 (S)-Tributyl(1-(4-methoxyphenyl)ethoxy)silane((S)-6m]*

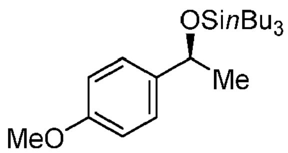

(*S*)-**6m**
$C_{21}H_{38}O_2Si$
M = 350.62 g/mol

Prepared according to **GP 7** from benzylic alcohol *rac*-**2m** (30.4 mg, 0.200 mmol, 1.00 equiv) and $n$Bu$_3$SiH (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (S)-6m (67.2 mg, 0.192 mmol, 96%, 83% ee) as a colorless oil.

$\mathbf{R_f}$ = 0.08 (cyclohexane). **$^1$H NMR** (500 MHz, $C_6D_6$): δ/ppm = 0.63-0.73 (m, 6H), 0.92 (t, *J* = 7.2 Hz, 9H), 1.31-1.46 (m, 12H), 1.47 (d, *J* = 6.3 Hz, 3H), 3.32 (s, 3H), 4.84 (q, *J* = 6.3 Hz, 1H), 6.82 (m$_c$, 2H), 7.29 (m$_c$, 2H). **$^{13}$C{$^1$H} NMR** (126 MHz, $C_6D_6$): δ/ppm = 14.0 (3C), 14.3 (3C), 26.0 (3C), 27.1 (3C), 27.8, 54.8, 70.9, 114.0 (2C), 126.8 (2C), 139.5, 159.3. **29Si{$^1$H} DEPT NMR** (99 MHz, $C_6D_6$): δ/ppm = 14.7. **IR** (ATR): $\tilde{\nu}$/cm$^{-1}$ = 2954, 2919, 2869, 1612, 1510, 1243, 1089, 829, 730. **HRMS** (APCI) calculated for $C_{21}H_{39}O_2Si^+$ [(M+H)$^+$]: 351.2714; found: 351.2720. **Optical Rotation:** $[\alpha]D^{RT}$ = -34.4 (*c* 1.0, $CHCl_3$, 83% ee). The enantiomeric excess of (*S*)-**6m** was determined by HPLC analysis on a chiral stationary phase after cleavage of the silyl ether according to **GP 8** (*Daicel* Chiralcel® OJ-H column, column temperature 20 °C, mobile phase: *n*-heptane:isopropanol = 98:2, flow rate: 0.8 mL/min, λ = 230 nm): $t_R$ = 61.8 min for (S)-**2m**, $t_R$ = 67.8 min for (*R*)-**2m**.

*6.14 (S)-Tributyl(1-(3,5-dimethylohenyl)ethoxy)silane [(S)-6n]*

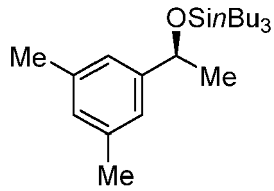

(*S*)-**6n**
$C_{22}H_{40}OSi$
M = 348.65 g/mol

Prepared according to **GP 7** from benzylic alcohol *rac*-**2n** (30.0 mg, 0.200 mmol, 1.00 equiv) and $nBu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6n** (68.4 mg, 0.196 mmol, 98%, 93% ee) as a colorless oil.

$\mathbf{R_f}$ = 0.35 (cyclohexane). **$^1$H NMR** (500 MHz, $C_6D_6$): δ/ppm = 0.63-0.74 (m, 6H), 0.91 (t, *J* = 7.2 Hz, 9H), 1.31-1.46 (m, 12H), 1.50 (d, *J* = 6.3 Hz, 3H), 2.20 (s, 6H), 4.85 (q, *J* = 6.3 Hz, 1H), 6.76 (br s, 1H), 7.06 (br s, 2H). **$^{13}$C{$^1$H} NMR** (126 MHz, $C_6D_6$): δ/ppm = 14.0 (3C), 14.3 (3C), 21.5 (2C), 26.0 (3C), 27.1 (3C), 27.8, 71.4, 123.7 (2C), 128.9, 137.7 (2C), 147.3. **29Si{$^1$H} DEPT NMR** (99 MHz, $C_6D_6$): δ/ppm = 14.8. **IR** (ATR): $\tilde{\nu}$/cm$^{-1}$ = 2955, 2919, 2869, 1606, 1459, 1091, 964, 891, 704. **HRMS** (APCI) calculated for $C_{22}H_{41}OSi^+$ [(M+H)$^+$]: 349.2921; found: 349.2929. **Optical Rotation:** $[\alpha]_D^{RT}$ = -37.5 (*c* 1.0, $CHCl_3$, 93% ee); -30.7 (c 1.4, $CHCl_3$, 73% ee) reported for the *S*-enantiomer.[S3] The enantiomeric excess of (*S*)-**6n** was determined by HPLC analysis on a chiral stationary phase after cleavage of the silyl ether according to **GP 8** *(Daicel* Chiralcel® OD-H column, column temperature 20 °C, mobile phase: *n*-heptane:isopropanol = 99:1, flow rate: 0.8 mL/min, λ = 230 nm): $t_R$ = 21.8 min for (R)-**2n**, $t_R$ = 23.6 min for (*S*)-**2n**.

The analytical data are in accordance with those reported in the literature.[S3]

*6.15 (S)-(1-(3,5-Bis(trifluoromethyl)phenyl)ethoxy)tributylsilane [(S)-6o]*

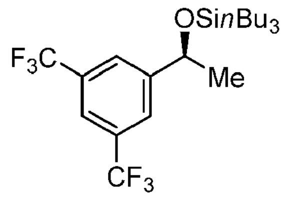

(*S*)-**6o**
$C_{22}H_{34}F_6OSi$
M = 456.59 g/mol

Prepared according to **GP 7** from benzylic alcohol *rac*-**2o** (51.6 mg, 0.200 mmol, 1.00 equiv) and $nBu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6o** (82.0 mg, 0.179 mmol, 90%, 93% ee) as a colorless oil.

$\mathbf{R_f}$ = 0.64 (cyclohexane). **$^1$H NMR** (500 MHz, $C_6D_6$): δ/ppm = 0.49-0.63 (m, 6H), 0.89 ($m_c$, 9H), 1.14 (d, *J* = 6.4 Hz, 3H), 1.23-1.37 (m, 12H), 4.59 (q, *J* = 6.4 Hz, 1H), 7.69 (br s, 1H), 7.74 (br s, 2H). **$^{13}$C{$^1$H} NMR** (126 MHz, $C_6D_6$): δ/ppm = 13.9 (3C), 14.0 (3C), 25.8 (3C), 26.9 (4C), 69.8, 121.0 (sept, $J_{C,F}$ = 4 Hz), 124.1 (q, $J_{C,F}$ = 272 Hz, 2C), 125.9 (q, $J_{C,F}$ = 3 Hz, 2C), 131.9 (q, $J_{C,F}$ = 33 Hz, 2C), 150.2. **$^1$H/29Si HMQC NMR** (500/99 MHz, optimized for *J* = 7 Hz, $C_6D_6$): δ/ppm = (0.49-0.63, 1.23-1.37, 4.59)/17.4. **$^{19}$F NMR** (471 MHz, $C_6D_6$): δ/ppm = -62.6. **IR** (ATR): $\tilde{\nu}$/cm$^{-1}$ = 2958, 2922, 2872, 1379, 1275, 1171, 1130, 964, 895, 707. **HRMS** (LIFDI) calculated for $C_{22}H_{35}F_6OSi^+$ [(M+H)$^+$]: 457.2356; found: 457.2353. **Optical Rotation:** $[\alpha]_D^{RT}$ = -27.4 (c 1.0, $CHCl_3$, 93% ee); -26.3 (*c* 1.2, $CHCl_3$, 86% ee) reported for the S-enantiomer.[S3] The enantiomeric excess of (*S*)-**6o** was determined by HPLC analysis on a chiral stationary phase

after cleavage of the silyl ether according to **GP 8** (*Daicel* Chiralcel® OD-H column, column temperature 20 °C, mobile phase: n-heptane:isopropanol = 98:2, flow rate: 0.8 mL/min, λ = 210 nm): $t_R$ = 10.7 min for (*S*)-**2o**, $t_R$ = 11.9 min for (*R*)-**2o**.

The analytical data are in accordance with those reported in the literature.[S3]

*6.16 (S)-Tributyl(1-(3,5-dimethoxyohenyl)ethoxy)silane [(S)-6p]*

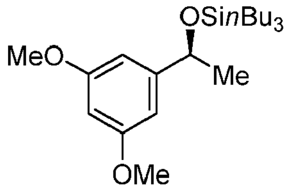

(*S*)-**6p**
$C_{22}H_{40}O_3Si$
M = 380.64 g/mol

Prepared according to **GP 7** from benzylic alcohol *rac*-**2p** (36.4 mg, 0.200 mmol, 1.00 equiv) and *n*$Bu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6p** (74.0 mg, 0.194 mmol, 97%, 96% ee) as a colorless oil.

$R_f$ = 0.40 (cyclohexane:*tert*-butyl methyl ether = 50:1). **$^1$H NMR** (500 MHz, $C_6D_6$): δ/ppm = 0.64-0.75 (m, 6H), 0.91 (t, *J* = 7.2 Hz, 9H), 1.31-1.46 (m, 12H), 1.49 (d, *J* = 6.3 Hz, 3H), 3.40 (s, 6H), 4.84 (q, *J* = 6.3 Hz, 1H), 6.48 (t, *J* = 2.3 Hz, 1H), 6.75 (d, *J* = 2.3 Hz, 2H). **$^{13}$C{$^1$H} NMR** (126 MHz, $C_6D_6$): δ/ppm = 14.0 (3C), 14.3 (3C), 26.0 (3C), 27.1 (3C), 27.7, 54.9 (2C), 71.4, 99.4, 103.8 (2C), 150.0, 161.6 (2C). **29Si{$^1$H} DEPT NMR** (99 MHz, $C_6D_6$): δ/ppm = 15.2. **IR** (ATR): $\tilde{v}$/cm$^{-1}$ = 2954, 2920, 2869, 1596, 1459, 1203, 1151, 1055, 696. **HRMS** (APCI) calculated for $C_{22}H_{41}O_3Si^+$ [(M+H)$^+$]: 381.2819; found: 381.2829. **Optical Rotation:** $[\alpha]_D^{RT}$ = -37.9 (c 1.0, $CHCl_3$, 92% ee); -40.7 (*c* 0.6, $CHCl_3$, 91% ee) reported for the S-enantiomer.[S3] The enantiomeric excess of (*S*)-**6p** was determined by HPLC analysis on a chiral stationary phase after cleavage of the silyl ether according to **GP 8** *(Daicel* Chiralcel® OD-H column, column temperature 20 °C, mobile phase: *n*-heptane:isopropanol = 90:10, flow rate: 0.8 mL/min, λ = 280 nm): $t_R$ = 11.7 min for (*R*)-**2p**, $t_R$ = 16.8 min for (*S*)-**2p**.

The analytical data are in accordance with those reported in the literature.[S3]

*6.17 (S)-Tributyl(1-(2,6-dimethylphenyl)ethoxy)silane [(S)-6q]*

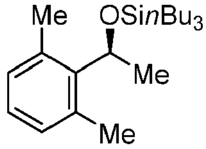

(*S*)-**6q**
$C_{22}H_{40}OSi$
M = 348.65 g/mol

Prepared according to **GP 7** from benzylic alcohol *rac*-**2q** (30.0 mg, 0.200 mmol, 1.00 equiv) and *n*$Bu_3SiH$ (44 mg, 0.22 mmol, 1.1 equiv). The reaction mixture was stirred at room tempe-rature for 48 h. Flash column chromatography on silica gel using cyclohexane:*tert*-butyl methyl ether (100:0 → 50:1 → 25:1) as the eluent afforded silyl ether (*S*)-**6q** (61.6 mg, 0.177 mmol, 88%, 36% ee) as a colorless oil.

$R_f$ = 0.55 (cyclohexane). **$^1$H NMR** (500 MHz, $C_6D_6$): δ/ppm = 0.58-0.70 (m, 6H), 0.86-0.92 (m, 9H), 1.26-1.42 (m, 12H), 1.48 (d, *J* = 6.6 Hz, 3H), 2.45 (br s, 6H), 5.34 (q, *J* = 6.6 Hz, 1H), 6.89-6.95 (m, 2H), 6.95-7.00 (m, 1H). **$^{13}$C{$^1$H} NMR** (126 MHz, $C_6D_6$): δ/ppm = 14.0 (3C), 14.1 (3C), 20.8 (2C), 23.3, 25.9 (3C), 27.1 (3C), 68.2, 126.9, 129.7 (2C), 141.8. **$^1$H/13C HMBC NMR** (500/126 MHz, $C_6D_6$): δ/ppm = (2.45, 5.34)/135.6 (2C). **$^1$H/29Si HMQC NMR** (500/99 MHz, optimized for *J* = 7 Hz, $C_6D_6$): δ/ppm = (0.58-0.70, 1.26-1.42, 5.34)/14.6. **IR** (ATR): $\tilde{v}$/cm$^{-1}$ = 2955, 2919, 2870, 1460,

1375, 1194, 1077, 953, 883, 765. **HRMS** (LIFDI) calculated for $C_{22}H_{41}OSi^+$ [(M+H)+]: 349.2921; found: 349.2923. **Optical Rotation:** $[\alpha]_D^{RT}$ = -12.3 (c 1.0, $CHCl_3$, 36% ee); -30.3 (c 1.7, $CHCl_3$, 89% ee) reported for the *S*-enantiomer.[S3] The enantiomeric excess of (*S*)-**6q** was determined by HPLC analysis on a chiral stationary phase after cleavage of the silyl ether according to **GP 8** (*Daicel* Chiralcel® OD-H column, column temperature 20 °C, mobile phase: *n*-heptane:isopropanol = 95:5, flow rate: 0.8 mL/min, λ = 230 nm): $t_R$ = 10.9 min for (S)-**2q**, $t_R$ = 13.5 min for (*R*)-**2q**.

The analytical data are in accordance with those reported in the literature.[S3]

*6.18 (S)-Tributyl(1-(naphthalen-1-yl)ethoxy)silane [(S)-6r]*

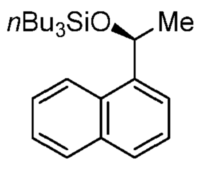

(*S*)-**6r**
$C_{24}H_{38}OSi$
M = 370.65 g/mol

Prepared according to **GP 7** from benzylic alcohol *rac*-**2r** (34.4 mg, 0.200 mmol, 1.00 equiv) and $n\mathrm{Bu_3SiH}$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6r** (72.2 mg, 0.195 mmol, 97%, 84% ee) as a colorless oil.

$\mathbf{R_f}$ = 0.42 (cyclohexane). **$^1$H NMR** (500 MHz, $C_6D_6$): δ/ppm = 0.62-0.74 (m, 6H), 0.85 (t, *J* = 7.3 Hz, 9H), 1.25-1.45 (m, 12H), 1.63 (d, *J* = 6.4 Hz, 3H), 5.64 (q, *J* = 6.4 Hz, 1H), 7.26 (ddd, J = 8.1 Hz, *J* = 6.9 Hz, *J* = 1.2 Hz, 1H), 7.31-7.37 (m, 2H), 7.57 (d, *J* = 8.2 Hz, 1H), 7.67 (d, *J* = 8.2 Hz, 1H), 7.83 (d, *J* = 7.2 Hz, 1H), 8.15 (d, *J* = 8.6 Hz, 1H). **$^{13}$C{$^1$H} NMR** (126 MHz, $C_6D_6$): δ/ppm = 14.0 (3C), 14.2 (3C), 25.9 (3C), 27.0 (4C), 69.0, 123.3, 123.7, 125.5, 125.8, 126.0, 129.3, 130.6, 134.5, 143.0. **$^1$H/13C HSQC NMR** (500/126 MHz, $C_6D_6$): δ/ppm = 7.57/127.9. **29Si{$^1$H} DEPT NMR** (99 MHz, $C_6D_6$): δ/ppm = 15.5. **IR** (ATR): $\tilde{\nu}$/cm$^{-1}$ = 2954, 2919, 2869, 1459, 1374, 1170, 1092, 946, 773. **HRMS** (APCI) calculated for $C_{24}H_{39}OSi^+$ [(M+H)+]: 371.2765; found: 371.2766. **Optical Rotation:** $[\alpha]_D^{RT}$ = -32.2 (c 1.0, $CHCl_3$, 84% ee); -25.5 (c 1.1, $CHCl_3$, 70% ee) reported for the S-enantiomer.[S3] The enantiomeric excess of (*S*)-**6r** was determined by HPLC analysis on a chiral stationary phase after cleavage of the silyl ether according to **GP 8** *(Daicel* Chiralcel® OD-H column, column temperature 20 °C, mobile phase: *n*-heptane:isopropanol = 90:10, flow rate: 0.8 mL/min, λ = 280 nm): $t_R$ = 12.3 min for (*S*)-**2r**, $t_R$ = 19.5 min for (*R*)-**2r.**

The analytical data are in accordance with those reported in the literature.[S3]

*6.19 (S)-Tributyl(1-(naphthalen-2-yl)ethoxy)silane [(S)-6s]*

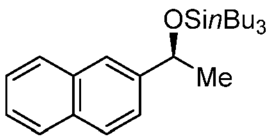

(*S*)-**6s**
$C_{24}H_{38}OSi$
M = 370.65 g/mol

Prepared according to **GP 7** from benzylic alcohol *rac*-**2s** (34.4 mg, 0.200 mmol, 1.00 equiv) and $n\mathrm{Bu_3SiH}$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6s** (63.3 mg, 0.171 mmol, 85%, 90% ee) as a colorless oil.

$\mathbf{R_f}$ = 0.33 (cyclohexane). **$^1$H NMR** (500 MHz, $C_6D_6$): δ/ppm = 0.63-0.75 (m, 6H), 0.87 (t, *J* = 7.2 Hz, 9H), 1.26-1.47 (m, 12H), 1.53 (d, *J* = 6.4 Hz, 3H), 5.01 (q, *J* = 6.3 Hz, 1H), 7.26 ($m_c$, 2H), 7.53 (dd, *J* = 8.5 Hz, *J* = 1.7 Hz,

1H), 7.63 (br d, $J \approx 8.1$ Hz, 1H), 7.67 (d, $J = 8.5$ Hz, 1H), 7.71 (br d, $J \approx 8.0$ Hz, 1H), 7.79 (br s, 1H). **$^{13}$C{$^1$H} NMR** (126 MHz, $C_6D_6$): δ/ppm = 14.0 (3C), 14.3 (3C), 26.0 (3C), 27.0 (3C), 27.6, 71.4, 124.2, 124.4, 125.8, 126.3, 128.0, 128.2, 128.4, 133.5, 134.0, 144.8. **29Si{$^1$H} DEPT NMR** (99 MHz, $C_6D_6$): δ/ppm = 15.3. **IR** (ATR): $\tilde{\nu}$/cm$^{-1}$ = 2954, 2919, 2869, 1459, 1373, 1193, 1077, 742. **HRMS** (LIFDI) calculated for $C_{24}H_{38}OSi^+$ [M$^+$]: 370.2686; found: 370.2690. **Optical Rotation:** $[\alpha]_D^{RT}$ = -42.5 (c 1.0, $CHCl_3$, 90% ee); -32.2 (*c* 0.8, $CHCl_3$, 74% ee) reported for the S-enantiomer.[S3] The enantiomeric excess of (*S*)-**6s** was determined by HPLC analysis on a chiral stationary phase after cleavage of the silyl ether according to **GP 8** *(Daicel* Chiralcel® OJ-H column, column temperature 20 °C, mobile phase: *n*-heptane:isopropanol = 95:5, flow rate: 1.0 mL/min, λ = 280 nm): $t_R$ = 24.8 min for (*S*)-**2s**, $t_R$ = 33.5 min for (*R*)-**2s**.

The analytical data are in accordance with those reported in the literature.[S3]

*6.20 (S)-Tributyl(1-(furan-2-yl)ethoxy)silane [(S)-6t]*

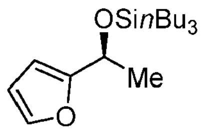

(*S*)-**6t**
$C_{18}H_{34}O_2Si$
M = 310.55 g/mol

Prepared according to **GP 7** from benzylic alcohol *rac*-**2t** (22.4 mg, 0.200 mmol, 1.00 equiv) and $n$Bu$_3$SiH (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6t** (59.8 mg, 0.193 mmol, 96%, 78% ee) as a colorless oil.

**$R_f$** = 0.25 (cyclohexane). **$^1$H NMR** (500 MHz, $C_6D_6$): δ/ppm = 0.64-0.70 (m, 6H), 0.92 (t, $J = 7.1$ Hz, 9H), 1.32-1.45 (m, 12H), 1.50 (d, $J = 6.5$ Hz, 3H), 4.88 (q, $J = 6.4$ Hz, 1H), 6.08 (dd, $J = 3.2$ Hz, $J = 1.8$ Hz, 1H), 6.11 (ddd, $J = 3.2$ Hz, $J = 0.8$ Hz, $J = 0.8$ Hz, 1H), 7.09 (dd, $J = 1.8$ Hz, $J = 0.9$ Hz, 1H). **$^{13}$C{$^1$H} NMR** (126 MHz, $C_6D_6$): δ/ppm = 14.0 (3C), 14.2 (3C), 23.4, 25.9 (3C), 27.1 (3C), 64.7, 105.2, 110.3, 141.4, 158.9. **$^1$H/29Si HMQC NMR** (500/99 MHz, optimized for $J = 7$ Hz, $C_6D_6$): δ/ppm = (0.64-0.70, 1.32-1.45, 4.87)/15.4. **IR** (ATR): $\tilde{\nu}$/cm$^{-1}$ = 2955, 2920, 2870, 1459, 1193, 1076, 1002, 959, 883, 730. **HRMS** (LIFDI) calculated for $C_{18}H_{33}O_2Si^+$ [(M-H)$^+$]: 309.2244; found: 309.2244. **Optical Rotation:** $[\alpha]D^{RT}$ = - 26.9 (c 1.0, $CHCl_3$, 78% ee). The enantiomeric excess of (*S*)-**6t** was determined by HPLC analysis on a chiral stationary phase after cleavage of the silyl ether according to **GP 8** *(Daicel* Chiralcel® OJ-H column, column temperature 20 °C, mobile phase: *n*-heptane:isopropanol = 97:3, flow rate: 1.0 mL/min, λ = 230 nm): $t_R$ = 14.4 min for (*S*)-**2t**, $t_R$ = 16.4 min for (*R*)-**2t**.

*6.21 (S)-Tributyl(1-(thiophen-2-yl)ethoxy)silane [(S)-6u}*

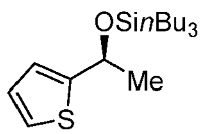

(*S*)-**6u**
$C_{18}H_{34}OSSi$
M = 326.61 g/mol

Prepared according to **GP 7** from benzylic alcohol *rac*-**2u** (25.6 mg, 0.200 mmol, 1.00 equiv) and $n$Bu$_3$SiH (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6u** (61.1 mg, 0.187 mmol, 94%, 88% ee) as a colorless oil.

**$R_f$** = 0.37 (cyclohexane). **$^1$H NMR** (500 MHz, $C_6D_6$): δ/ppm = 0.65-0.71 (m, 6H), 0.92 (t, $J = 7.2$ Hz, 9H), 1.32-1.46 (m, 12H), 1.50 (d, $J = 6.3$ Hz, 3H), 5.07 (qd, $J = 6.3$ Hz, $J = 0.8$ Hz, 1H), 6.73 (dd, $J = 5.0$ Hz, $J = 3.5$ Hz, 1H), 6.77 (ddd, $J = 3.5$ Hz, $J = 1.2$ Hz, $J = 0.8$ Hz, 1H), 6.86 (dd, $J = 5.0$ Hz, $J = 1.2$ Hz, 1H). **$^{13}$C{$^1$H} NMR** (126 MHz, $C_6D_6$):

δ/ppm = 14.0 (3C), 14.2 (3C), 25.9 (3C), 27.1 (3C), 27.7, 67.4, 122.4, 123.9, 126.5, 151.9. **1H/29Si HMQC NMR** (500/99 MHz, optimized for *J* = 7 Hz, $C_6D_6$): δ/ppm = (0.65-0.71, 1.32-1.46, 5.07)/15.7. **IR** (ATR): ṽ/cm$^{-1}$ = 2955, 2919, 2869, 1459, 1371, 1190, 1077, 782, 692. **HRMS** (APCI) calculated for $C_{18}H_{35}OSSi^+$ [$(M+H)^+$]: 327.2172; found: 327.2175. **Optical Rotation:** $[\alpha]_D^{RT}$ = -27.7 (c 1.0, $CHCl_3$, 88% ee). The enantiomeric excess of (*S*)-**6u** was determined by HPLC analysis on a chiral stationary phase after cleavage of the silyl ether according to **GP 8** *(Daicel* Chiralcel® OJ-H column, column temperature 20 °C, mobile phase: *n*-heptane:isopropanol = 98:2, flow rate: 1.0 mL/min, λ = 230 nm): $t_R$ = 22.9 min for (*S*)-**2u**, $t_R$ = 30.6 min for (*R*)-**2u**.

*6.22 (S)-4-(1-((Tributylsilyl)oxy)ethyl)pyridine [(S)-6v]*

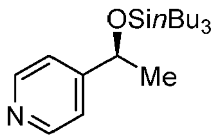

(*S*)-**6v**
$C_{19}H_{35}NOSi$
M = 321.58 g/mol

Prepared according to **GP 7** from benzylic alcohol *rac*-**2v** (24.6 mg, 0.200 mmol, 1.00 equiv) and $nBu_3SiH$ (44 mg, 0.22 mmol, 1.1 equiv). The reaction mixture was stirred at room tempe-rature for 48 h. Flash column chromatography on silica gel using cyclohexane:*tert*-butyl methyl ether (100:0 → 10:1 → 5:1) as the eluent afforded silyl ether (*S*)-**6v** (55.2 mg, 0.172 mmol, 88%, 84% ee) as a colorless oil.

$\mathbf{R_f}$ = 0.15 (cyclohexane:*tert*-butyl methyl ether = 10:1). **1H NMR** (500 MHz, $C_6D_6$): δ/ppm = 0.54-0.68 (m, 6H), 0.89 ($m_c$, 9H), 1.26 (d, *J* = 6.4 Hz, 3H), 1.28-1.41 (m, 12H), 4.62 (q, *J* = 6.4 Hz, 1H), 7.07 (br s, 2H), 8.72 (br s, 2H). **13C{1H} NMR** (126 MHz, $C_6D_6$): δ/ppm = 14.0 (3C), 14.1 (3C), 25.8 (3C), 26.8, 27.0 (3C), 69.9, 150.3 (2C), 155.0. **1H/13C HMBC NMR** (500/126 MHz, $C_6D_6$) = 4.62/121.0 (2C). **1H/29Si HMQC NMR** (500/99 MHz, optimized for *J* = 7 Hz, $C_6D_6$): δ/ppm = (0.54-0.68, 1.28-1.41, 4.62)/16.2. **IR** (ATR): ṽ/cm$^{-1}$ = 2955, 2920, 2870, 1599, 1408, 1195, 1078, 954, 884, 795. **HRMS** (LIFDI) calculated for $C_{19}H_{36}NOSi^+$ [$(M+H)^+$]: 322.2561; found: 322.2556. **Optical Rotation:** $[\alpha]D^{RT}$ = -27.3 (*c* 1.0, $CHCl_3$, 84% ee). The enantiomeric excess of (*S*)-**6v** was determined by HPLC analysis on a chiral stationary phase after cleavage of the silyl ether according to **GP 8** *(Daicel* Chiralcel® OD-H column, column temperature 20 °C, mobile phase: *n*-heptane:isopropanol = 95:5, flow rate: 0.8 mL/min, λ = 250 nm): $t_R$ = 46.8 min for (*S*)-**2v**, $t_R$ = 54.8 min for (*R*)-**2v**.

*6.23 (S)-Tributyl(1-phenylpropoxy)silane [(S)-6w]*

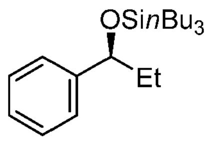

(*S*)-**6w**
$C_{21}H_{38}OSi$
M = 334.62 g/mol

Prepared according to **GP 7** from benzylic alcohol *rac*-**2w** (27.2 mg, 0.200 mmol, 1.00 equiv) and $nBu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**6w** (65.8 mg, 0.197 mmol, 98%, 85% ee) as a colorless oil.

$\mathbf{R_f}$ = 0.48 (cyclohexane). **1H NMR** (500 MHz, $C_6D_6$): δ/ppm = 0.58-0.70 (m, 6H), 0.84-0.96 (m, 9H), 0.90 (dd, *J* = 7.4 Hz, *J* = 7.4 Hz, 3H), 1.27-1.44 (m, 12H), 1.66-1.75 (m, 1H), 1.77-1.87 (m, 1H), 4.60 (dd, *J* = 6.2 Hz, *J* = 6.2 Hz, 1H), 7.08 ($m_c$, 1H), 7.18 ($m_c$, 2H), 7.29-7.34 (m, 2H). **13C{1H} NMR** (126 MHz, $C_6D_6$): δ/ppm = 10.2, 14.0 (3C), 14.3 (3C), 25.9 (3C), 27.1 (3C), 34.1, 76.7, 126.4 (2C), 127.3, 128.3 (2C), 146.0. **29Si{1H} DEPT NMR** (99 MHz, $C_6D_6$):

δ/ppm = 15.1. IR (ATR): ṽ/cm$^{-1}$ = 2955, 2919, 2870, 1454, 1195, 1054, 1010, 885, 697. **HRMS** (LIFDI) calculated for $C_{21}H_{39}OSi^+$ [(M+H)$^+$]: 335.2765; found: 335.2763. **Optical Rotation:** $[\alpha]_D^{RT}$ = -38.3 (c 1.0, $CHCl_3$, 85% ee). The enantiomeric excess of (*S*)-**6w** was determined by HPLC analysis on a chiral stationary phase after cleavage of the silyl ether according to **GP 8** *(Daicel* Chiralcel® OD-H column, column temperature 20 °C, mobile phase: *n*-heptane:isopropanol = 95:5, flow rate: 0.8 mL/min, λ = 210 nm): $t_R$ = 10.8 min for (*R*)-**2w**, $t_R$ = 11.5 min for (*S*)-**2w**.

*6.24 (S)-Tributyl(1,2-diphenylethoxy)silane [(S)-6x]*

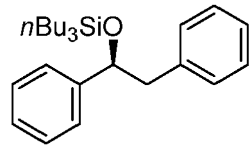

(*S*)-**6x**
$C_{26}H_{40}OSi$
M = 396.69 g/mol

Prepared according to **GP 7** from benzylic alcohol *rac*-**2x** (39.7 mg, 0.200 mmol, 1.00 equiv) and $nBu_3SiH$ (44 mg, 0.22 mmol, 1.1 equiv). The reaction mixture was stirred at room tempe-rature for 48 h. Flash column chromatography on silica gel using cyclohexane:*tert*-butyl methyl ether (100:0 → 50:1 → 25:1) as the eluent afforded silyl ether (*S*)-**6x** (75.2 mg, 0.190 mmol, 95%, 81% ee) as a colorless oil.

$\mathbf{R_f}$ = 0.37 (cyclohexane). **$^1$H NMR** (500 MHz, $C_6D_6$): δ/ppm = 0.45-0.53 (m, 6H), 0.87 (t, *J* = 7.0 Hz, 9H), 1.17-1.32 (m, 12H), 2.89 (dd, *J* = 13.2 Hz, *J* = 4.7 Hz, 1H), 3.01 (dd, *J* = 13.2 Hz, *J* = 8.2 Hz, 1H), 4.83 (dd, *J* = 8.1 Hz, *J* = 4.7 Hz, 1H), 7.04-7.09 (m, 2H), 7.10-7.18 (m, 6H), 7.26-7.30 (m, 2H). **$^{13}$C{$^1$H} NMR** (126 MHz, $C_6D_6$): δ/ppm = 14.0 (3C), 14.1 (3C), 25.7 (3C), 27.1 (3C), 48.4, 77.2, 126.4 (2C), 126.5, 127.5, 128.3 (2C), 128.4 (2C), 130.3 (2C), 139.3, 145.7. **29Si{$^1$H} DEPT NMR** (99 MHz, $C_6D_6$): δ/ppm = 15.8. **IR** (ATR): ṽ/cm$^{-1}$ = 2953, 2918, 2869, 1453, 1194, 1067, 938, 756, 696. **HRMS** (LIFDI) calculated for $C_{26}H_{39}OSi^+$ [(M-H)$^+$]: 395.2765; found: 395.2772. **Optical Rotation:** [α]$D^{RT}$ = -16.3 (c 1.0, $CHCl_3$, 81% ee); -18.3 (c 0.9, $CHCl_3$, 71% ee) reported for the *S*-enantiomer.[S3] The enantiomeric excess of (*S*)-**6x** was determined by HPLC analysis on a chiral stationary phase after cleavage of the silyl ether according to **GP 8** *(Daicel* Chiralcel® OD-H column, column temperature 20 °C, mobile phase: *n*-heptane:isopropanol = 95:5, flow rate: 0.8 mL/min, λ = 210 nm): $t_R$ = 15.7 min for (*R*)-**2x**, $t_R$ = 18.4 min for (*S*)-**2x**.

The analytical data are in accordance with those reported in the literature.[S3]

*6.25 (S)-Tributyl(2-methyl-1-Dhenylpropoxy)silane [(S)-6y]*

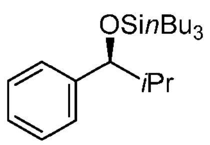

(*S*)-**6y**
$C_{22}H_{40}OSi$
M = 348.65 g/mol

Prepared according to **GP 7** from benzylic alcohol *rac*-**2y** (30.0 mg, 0.200 mmol, 1.00 equiv) and $nBu_3SiH$ (44 mg, 0.22 mmol, 1.1 equiv). The reaction mixture was stirred at room tempe-rature for 84 h. Flash column chromatography on silica gel using cyclohexane:*tert*-butyl methyl ether (100:0 → 50:1 → 25:1) as the eluent afforded silyl ether (*S*)-**6y** (66.2 mg, 0.190 mmol, 95%, 52% ee) as a colorless oil.

$\mathbf{R_f}$ = 0.67 (cyclohexane). **$^1$H NMR** (500 MHz, $C_6D_6$): δ/ppm = 0.56-0.68 (m, 6H), 0.83 (d, *J* = 6.8 Hz, 3H), 0.90 (t, *J* = 7.1 Hz, 9H), 1.04 (d, *J* = 6.7 Hz, 3H), 1.26-1.43 (m, 12H), 1.93 ($m_c$, 1H), 4.37 (d, *J* = 6.3 Hz, 1H), 7.08 ($m_c$, 1H), 7.15-7.20 (m, 2H), 7.26-7.31 (m, 2H). **$^{13}$C{$^1$H}** NMR (126 MHz, $C_6D_6$): δ/ppm = 14.0 (3C), 14.3 (3C), 18.6, 19.2, 25.9 (3C), 27.1 (3C), 37.0, 80.9, 127.2 (2C), 127.3, 144.8. **$^1$H/13C HSQC NMR** (500/126 MHz, $C_6D_6$): 7.15-7.20/128.0 (2C).

**29Si{1H} DEPT NMR** (99 MHz, $C_6D_6$): δ/ppm = 15.1. **IR** (ATR): ṽ/$cm^{-1}$ = 2955, 2920, 2869, 1454, 1378, 1195, 1058, 886, 699. **HRMS** (LIFDI) calculated for $C_{22}H_{41}OSi^+$ [$(M+H)^+$]: 349.2921; found: 349.2921. **Optical Rotation:** $[\alpha]_D^{RT}$ = -21.0 (c 1.0, $CHCl_3$, 52% ee). The enantiomeric excess of (*S*)-**6y** was determined by HPLC analysis on a chiral stationary phase after cleavage of the silyl ether according to **GP 8** *(Daicel* Chiralcel® OD-H column, column temperature 20 °C, mobile phase: *n*-heptane:isopropanol = 98:2, flow rate: 1.0 mL/min, λ = 210 nm): $t_R$ = 11.8 min for (*S*)-**2y**, $t_R$ = 13.7 min for (*R*)-**2y**.

*6.26 tert-Butyl (S)-methyl(3-(thiophen-2-yl)-3-((tributylsilyl)oxy)propyl)carbamate [(S)-9]*

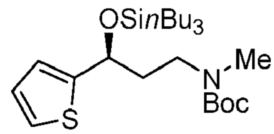

(*S*)-**9**
$C_{25}H_{47}NO_3SSi$
M = 469.80 g/mol

Prepared according to **GP 7** from benzylic alcohol *rac*-**7** (54.3 mg, 0.200 mmol, 1.00 equiv) and $nBu_3SiH$ (44 mg, 0.22 mmol, 1.1 equiv). The reaction mixture was stirred at room tempe-rature for 60 h. Flash column chromatography on silica gel using cyclohexane:*tert*-butyl methyl ether (100:0 → 50:1 → 25:1) as the eluent afforded silyl ether (*S*)-**9** (84.5 mg, 0.180 mmol, 90%, 62% ee) as a colorless oil.

$R_f$ = 0.14 (cyclohexane:*tert*-butyl methyl ether = 50:1). **1H NMR** (500 MHz, $C_6D_6$): δ/ppm = 0.60-0.72 (m, 6H), 0.92 ($m_c$, 9H), 1.31-1.43 (m, 12H), 1.46 (s, 9H), 1.94-2.06 (br m, 1H), 2.13 (br s, 1H), 2.44-2.85 (br m, 3H), 3.01-3.50 (br m, 2H), 5.00 (br s, 1H), 6.71 (dd, *J* = 5.0 Hz, *J* = 3.5 Hz, 1H), 6.74-6.97 (br m, 1H), 6.86 (dd, *J* = 5.0 Hz, *J* = 1.1 Hz, 1H). **13C{1H} NMR** (126 MHz, $C_6D_6$): δ/ppm = 14.0 (3C), 14.2 (3C), 25.9 (3C), 27.1 (3C), 28.6 (3C), 34.2, 39.7, 45.9, 69.6, 78.8, 123.6 (br), 124.4, 126.4, 155.5. **1H/13C HMBC NMR** (500/126 MHz, $C_6D_6$): (6.71, 6.86)/149.9. **1H/29Si HMQC NMR** (500/99 MHz, optimized for *J* = 7 Hz, $C_6D_6$): δ/ppm = (0.60-0.72, 1.31-1.43)/16.2. **IR** (ATR): ṽ/$cm^{-1}$ = 2955, 2920, 2869, 1696, 1459, 1391, 1165, 1078, 883, 694. **HRMS** (LIFDI) calculated for $C_{25}H_{47}NO_3SSi^+$ [$M^+$]: 369.3040; found: 369.3045. **Optical Rotation:** $[\alpha]_D^{RT}$ = -17.1 (c 1.0, $CHCl_3$, 62% ee). The enantiomeric excess of (*S*)-**9** was determined by HPLC analysis on a chiral stationary phase after cleavage of the silyl ether according to **GP 8** *(Daicel* Chiralcel® OJ-H column, column temperature 20 °C, mobile phase: *n*-heptane:isopropanol = 99:1, flow rate: 0.8 mL/min, λ = 230 nm): $t_R$ = 37.2 min for (*S*)-**7**, $t_R$ = 43.1 min for (*R*)-**7**.

*6.27 (S)-3-(1-((Tributylsilyl)oxy)ethyl)phenylethyl(methyl)carbamate [(S)-10]*

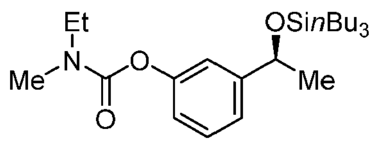

(*S*)-**10**
$C_{24}H_{43}NO_3Si$
M = 421.70 g/mol

Prepared according to **GP 7** from benzylic alcohol *rac*-**8** (44.7 mg, 0.200 mmol, 1.00 equiv) and $nBu_3SiH$ (44 mg, 0.22 mmol, 1.1 equiv). The reaction mixture was stirred at room temperature for 14 h. Flash column chromatography on silica gel using cyclohexane:*tert*-butyl methyl ether (100:0 → 25:1 → 10:1) as the eluent afforded silyl ether (*S*)-**10** (79.2 mg, 0.188 mmol, 94%, 93% ee) as a colorless oil.

$R_f$ = 0.24 (*n*-pentane:*tert*-butyl methyl ether = 25:1). **1H NMR** (500 MHz, $C_6D_6$): δ/ppm = 0.61-0.70 (m, 6H), 0.86 (t, *J* = 7.1 Hz, 3H), 0.91 (t, *J* = 7.1 Hz, 9H), 1.30-1.44 (m, 12H), 1.41 (d, *J* = 6.3 Hz, 3H), 2.60 (s, 1.5H)*, 2.64 (s, 1.5H)*, 3.02 (br q, *J* = 6.9 Hz, 1H), 3.11 (br q, *J* = 6.9 Hz, 1H), 4.83 (q, *J* = 6.3 Hz, 1H), 7.11 ($m_c$, 3H), 7.44 (s, 1H).

**$^{13}C\{^1H\}$ NMR** (126 MHz, $C_6D_6$): δ/ppm = 12.5 (0.5C)*, 13.2 (0.5C)*, 14.0 (3C), 14.2 (3C), 25.9 (3C), 27.0 (3C), 27.5, 33.4 (0.5C)*, 33.9 (0.5C)*, 43.8 (0.5C)*, 44.0 (0.5C)*, 70.9, 119.3, 120.7, 122.1, 129.1, 148.9, 152.6, 154.1. **$^1H/29Si$ HMQC NMR** (500/99 MHz, optimized for $J$ = 7 Hz, $C_6D_6$): δ/ppm = (0.61-0.70, 1.30-1.44, 4.83)/15.1. **IR** (ATR): $\tilde{v}/cm^{-1}$ = 2955, 2920, 2870, 1721, 1458, 1396, 1230, 1160, 782, 696. **HRMS** (LIFDI) calculated for $C_{24}H_{42}NO_3Si^+$ $[(M-H)^+]$: 420.2928; found: 420.2929. **Optical Rotation:** $[\alpha]D^{RT}$ = -30.4 (c 1.0, $CHCl_3$, 93% ee). The enantiomeric excess of (*S*)-**10** was determined by HPLC analysis on a chiral stationary phase after cleavage of the silyl ether according to **GP 8** *(Daicel* Chiralcel® OD-H column, column temperature 20 °C, mobile phase: *n*-heptane:isopropanol = 95:5, flow rate: 0.8 mL/min, λ = 210 nm): $t_R$ = 20.1 min for (*S*)-**8**, $t_R$ = 25.5 min for (*R*)-**8**.

6.28 *(S)-Tributyl(1-cyclohexylethoxy)silane [(S)-11a]*

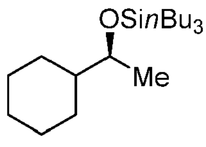

(*S*)-**11a**
$C_{20}H_{42}OSi$
M = 326.64 g/mol

Prepared according to **GP 7** from aliphatic alcohol *rac*-**S1** (25.6 mg, 0.200 mmol, 1.00 equiv) and $nBu_3SiH$ (44 mg, 0.22 mmol, 1.1 equiv). The reaction mixture was stirred at room temperature for 84 h. Flash column chromatography on silica gel using cyclohexane:*tert*-butyl methyl ether (100:0 → 50:1 → 25:1) as the eluent afforded silyl ether (*S*)-**11a** (62.8 mg, 0.192 mmol, 96%, 79% ee) as a colorless oil.

**$R_f$** = 0.54 (cyclohexane). **$^1H$ NMR** (500 MHz, $C_6D_6$): δ/ppm = 0.65-0.76 (m, 6H), 0.96 (t, $J$ = 7.1 Hz, 9H), 1.00-1.28 (m, 5H), 1.14 (d, $J$ = 6.2 Hz, 3H), 1.28-1.52 (m, 13H), 1.61-1.67 (m, 1H), 1.70-1.80 (m, 3H), 1.86-1.93 (m, 1H), 3.62 ($m_c$, 1H). **$^{13}C\{^1H\}$ NMR** (126 MHz, $C_6D_6$): δ/ppm = 14.1 (3C), 14.6 (3C), 21.1, 26.1 (3C), 26.9 (3C), 27.2 (3C), 28.9, 29.1, 46.2, 72.8. **$^1H/29Si$ HMQC NMR** (500/99 MHz, optimized for $J$ = 7 Hz, $C_6D_6$): δ/ppm = (0.65-0.76, 1.28-1.52, 3.62)/12.0. **IR** (ATR): $\tilde{v}/cm^{-1}$ = 2955, 2919, 2853, 1450, 1190, 1070, 966, 884, 760. **HRMS** (LIFDI) calculated for $C_{20}H_{43}OSi^+$ $[(M+H)^+]$: 327.3078; found: 327.3079. **Optical Rotation:** $[\alpha]_D^{RT}$ = + 4.9 (c 1.0, $CHCl_3$, 79% ee); + 4.1 (*c* 2.3, $CHCl_3$, 63% ee) reported for the S-enantiomer.[S3] The enantiomeric excess of (*S*)-**11a** was determined by HPLC analysis on a chiral stationary phase after cleavage of the silyl ether according to **GP 8** followed by esterification with 4-nitrobenzoyl chloride according to **GP 9** (*Daicel* Chiralpak® ID column, column temperature 20 °C, mobile phase: *n*-heptane:isopropanol = 99.5:0.5, flow rate: 0.8 mL/min, λ = 254 nm): $t_R$ = 14.7 min for (*S*)-1-cyclohexylethyl 4-nitrobenzoate, $t_R$ = 17.3 min for (*R*)-1-cyclohexylethyl 4-nitrobenzoate.

The analytical data are in accordance with those reported in the literature.[S3]

6.29 *(S)-Tributyl(1-cyclopentylethoxy)silane [(S)-11b]*

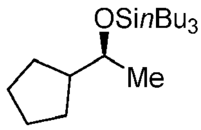

(*S*)-**11b**
$C_{19}H_{40}OSi$
M = 312.61 g/mol

Prepared according to **GP 7** from aliphatic alcohol *rac*-**S2** (22.8 mg, 0.200 mmol, 1.00 equiv) and $nBu_3SiH$ (44 mg, 0.22 mmol, 1.1 equiv). The reaction mixture was stirred at room temperature for 84 h. Flash column chromatography on silica gel using cyclohexane:*tert*-butyl methyl ether (100:0 → 50:1 → 25:1) as the eluent afforded silyl ether (*S*)-**11b** (58.0 mg, 0.186 mmol, 93%, 64% ee) as a colorless oil.

**$R_f$** = 0.55 (cyclohexane). **$^1H$ NMR** (500 MHz, $C_6D_6$): δ/ppm = 0.67-0.75 (m, 6H), 0.96 (t, $J$ = 7.2 Hz, 9H), 1.17

(d, *J* = 6.1 Hz, 3H), 1.19-1.28 (m, 1H), 1.34-1.66 (m, 18H), 1.78-1.91 (m, 2H), 3.66 (dq, *J* = 6.1 Hz, *J* = 6.1 Hz, 1H). **$^{13}C\{^1H\}$ NMR** (126 MHz, $C_6D_6$): δ/ppm = 14.1 (3C), 14.7 (3C), 23.2, 26.0, 26.1 (3C), 26.2, 27.2 (3C), 29.0, 29.4, 48.8, 72.4. **$^1H/29Si$ HMQC** N**MR** (500/99 MHz, optimized for *J* = 7 Hz, $C_6D_6$): δ/ppm = (0.67-0.75, 1.34-1.66, 3.66)/11.8. **IR** (ATR): $\tilde{v}/cm^{-1}$ = 2953, 2919, 2869, 1457, 1372, 1193, 1070, 987, 883, 758. **HRMS** (LIFDI) calculated for $C_{19}H_{40}OSi^+$ [(M+H)$^+$]: 313.2921; found: 313.2915. **Optical Rotation:** $[\alpha]_D^{RT}$ = + 11.1 (*c* 1.0, $CHCl_3$, 64% ee). The enantiomeric excess of (*S*)-**11b** was determined by HPLC analysis on a chiral stationary phase after cleavage of the silyl ether according to **GP 8** followed by esterification with 4-nitrobenzoyl chloride according to **GP 9** *(Daicel* Chiralpak® ID column, column temperature 20 °C, mobile phase: *n*-heptane:isopropanol = 99.5:0.5, flow rate: 0.8 mL/min, λ = 254 nm): $t_R$ = 15.2 min for (*S*)-1-cyclopentylethyl 4-nitrobenzoate, $t_R$ = 19.6 min for (*R*)-1-cyclopentylethyl 4-nitrobenzoate.

### *6.30 (S)-Tributyl(1-cyclohexylpropoxy)silane [(S)-11c]*

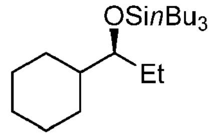

(*S*)-**11c**
$C_{21}H_{44}OSi$
M = 340.67 g/mol

Prepared according to **GP 7** from aliphatic alcohol *rac*-**S3** (28.4 mg, 0.200 mmol, 1.00 equiv) and $nBu_3SiH$ (44 mg, 0.22 mmol, 1.1 equiv). The reaction mixture was stirred at room temperature for 120 h. Flash column chromatography on silica gel using cyclohexane:*tert*-butyl methyl ether (100:0 → 100:1 → 50:1) as the eluent afforded silyl ether (*S*)-**11c** (38.1 mg, 0.112 mmol, 56%, 52% ee) as a colorless oil.

**$R_f$** = 0.69 (cyclohexane).

**$^1H$ NMR** (500 MHz, $C_6D_6$): δ/ppm = 0.70-0.77 (m, 6H), 0.95 (dd, *J* = 7.5 Hz, *J* = 7.5 Hz, 3H), 0.96 (dd, *J* = 7.2 Hz, *J* = 7.2 Hz, 9H), 1.06-1.29 (m, 5H), 1.34-1.59 (m, 15H), 1.62-1.85 (m, 5H), 3.46 ($m_c$, 1H). **$^{13}C\{^1H\}$ NMR** (126 MHz, $C_6D_6$): δ/ppm = 10.1, 14.1 (3C), 14.7 (3C), 26.2 (3C), 26.9, 27.00, 27.03, 27.20 (3C), 27.23, 28.6, 29.4, 43.1, 78.2. **$^1H/29Si$ HMQC NMR** (500/99 MHz, optimized for *J* = 7 Hz, $C_6D_6$): δ/ppm = (0.70-0.77, 1.34-1.59, 3.46)/11.9. **IR** (ATR): $\tilde{v}/cm^{-1}$ = 2955, 2919, 2852, 1451, 1192, 1073, 1009, 966, 884, 728. **HRMS** (LIFDI) calculated for $C_{21}H_{45}OSi^+$ [(M+H)$^+$]: 341.3234; found: 341.3233. **Optical Rotation:** $[\alpha]_D^{RT}$ = -2.2 (c 1.0, $CHCl_3$, 52% ee). The enantiomeric excess of (*S*)-**11c** was determined by HPLC analysis on a chiral stationary phase after cleavage of the silyl ether according to **GP 8** followed by esterification with 4-nitrobenzoyl chloride according to **GP 9** (*Daicel* Chiralpak® ID column, column temperature 20 °C, mobile phase: *n*-heptane:isopropanol = 99.7:0.3, flow rate: 0.8 mL/min, λ = 250 nm): $t_R$ = 15.9 min for (*S*)-1-cyclohexylpropyl 4-nitrobenzoate, $t_R$ = 18.8 min for (*R*)-1-cyclohexylpropyl 4-nitrobenzoate.

### *6.31 (S)-Tributyl((2,3-dihydro-1H-inden-1-yl)oxy)silane [(S)-13a]*

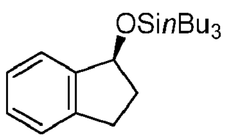

(*S*)-**13a**
$C_{21}H_{36}OSi$
M = 332.60 g/mol

Prepared according to **GP 7** from benzylic alcohol *rac*-**12a** (26.8 mg, 0.200 mmol, 1.00 equiv) and $nBu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**13a** (63.2 mg, 0.190 mmol, 95%, 90% ee) as a colorless oil.

$\mathbf{R_f}$ = 0.24 (cyclohexane). **$^1$H NMR** (500 MHz, $C_6D_6$): δ/ppm = 0.72-0.79 (m, 6H), 0.95 (t, *J* = 7.3 Hz, 9H), 1.34-1.53 (m, 12H), 1.95 ($m_c$, 1H), 2.20 (dddd, *J* = 12.4 Hz, *J* = 7.8 Hz, *J* = 6.6 Hz, *J* = 3.6 Hz, 1H), 2.50-2.59 (m, 1H), 2.82 (ddd, *J* = 15.6 Hz, *J* = 8.6 Hz, *J* = 3.6 Hz, 1H), 5.20 (dd, *J* = 6.6 Hz, *J* = 6.6 Hz, 1H), 7.09 (brd, *J* = 7.3 Hz, 1H), 7.13 (ddd, *J* = 7.3 Hz, *J* = 7.3 Hz, *J* = 1.2 Hz, 1H), 7.16 ($m_c$, 1H), 7.52 (brd, *J* = 7.3 Hz, 1H). **$^{13}$C{$^1$H} NMR** (126 MHz, $C_6D_6$): δ/ppm = 14.1 (3C), 14.5 (3C), 26.0 (3C), 27.1 (3C), 30.0, 37.1, 76.8, 124.6, 124.9, 126.8, 128.0, 142.9, 146.2. **29Si{$^1$H) DEPT NMR** (99 MHz, $C_6D_6$): δ/ppm = 14.8. **IR** (ATR): $\tilde{v}$/cm$^{-1}$ = 2954, 2918, 2869, 1459, 1192, 1108, 1072, 885, 737. **HRMS** (APCI) calculated for $C_{21}H_{37}OSi^+$ [(M+H)$^+$]: 333.2608; found: 333.2613. **Optical Rotation:** [α]$D^{RT}$ = -4.2 (c 1.0, $CHCl_3$, 90% ee). The enantiomeric excess of (*S*)-**13a** was determined by HPLC analysis on a chiral stationary phase after cleavage of the silyl ether according to **GP 8** *(Daicel* Chiralcel® OD-H column, column temperature 20 °C, mobile phase: *n*-heptane:isopropanol = 96:4, flow rate: 0.8 mL/min, λ = 254 nm): $t_R$ = 13.6 min for (*S*)-**12a**, $t_R$ = 15.2 min for (*R*)-**12a**.

The analytical data are in accordance with those reported in the literature.[S3]

*6.32 (S)-Tributyl((1,2,3,4-tetrahydronaphthalen-1-yl)oxy)silane [(S)-13b]*

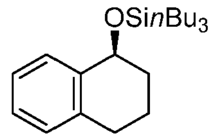

(*S*)-**13b**
$C_{22}H_{38}OSi$
M = 346.63 g/mol

Prepared according to **GP 7** from benzylic alcohol *rac*-**12b** (29.6 mg, 0.200 mmol, 1.00 equiv) and *n*$Bu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**13b** (65.6 mg, 0.189 mmol, 94%, 93% ee) as a colorless oil.

$\mathbf{R_f}$ = 0.29 (cyclohexane). **$^1$H NMR** (500 MHz, $C_6D_6$): δ/ppm = 0.72-0.80 (m, 6H), 0.94 (t, *J* = 7.3 Hz, 9H), 1.32-1.59 (m, 13H), 1.80-1.88 (m, 2H), 1.89-1.98 (m, 1H), 2.50 (ddd, *J* = 16.7 Hz, *J* = 6.5 Hz, *J* = 6.5 Hz, 1H), 2.63 (ddd, *J* = 16.7 Hz, *J* = 6.5 Hz, *J* = 6.5 Hz, 1H), 4.83 (dd, *J* = 5.7 Hz, *J* = 5.7 Hz, 1H), 6.95 (br d, *J* = 7.6 Hz, 1H), 7.08 (ddd, *J* ≈ 7.5 Hz, *J* ≈ 7.5 Hz, *J* = 1.4 Hz, 1H), 7.14-7.19 (m, 1H), 7.58 (brd, *J* = 7.6 Hz, 1H). **$^{13}$C{$^1$H} NMR** (126 MHz, $C_6D_6$): δ/ppm = 14.1 (3C), 14.7 (3C), 19.6, 26.1 (3C), 27.1 (3C), 29.3, 33.4, 69.6, 126.0, 127.3, 128.6, 129.0, 137.1, 140.2. **$^1$H/29Si HMQC NMR** (500/99 MHz, optimized for *J* = 7 Hz, $C_6D_6$): δ/ppm = (0.72-0.80, 1.32-1.59, 4.83)/14.0. **IR** (ATR): $\tilde{v}$/cm$^{-1}$ = 2953, 2919, 2869, 1455, 1344, 1193, 1074, 1021, 883, 736. **HRMS** (APCI) calculated for $C_{22}H_{39}OSi^+$ [(M+H)$^+$]: 347.2765; found: 347.2769. **Optical Rotation:** [α]$D^{RT}$ = -12.3 (c 1.0, $CHCl_3$, 93% ee). The enantiomeric excess of (*S*)-**13b** was determined by HPLC analysis on a chiral stationary phase after cleavage of the silyl ether according to **GP 8** *(Daicel* Chiralcel® OD-H column, column temperature 20 °C, mobile phase: *n*-heptane:isopropanol = 99:1, flow rate: 1.0 mL/min, λ = 210 nm): $t_R$ = 23.5 min for (*S*)-**12b**, $t_R$ = 26.5 min for (*R*)-**12b**.

The analytical data are in accordance with those reported in the literature.[S3]

*6.33 (S)-Tributyl((6,7,8,9-tetrahydro-5H-benzo[7]annulen-5-yl)oxy)silane [(S)-13c]*

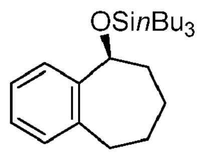

(*S*)-**13c**
$C_{23}H_{40}OSi$
M = 360.66 g/mol

Prepared according to **GP 7** from benzylic alcohol *rac*-**12c** (32.4 mg, 0.200 mmol, 1.00 equiv) and *n*$Bu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**13c** (71.2 mg, 0.197 mmol, 99%, 82% ee) as a colorless oil.

$\mathbf{R_f}$ = 0.48 (cyclohexane). **$^1$H NMR** (500 MHz, $C_6D_6$): δ/ppm = 0.64-0.73 (m, 6H), 0.91 (t, *J* = 7.2 Hz, 9H), 1.29-1.57 (m, 14H), 1.61-1.70 (m, 1H), 1.82-1.95 (m, 2H), 2.01-2.14 (m, 1H), 2.54-2.63 (m, 1H), 2.95-3.09 (m, 1H), 4.89-4.95 (m, 1H), 6.99 (br dd, *J* = 7.4 Hz, *J* = 1.1 Hz, 1H), 7.06 (ddd, *J* = 7.4 Hz, *J* = 7.4 Hz, *J* = 1.5 Hz, 1H), 7.14 (ddd, *J* = 7.5 Hz, *J* = 7.5 Hz, *J* = 1.2 Hz, 1H), 7.53 (br s, 1H). **$^{13}$C{$^1$H} NMR** (126 MHz, $C_6D_6$): δ/ppm = 14.0 (3C), 14.3 (3C), 26.0 (3C), 27.1 (3C), 27.6, 28.4, 36.1, 37.7, 75.4, 126.2, 126.4 (br), 127.3, 129.8, 141.5 (br), 145.1. **295i{$^1$H} DEPT NMR** (99 MHz, $C_6D_6$): δ/ppm = 15.2. **IR** (ATR): $\tilde{\nu}$/cm$^{-1}$ = 2954, 2918, 2853, 1453, 1374, 1194, 1074, 886, 746. **HRMS** (APCI) calculated for $C_{23}H_{4i}OSi^+$ [(M+H)$^+$]: 361.2921; found: 361.2924. **Optical Rotation:** $[\alpha]_D^{RT}$ = -25.8 (*c* 1.0, $CHCl_3$, 82% ee); -20.8 (c 1.1, $CHCl_3$, 65% ee) reported for the S-enantiomer.[S3] The enantiomeric excess of (*S*)-**13c** was determined by HPLC analysis on a chiral stationary phase after cleavage of the silyl ether according to **GP 8** (*Daicel* Chiralcel® OD-H column, column temperature 20 °C, mobile phase: *n*-heptane:isopropanol = 99:1, flow rate: 1.0 mL/min, λ = 210 nm): $t_R$ = 19.9 min for (*R*)-**12c**, $t_R$ = 21.9 min for (*S*)-**12c**.

The analytical data are in accordance with those reported in the literature.[S3]

*6.34 (S)-Tributyl(chroman-4-yloxy)silane [(S)-13d]*

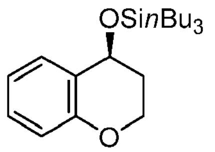

(*S*)-**13d**
$C_{21}H_{36}O_2Si$
M = 348.60 g/mol

Prepared according to **GP 7** from benzylic alcohol *rac*-**12d** (30.0 mg, 0.200 mmol, 1.00 equiv) and *n*$Bu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**13d** (69.2 mg, 0.199 mmol, 99%, 95% ee) as a colorless oil.

$\mathbf{R_f}$ = 0.15 (cyclohexane). **$^1$H NMR** (500 MHz, $C_6D_6$): δ/ppm = 0.62-0.75 (m, 6H), 0.93 ($m_c$, 9H), 1.32-1.45 (m, 12H), 1.68-1.78 (m, 2H), 3.90-3.97 (m, 1H), 4.23-4.32 (m, 1H), 4.66 (dd, *J* = 4.3 Hz, *J* = 4.3 Hz, 1H), 6.85 ($m_c$, 1H), 6.99 (dd, *J* = 8.2 Hz, *J* = 1.3 Hz, 1H), 7.01-7.07 (m, 1H), 7.34 (dd, *J* = 7.6 Hz, *J* = 1.6 Hz, 1H). **$^{13}$C{$^1$H} NMR** (126 MHz, $C_6D_6$): δ/ppm = 14.0 (3C), 14.5 (3C), 25.9 (3C), 27.1 (3C), 32.3, 62.2, 64.6, 117.4, 120.2, 125.4, 129.5, 130.0, 155.3. **$^1$H/29Si HMQC NMR** (500/99 MHz, optimized for *J* = 7 Hz, $C_6D_6$): δ/ppm = (0.62-0.75, 1.32-1.45, 4.66)/14.7. **IR** (ATR): $\tilde{\nu}$/cm$^{-1}$ = 2954, 2919, 2870, 1487, 1454, 1224, 1068, 1002, 750. **HRMS** (APCI) calculated for $C_{21}H_{37}O_2Si^+$ [(M+H)$^+$]: 349.2557; found: 349.2564. **Optical Rotation:** $[\alpha]_D^{RT}$ = -29.8 (c 1.0, $CHCl_3$, 95% ee); -21.0 (c 1.0, $CHCl_3$, 67% ee) reported for the S-enantiomer.[S3] The enantiomeric excess of (*S*)-**13d** was determined by HPLC analysis on a chiral stationary phase after cleavage of the silyl ether according to **GP 8** (*Daicel* Chiralcel® OD-H column, column temperature 20 °C, mobile phase: n-heptane:isopropanol = 95:5, flow rate: 0.8 mL/min, λ = 280 nm): $t_R$ = 12.6 min for (*S*)-**12d**, $t_R$ = 14.7 min for (*R*)-**12d**.

The analytical data are in accordance with those reported in the literature.[S3]

*6.35 (S)-((6-Bromo-8-chlorochroman-4-yl)oxy)tributylsilane [(S)-13e]*

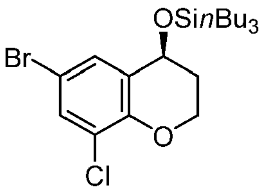

(*S*)-**13e**
$C_{21}H_{34}BrClO_2Si$
M = 461.94 g/mol

Prepared according to **GP 7** from benzylic alcohol *rac*-**12e** (52.7 mg, 0.200 mmol, 1.00 equiv) and $nBu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**13e** (83.5 mg, 0.181 mmol, 90%, 98% ee) as a colorless oil.

$\mathbf{R_f}$ = 0.52 (cyclohexane:*tert*-butyl methyl ether = 100:1). **$^1$H NMR** (500 MHz, $C_6D_6$): δ/ppm = 0.54-0.66 (m, 6H), 0.94 ($m_c$, 9H), 1.27-1.41 (m, 12H), 1.42-1.54 (m, 2H), 3.77-3.84 (m, 1H), 4.09 (ddd, *J* = 10.9 Hz, *J* = 9.3 Hz, *J* = 3.7 Hz, 1H), 4.33 (dd, *J* = 4.5 Hz, *J* = 4.5 Hz, 1H), 7.29-7.32 (m, 2H). **$^{13}$C{$^1$H} NMR** (126 MHz, $C_6D_6$): δ/ppm = 14.0 (3C), 14.3 (3C), 25.8 (3C), 27.0 (3C), 31.3, 63.0,63.9, 111.5, 123.3, 128.4, 131.1, 132.3, 150.1. **$^1$H/29Si HMQC NMR** (500/99 MHz, optimized for *J* = 7 Hz, $C_6D_6$): δ/ppm = (0.54-0.66, 1.27-1.41, 4.33)/16.0. **IR** (ATR): $\tilde{v}$/cm$^{-1}$ = 2954, 2919, 2869, 1446, 1250, 1173, 1067, 934, 861, 690. **HRMS** (APCI) calculated for $C_{21}H_{34}BrClO_2Si^+$ [M$^+$]: 460.1194; found: 460.1199. **Optical Rotation:** $[\alpha]_D^{RT}$ = -16.1 (c 1.0, $CHCl_3$, 98% ee). The enantiomeric excess of (*S*)-**13e** was determined by HPLC analysis on a chiral stationary phase after cleavage of the silyl ether according to **GP 8** (*Daicel* Chiralcel® OD-H column, column temperature 20 °C, mobile phase: *n*-heptane:isopropanol = 95:5, flow rate: 0.8 mL/min, λ = 210 nm): $t_R$ = 14.4 min for (*S*)-**12e**, $t_R$ = 17.3 min for (*R*)-**12e**.

*6.36 (S)-Tributyl((8-ehloro-6-(1,3-dioxolan-2-yl)ehroman-4-yl)oxy)silane [(S)-13f]*

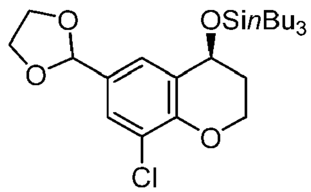

(*S*)-**13f**
$C_{24}H_{39}ClO_4Si$
M = 455.11 g/mol

Prepared according to **GP 7** from benzylic alcohol *rac*-**12f** (51.3 mg, 0.200 mmol, 1.00 equiv) and $nBu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**13f** (86.2 mg, 0.189 mmol, 95%, 95% ee) as a colorless oil.

$\mathbf{R_f}$ = 0.10 (cyclohexane:*tert*-butyl methyl ether = 100:1). **$^1$H NMR** (500 MHz, $C_6D_6$): δ/ppm = 0.60-0.71 (m, 6H), 0.94 ($m_c$, 9H), 1.31-1.43 (m, 12H), 1.51-1.62 (m, 2H), 3.41-3.49 (m, 2H), 3.56-3.64 (m, 2H), 3.91 (ddd, *J* = 10.8 Hz, *J* ≈ 4.4 Hz, *J* ≈ 4.4 Hz, 1H), 4.21 (ddd, *J* = 10.8 Hz, *J* = 9.2 Hz, *J* = 4.1 Hz, 1H), 4.51 (dd, *J* = 4.2 Hz, *J* = 4.2 Hz, 1H), 5.67 (s, 1H), 7.43-7.46 (m, 1H), 7.60-7.63 (m, 1H). **$^{13}$C{$^1$H} NMR** (126 MHz, $C_6D_6$): δ/ppm = 14.0 (3C), 14.4 (3C), 25.9 (3C), 27.1 (3C), 31.6, 62.9, 64.3, 65.09, 65.12, 103.3, 122.1, 126.5, 126.8, 128.5, 131.2, 151.4. **$^1$H/29Si HMQC NMR** (500/99 MHz, optimized for *J* = 7 Hz, $C_6D_6$): δ/ppm = (0.60-0.71, 0.94, 1.31-1.43, 4.51)/15.2. **IR** (ATR): $\tilde{v}$/cm$^{-1}$ = 2954, 2919, 2870, 1483, 1375, 1251, 1140, 1068, 935, 732. **HRMS** (LIFDI) calculated for $C_{24}H_{38}ClO_4Si^+$ [(M-H)$^+$]: 353.2222; found: 353.2230. **Optical Rotation:** $[\alpha]D^{RT}$ = -19.3 (c 1.0, $CHCl_3$, 95% ee). The enantiomeric excess of (*S*)-**13f** was determined by HPLC analysis on a chiral stationary phase after cleavage of the silyl ether according to **GP 8** *(Daicel* Chiralcel® OD-H column, column temperature 20 °C, mobile phase: *n*-heptane:isopropanol = 95:5, flow rate: 0.8 mL/min, λ = 210 nm): $t_R$ = 45.3 min for (*S*)-**12f**, $t_R$ = 53.6 min for (*R*)-**12f**.

*6.37 (S)-Tributyl(thiochroman-4-yloxy)silane [(S)-13g]*

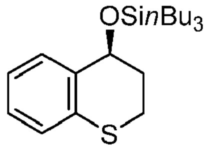

(*S*)-**13g**
$C_{21}H_{36}OSSi$
M = 364.66 g/mol

Prepared according to **GP 7** from benzylic alcohol *rac*-**12g** (33.2 mg, 0.200 mmol, 1.00 equiv) and *n*$Bu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**13g** (65.9 mg, 0.181 mmol, 90%, 93% ee) as a colorless oil.

$\mathbf{R_f}$ = 0.45 (cyclohexane). **$^1$H NMR** (500 MHz, $C_6D_6$): δ/ppm = 0.61-0.69 (m, 6H), 0.91 (t, *J* = 7.1 Hz, 9H), 1.30-1.42 (m, 12H), 1.77 (dddd, *J* = 13.3 Hz, *J* = 10.8 Hz, *J* = 4.1 Hz, *J* = 2.7 Hz, 1H), 1.95 (dddd, *J* = 13.3 Hz, *J* = 6.1 Hz, *J* = 6.1 Hz, *J* = 3.7 Hz, 1H), 2.49 (ddd, *J* = 12.0 Hz, *J* = 6.1 Hz, *J* = 4.1 Hz, 1H), 3.24 (ddd, *J* = 12.0 Hz, *J* = 10.8 Hz, *J* = 3.7 Hz, 1H), 4.67 (dd, *J* = 6.0 Hz, *J* = 2.7 Hz, 1H), 6.91 ($m_c$, 2H), 7.12-7.17 (m, 1H), 7.29-7.34 (m, 1H). **$^{13}$C{$^1$H} NMR** (126 MHz, $C_6D_6$): δ/ppm = 14.0 (3C), 14.5 (3C), 22.0, 25.9 (3C), 27.0 (3C), 31.4, 68.1, 123.9, 127.0, 128.3, 129.9, 134.1, 136.3. **$^1$H/29Si HMQC NMR** (500/99 MHz, optimized for *J* = 7 Hz, $C_6D_6$): δ/ppm = (0.61-0.69, 1.30-1.42, 4.67)/14.9. **IR** (ATR): $\tilde{\nu}$/cm$^{-1}$ = 2954, 2918, 2869, 1461, 1196, 1071, 1044, 884, 744. **HRMS** (APCI) calculated for $C_{21}H_{37}OSSi^+$ [(M+H)$^+$]: 365.2329; found: 365.2338. **Optical Rotation:** $[\alpha]_D^{RT}$ = -63.3 (*c* 1.0, $CHCl_3$, 93% ee); -38.4 (*c* 2.2, $CHCl_3$, 67% ee) reported for the *S*-enantiomer.[S3] The enantiomeric excess of (*S*)-**13g** was determined by HPLC analysis on a chiral stationary phase after cleavage of the silyl ether according to **GP 8** (*Daicel* Chiralcel® OD-H column, column temperature 20 °C, mobile phase: *n*-heptane:isopropanol = 95:5, flow rate: 0.8 mL/min, λ = 280 nm): $t_R$ = 15.4 min for (*S*)-**12g**, $t_R$ = 19.2 min for (*R*)-**12g**.

The analytical data are in accordance with those reported in the literature.[S3]

*6.38 tert-Butyl (S)-4-((tributylsilyl)oxy)-3,4-dihydroquinoline-1(2H)-carboxylate [(S)-13h]*

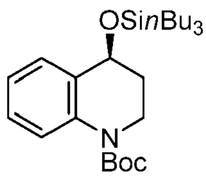

(*S*)-**13h**
$C_{26}H_{45}NO_3Si$
M = 447.74 g/mol

Prepared according to **GP 7** from benzylic alcohol *rac*-**12h** (49.9 mg, 0.200 mmol, 1.00 equiv) and *n*$Bu_3SiH$ (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (*S*)-**13h** (86.7 mg, 0.194 mmol, 97%, 92% ee) as a colorless oil.

$\mathbf{R_f}$ = 0.33 (cyclohexane:*tert*-butyl methyl ether = 50:1). **$^1$H NMR** (500 MHz, $C_6D_6$): δ/ppm = 0.62-0.70 (m, 6H), 0.92 ($m_c$, 9H), 1.31-1.42 (m, 12H), 1.45 (s, 9H), 1.72-1.79 (m, 2H), 3.71-3.79 (m, 1H), 3.80-3.88 (m, 1H), 4.63 (dd, *J* = 5.2 Hz, *J* = 5.2 Hz, 1H), 6.97 (ddd, *J* = 7.5 Hz, *J* = 7.5 Hz, *J* = 1.1 Hz, 1H), 7.16 (ddd, *J* = 7.8 Hz, *J* = 7.8 Hz, *J* = 1.7 Hz, 1H), 7.43 (dd, *J* = 7.6 Hz, *J* = 1.5 Hz, 1H), 8.12 (br d, *J* = 7.8 Hz, 1H). **$^{13}$C{$^1$H} NMR** (126 MHz, $C_6D_6$): δ/ppm = 14.0 (3C), 14.4 (3C), 25.9 (3C), 27.0 (3C), 28.4 (3C), 33.3, 41.4, 67.5, 80.4, 123.0, 124.2, 127.3, 132.6, 138.1, 153.7. **$^1$H/13C HMBC NMR** (500/126 MHz, $C_6D_6$): δ/ppm = 7.43/127.8. **$^{29}$Si{$^1$H} DEPT NMR** (99 MHz, $C_6D_6$): δ/ppm = 15.4. **IR** (ATR): $\tilde{\nu}$/cm$^{-1}$ = 2954, 2920, 2870, 1697, 1489, 1329, 1164, 1017, 751. **HRMS** (APCI) calculated for $C_{26}H_{46}NO_3Si^+$ [(M+H)$^+$]:

448.3241; found: 448.3242. **Optical Rotation:** $[\alpha]_D^{RT}$ = -28.8 (c 1.0, $CHCl_3$, 92% ee); -25.7 (c 0.8, $CHCl_3$, 86% ee) reported for the S-enantiomer.[S3] The enantiomeric excess of (*S*)-**13h** was determined by HPLC analysis on a chiral stationary phase after cleavage of the silyl ether according to **GP 8** (*Daicel* Chiralcel® OD-H column, column temperature 20 °C, mobile phase: n-heptane:isopropanol = 98:2, flow rate: 0.8 mL/min, λ = 254 nm): $t_R$ = 26.7 min for (*S*)-**12h**, $t_R$ = 29.8 min for (*R*)-**12h**.

The analytical data are in accordance with those reported in the literature.[S3]

*6.39 tert-Butyl (R)-4-((tributylsilyl)oxy)-3,4-dihydroisoquinoline-2(1H)-carboxylate [(R)-14]*

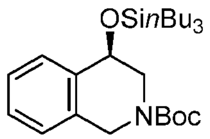

(*R*)-**14**
$C_{26}H_{45}NO_3Si$
M = 447.74 g/mol

Prepared according to GP 7 from benzylic alcohol rac-S2 (49.9 mg, 0.200 mmol, 1.00 equiv) and $n$Bu$_3$SiH (44 mg, 0.22 mmol, 1.1 equiv). The reaction mixture was stirred at room tempe-rature for 14 h. Flash column chromatography on silica gel using cyclohexane:*tert*-butyl methyl ether (100:0 → 50:1 → 25:1) as the eluent afforded silyl ether (R)-14 (85.1 mg, 0.190 mmol, 95%, 91% ee) as a colorless oil.

$\mathbf{R_f}$ = 0.29 (*n*-pentane:*tert*-butyl methyl ether = 50:1). **$^1$H NMR** (500 MHz, $C_6D_6$): δ/ppm = 0.71-0.80 (m, 6H), 0.94 (t, *J* = 7.1 Hz, 9H), 1.33-1.59 (m, 21H), 3.26 (br $m_c$, 0.5H), 3.41 (br $m_c$, 0.5H), 3.97 (br $m_c$, 0.5H), 4.17 (br $m_c$, 0.5H), 4.40 (br $m_c$, 1H), 4.62 (br $m_c$, 0.5H), 4.70-4.96 (m, 1.5H), 6.74 (br $m_c$, 1H), 6.99 (br $m_c$, 1H), 7.11 (br t, *J* = 7.4 Hz, 1H), 7.56 (br d, *J* = 7.4 $H_z$, 1H).**$^{13}$C{$^1$H}** NMR (126 MHz, $C_6D_6$): δ/ppm = 14.0 (3C), 14.4 (3C), 25.9 (3C), 27.1 (3C), 28.6 (br, 3C), 45.7 (0.5C), 46.4 (0.5C), 48.0 (0.5C), 49.2 (0.5C), 67.5, 79.5, 133.6 (0.5C), 133.9 (0.5C), 138.7 (0.5C), 139.0 (0.5C), 154.7. **$^1$H/13C HMQC NMR** (500/126 MHz, $C_6D_6$): δ/ppm = 6.74/126.1, 6.99/127.7, 7.11/126.6, 7.56/126.9. **$^1$H/29Si HMQC NMR** (500/99 MHz, optimized for *J* = 7 Hz, $C_6D_6$): δ/ppm = (0.71-0.80, 1.33-1.59)/16.3. IR (ATR): $\tilde{v}$/cm$^{-1}$ = 2955, 2919, 2869, 1698, 1409, 1365, 1161, 1091, 885, 744. **HRMS** (LIFDI) calculated for $C_{26}H_{46}NO_3Si^+$ [(M+H)$^+$]: 448.3241; found: 448.3238. Optical Rotation: $[\alpha]_D^{RT}$ = 15.4 (c 1.0, $CHCl_3$, 91% ee). The enantiomeric excess of (R)-14 was determined by HPLC analysis on a chiral stationary phase after cleavage of the silyl ether according to **GP 8** (*Daicel* Chiralcel® OD-H column, column temperature 20 °C, mobile phase: *n*-heptane:isopropanol = 95:5, flow rate: 0.8 mL/min, λ = 210 nm): $t_R$ = 12.7 min for (*R*)-**S2**, $t_R$ = 18.8 min for (*S*)-**S2**.

NMR spectra and HPLC traces of the examples are available.

**References**

(1) For reviews of the (D)KR of alcohols by enzymatic and non-enzymatic acylation, see: (a) Verho, O.; Backvall, J.-E. Chemo-enzymatic Dynamic Kinetic Resolution: A Powerful Tool for the Preparation of Enantiomerically Pure Alcohols and Amines. J. Am. Chem. Soc. 2015, 137, 3996-4009. (b) Vedejs, E.; Jure, M. Efficiency in Nonenzymatic Kinetic Resolution. Angew. Chem., Int. Ed. 2005, 44, 3974-4009. (c) Keith, J. M.; Larrow, J. F.; Jacobsen, E. N. Practical Considerations in Kinetic Resolution Reactions. Adv. Synth. Catal. 2001, 343, 5-26.

(2) Dinh, P. M.; Howarth, J. A.; Hudnott, A. R.; Williams, J. M. J.; Harris, W. Catalytic racemisation of alcohols: Applications to enzymatic resolution reactions. Tetrahedron Lett. 1996, 37, 7623-7626.

(3) Selected examples of alcohol racemization catalysts operating by transfer hydrogenation mechanisms. Ruthenium(II)-based: (a) Martín-Matute, B.; Edin, M.; Bogár, K.; Kaynak, F. B.; Backvall, J.-E. Combined Ruthenium(II) and Lipase Catalysis for Efficient Dynamic Kinetic Resolution of Secondary Alcohols. Insight into the Racemization Mechanism. J. Am. Chem. Soc. 2005, 127, 8817-8825. (b) Ko, S.-B.; Baburaj, B.; Kim, M.-J.; Park, J. Air-Stable Racemization Catalysts for the Dynamic Kinetic Reso-lution of Secondary Alcohols. J. Org. Chem. 2007, 72, 6860-6864. (c) Bossi, G.; Putignano, E.; Rigo, P.; Baratta, W. Pincer Ru and Os complexes as efficient catalysts

for racemization and deuteration of alcohols. Dalton Trans. 2011, 40, 8986-8995. (d) Fernández-Salas, J. A.; Manzini, S.; Nolan, S. P. A Cationic Ruthenium Com-plex for the Dynamic Kinetic Resolution of Secondary Alcohols. Chem. Eur. J. 2014, 20, 13132-13135. Aluminum(III)-based: (e) Ber-kessel, A.; Sebastian-Ibarz, M. L.; Muller, T. N. Lipase/Aluminum-Catalyzed Dynamic Kinetic Resolution of Secondary Alcohols. Angew. Chem., Int. Ed. 2006, 45, 6567-6570. Iridium(III)-based: (f) Haak, R. M.; Berthiol, F.; Jerphagnon, T.; Gayet, A. J. A.; Tara-biono, C.; Postema, C. P.; Ritleng, V.; Pfeffer, M.; Janssen, D. B.; Minnaard, A. J.; Feringa, B. L.; de Vries, J. G. Dynamic Kinetic Resolution of Racemic β-Haloalcohols: Direct Access to Enantio-enriched Epoxides. J. Am. Chem. Soc. 2008, 130, 13508-13509. Iron(II)-based: (g) El-Sepelgy, O.; Alandini, N.; Rueping, M. Merging Iron Catalysis and Biocatalysis-Iron Carbonyl Com-plexes as Efficient Hydrogen Autotransfer Catalysts in Dynamic Kinetic Resolutions. Angew. Chem., Int. Ed. 2016, 55, 13602-13605.

(4) Examples of alcohol racemization through dehydration-hydration mechanisms. Under zeolite catalysis: (a) Wuyts, S.; De Temmerman, K.; De Vos, D.; Jacobs, P. A zeolite-enzyme combi-nation for biphasic dynamic kinetic resolution of benzylic alco-hols. Chem. Commun. 2003, 1928-1929. (b) Zhu, Y.; Fow, K.-L.; Chuah, G.-K.; Jaenicke, S. Dynamic Kinetic Resolution of Secondary Alcohols Combining Enzyme-Catalyzed Transesterification and Zeolite-Catalyzed Racemization. Chem. Eur. J. 2007, 13, 541-547. Under vanadium(V) catalysis: (c) Egi, M.; Sugiyama, K.; Saneto, M.; Hanada, R.; Kato, K.; Akai, S. A Mesoporous-Silica-Immobilized Oxovanadium Cocatalyst for the Lipase-Catalyzed Dynamic Kinetic Resolution of Racemic Alcohols. Angew. Chem., Int. Ed. 2013, 52, 3654-3658.

(5) Lee, S. Y.; Murphy, J. M.; Ukai, A.; Fu, G. C. Nonenzymatic Dynamic Kinetic Resolution of Secondary Alcohols via Enantio-selective Acylation: Synthetic and Mechanistic Studies. J. Am. Chem. Soc. 2012, 134, 15149-15153.

(6) (a) Wuts, P. G. M. Greene's Protective Groups in Organic Synthesis; Wiley: Hoboken, 2014; 5th edition, pp 201-270. (b) Ko-ciensky, P. J. Protecting Groups; Thieme: Stuttgart, 2005; 3rd edi-tion, pp 188-230.

(7) (a) Hoveyda, A. H.; Snapper, M. L. Enantioselective Syn-thesis of Silyl Ethers Through Catalytic Si-O Bond Formation. In Organosilicon Chemistry: Novel Approaches and Reactions; Hiya-ma, T.; Oestreich, M., Eds.; Wiley-VCH: Weinheim, 2019; pp 459-493. (b) Seliger, J.; Oestreich, M. Making the Silylation of Alcohols Chiral: Asymmetric Protection of Hydroxy Groups. Chem. Eur. J. 2019, 25, 9358-9365. (c) Wu, L.-W.; Chen, Y.; Lu, Y. Catalytic Silylations of Alcohols: Turning Simple Protecting-Group Strate-gies into Powerful Enantioselective Synthetic Methods. Angew. Chem., Int. Ed. 2015, 54, 9456-9466.

(8) Isobe, T.; Fukuda, K.; Araki, Y.; Ishikawa, T. Modified guanidines as chiral superbases: the first example of asymmetric silylation of secondary alcohols. Chem. Commun. 2001, 243-244.

(9) Selected examples of KRs of alcohols through organocataly-tic silylation: (a) Zhao, Y.; Mitra, A. W.; Hoveyda, A. H.; Snapper, M. L. Kinetic Resolution of 1,2-Diols through Highly Site- and Enantioselective Catalytic Silylation. Angew. Chem., Int. Ed. 2007, 46, 8471-8474. (b) Sheppard, C. I.; Taylor, J. L.; Wiskur, S. L. Silylation-Based Kinetic Resolution of Monofunctional Secondary Alcohols. Org. Lett. 2011, 13, 3794-3797. (c) Worthy, A. D.; Sun, X.; Tan, K. L. Site-Selective Catalysis: Toward a Regiodivergent Reso-lution of 1,2-Diols. J. Am. Chem. Soc. 2012, 134, 7321-7324. (d) Clark, R. W.; Deaton, T. M.; Zhang, Y.; Moore, M. I.; Wiskur, S. L. Silylation-Based Kinetic Resolution of α-Hydroxy Lactones and Lactams. Org. Lett. 2013, 15, 6132-6135. (e) Wang, L.; Akhani, R. K.; Wiskur, S. L. Diastereoselective and Enantioselective Silylation of 2-Arylcyclohexanols. Org. Lett. 2015, 17, 2408-2411. (f) Park, S. Y.; Lee, J.-W.; Song, C. E. Parts-per-million level loading organo-catalysed enantioselective silylation of alcohols. Nat. Commun. 2015, 6, 7512.

(10) Selected examples of KRs of alcohols through transition-metal-catalyzed silylation: (a) Rendler, S.; Auer, G.; Oestreich, M. Kinetic Resolution of Chiral Secondary Alcohols by Dehydroge-native Coupling with Recyclable Silicon-Stereogenic Silanes. Angew. Chem., Int. Ed. 2005, 44, 7620-7624. (b) Klare, H. F. T.; Oestreich, M. Chiral Recognition with Silicon-Stereogenic Silanes: Remarkable Selectivity Factors in the Kinetic Resolution of Donor-Functionalized Alcohols. Angew. Chem., Int. Ed. 2007, 46, 9335-9338. (c) Karatas, B.; Rendler, S.; Fröhlich, R.; Oestreich, M. Kinetic resolution of donor-functionalised tertiary alcohols by Cu-H-catalysed stereoselective silylation using a strained silicon-stereogenic silane. Org. Biomol. Chem. 2008, 6, 1435-1440. (d) Weickgenannt, A.; Mewald, M.; Muesmann, T. W. T.; Oestreich, M. Catalytic Asymmetric Si-O Coupling of Simple Achiral Silanes and Chiral Donor-Functionalized Alcohols. Angew. Chem., Int. Ed. 2010, 49, 2223-2226. (e) Dong, X.; Weickgenannt, A.; Oestreich, M. Broad-spectrum kinetic resolution of alcohols enabled by Cu-H-catalysed dehydrogenative coupling with hydrosilanes. Nat. Commun. 2017, 8, 15547. (f) Seliger, J.; Dong, X.; Oestreich, M. Kinetic Resolution of Tertiary Propargylic Alcohols by Enantio-selective Cu-H-Catalyzed Si-O Coupling. Angew. Chem., Int. Ed. 2019, 58, 1970-1974.

(11) Dong, X. Silylation-Based Kinetic Resolution of Structurally Unbiased Alcohols Enabled by Cu-H-Catalyzed Dehydrogenative Coupling with Hydrosilanes. PhD Dissertation, Technische Uni-versität Berlin, Berlin, 2018.

(12) In a separate experiment, we observed the formation of a Ru-H species by $^1$H NMR spectroscopy that failed to deprotonate (*S*)-1-phenylethanol [(*S*)-**2a**]. This observation is in good agree-ment with studies conducted by Backvall and co-workers regar-ding the racemization mechanism of **1.** These authors found that $C_5Ph_5(CO)_2RuH$ was completely inactive in the racemization of (*S*)-1-phenylethanol [(*S*)-**2a**] and therefore excluded this species as a relevant intermediate. See Referece 3a for details.

(13) Wang, D.; Astruc, D. The Golden Age of Transfer Hydroge-nation. Chem. Rev. 2015, 115, 6621-6686.

(14) Warner, M. C.; Backvall, J.-E. Mechanistic Aspects on Cyclopentadienylruthenium Complexes in Catalytic Racemiza-tion of Alcohols. Acc. Chem. Res. 2013, 46, 2545-2555.

(15) Dub, P. A.; Gordon, J. C. The role of the metal-bound N-H functionality in Noyori-type molecular catalysts. Nat. Rev. Chem. 2018, 2, 396-408.

(16) (a) Baratta, W.; Chelucci, G.; Gladiali, S.; Siega, K.; Toniutti, M.; Zanette, M.; Zangrando, E.; Rigo, P. Ruthenium(II) Terdentate CNN Complexes: Superlative Catalysts for the Hydrogen-Transfer Reduction of Ketones by Reversible Insertion of a Carbonyl Group into the Ru-H Bond. Angew. Chem., Int. Ed. 2005, 44, 6214-6219. (b) Baratta, W.; Ballico, M.; Chelucci, G.; Siega, K.; Rigo, P. Osmium(II) CNN Pincer Complexes as Efficient Catalysts for Both Asymmetric Transfer and H2 Hydrogenation of Ketones. Angew. Chem., Int. Ed. 2008, 47, 4362-4365. (c) Bertoli, M.; Choualeb, A.; Lough, A. J.; Moore, B.; Spasyuk, D.; Gusev, D. G. Osmium and Ruthenium Catalysts for Dehydrogenation of Alcohols. Organo-metallics 2011, 30, 3479-3482.

(17) Glüer, A.; Schweizer, J. I.; Karaca, U. S.; Würtele, C.; Diefen-bach, M.; Holthausen, M. C.; Schneider, S. Hydrosilane Synthesis by Catalytic Hydrogenolysis of Chlorosilanes and Silyl Triflates. Inorg. Chem. 2018, 57, 13822-13828.

(18) For reviews on tandem catalysis, see: (a) Lohr, T. L.; Marks, T. J. Orthogonal tandem catalysis. Nat. Chem. 2015, 7, 477-482. (b) Wasilke, J.-C.; Obrey, S. J.; Baker, R. T.; Bazan, G. C. Concur-rent Tandem Catalysis. Chem. Rev. 2005, 105, 1001-1020.

(19) A complex mixture was obtained when (*E*)-4-phenylbut-3-en-2-ol was subjected to the reaction conditions. Another experi-ment revealed that the allylic alcohol was isomerized to the cor-responding ketone 4-phenylbutan-2-one within seconds in the presence of ruthenium complex **4a.**

[S1] W. C. Still, M. Kahn, A. Mitra, J. Org. Chem. 1978, 43, 2923-2925.

[S2] R. K. Harris, E. D. Becker, S. M. Cabral de Menzes, R. Goodfellow, R. Granger, Pure Appl. Chem. 2001, 73, 1795-1818.

[S3] X. Dong, A. Weickgenannt, M. Oestreich, Nat. Commun. 2017, 8, 15547.

[S4] R. W. Jr. Heidebrecht, T. A. Miller, K. J. Wilson, D. J. Witter, J. Grimm, WO2007-US183, **2007.**

[S5] E. Buitrago, H. Lundberg, H. Andersson, P. Ryberg, H. Adolfsson, ChemCatChem 2012, 4, 2082-2089.

[S6] T. Nagai, S. Sakurai, N. Natori, M. Hataoka, T. Kinoshita, H. Inoue, K. Hanaya, M. Shoji, T. Sugai, Bioorg. Med. Chem. 2018, 26, 1304-1313.

[S7] C. Yongzheng, Z. Daijun, Y. Min, L. Ke, CN2014-10202552, 2014**.**

[S8] P. E. Hanna, V. R. Grund, M. W. Anders, J. Med. Chem. 1974, 17, 1020-1023.

[S9] L. Zhang, Y. Tang, Z. Han, K. Ding, Angew. Chem. Int. Ed. 2019, 58, 4973-4977.

[S10] R. Buhaibeh, O. A. Filippov, A. Bruneau-Voisine, J. Willot, C. Duhayon, D. A. Valyaev, N. Lugan, Y. Canac,

J.-B. Sortais, Angew. Chem. Int. Ed. 2019, 58, 6727-6731.

[S11] C. Tian, L. Gong, E. Meggers, Chem. Commun. 2016, 52, 4207-4210.

[S12] L.-S. Zheng, Q. Llopis, P.-G. Echeverria, C. Fèrard, G. Guillamot, P. Phansavath, V. Ratovelomanana-Vidal, J. Org. Chem. 2017, 82, 5607-5615.

[S13] A. C. Spivey, T. Fekner, S. E. Spey, J. Org. Chem. 2000, 65, 3154-3159.

[S14] F. Chen, C. Topf, J. Radnik, C. Kreyenschulte, H. Lund, M. Schneider, A.-E. Surkus, L. He, K. Junge, M. Beller, J. Am. Chem. Soc. 2016, 138, 8781-8788.

[S15] L. F. Tietze, T. Wolfram, J. J. Holstein, B. Dittrich, Org. Lett. 2012, 14, 4035-4037.

[S16] D. M. Hinkens, M. M Midland, J. Org. Chem. 2009, 74, 4143-4148.

[S17] S. Liu, C. Wolf, Org. Lett. 2007, 9, 2965-2968.

[S18] M. C. Bernabeu, J. L. Díaz, O. Jiménez, R. Lavilla, Synth. Commun. 2004, 34, 137-149.

[S19] S. Akai, R. Hanada, N. Fujiwara, Y. Kita, M. Egi, Org. Lett. 2010, 12, 4900-4903.

[S20] M. Hunsen, Synthesis 2005, 2487-2490.

[S21] X. Wang, M. Meyer, B. Yao, T. Guo, G. P. R. Wei, L. J. Wang, WO2013010453, 2012.

[S22] B. Zeynizadeh, T. Behyar, Bull. Chem. Soc. Jpn. 2005, 78, 307-315.

[S23] B. Martín-Matute, M. Edin, K. Bogár, F. B. Kaynak, J.-E. Bäckvall, J. Am. Chem. Soc. 2005, 127, 8817-8825.

[S24] H. P. Kokatla, P. F. Thomson, S. Bae, V. R. Doddi, M. K. Lakshman, J. Org. Chem. 2011, 76, 7842-7848.

[S25] S.-B. Ko, B. Baburaj, M.-J. Kim, J. Park, J. Org. Chem. 2007, 72, 6860-6864.

[S26] L. Ackermann, S. Fenner, Chem. Commun. 2011, 47, 430-432.

[S27] W. Baratta, M. Bosco, G. Chelucci, A. Del Zotto, K. Siega, M. Toniutti, E. Zangrando, P. Rigo, Organometallics 2006, 25, 4611-4620.

[S28] A. P. Shaw, B. L. Ryland, J. R. Norton, D. Buccella, A. Moscatelli, Inorg. Chem. 2007, 46, 5805-5812.

[S29] D. G. Gusev, F. M. Dolgushin, M. Y. Antipin, Organometallics 2001, 20, 1001-1007.

[S30] G. P. Elliott, N. M. Mcauley, W. R. Roper, Inorg. Synth. 1989, 26, 184-189.

[S31] M. Solinas, B. Sechi, S. Baldino, W. Baratta, G. Chelucci, ChemistrySelect 2016, 1, 2492-2497.

[S32] W. Baratta, M. Ballico, G. Chelucci, K. Siega, P. Rigo, Angew. Chem. Int. Ed. 2008, 47, 4362-4365.

[S33] M. Käß, J. Hohenberger, M. Adelhardt, E. M. Zolnhofer, S. Mossin, F. W. Heinemann, J. Sutter, K. Meyer, Inorg. Chem. 2014, 53, 2460-2470.

[S34] M. Garbe, K. Junge, S. Walker, Z. Wei, H. Jiao, A. Spannenberg, S. Bachmann, M. Scalone, M. Beller, Angew. Chem. Int. Ed. 2017, 56, 11237-11241.

[S35] M. Bertoli, A. Choualeb, D. G. Gusev, A. J. Lough, Q. Major, B. Moore, Dalton Trans. 2011, 40, 8941-8949.

[S36] N. Ahmad, J. J. Levison, S. D. Robinson, M. F. Uttley, Inorg. Synth. 1974, 15, 45-64.

[S37] M. Bertoli, A. Choualeb, A. J. Lough, B. Moore, D. Spasyuk, D. G. Gusev, Organometallics 2011, 30, 3479-3482.

## Claims

**1.** A non-enzymatic dynamic kinetic resolution (DKR) process for enantioselective silylation of a chiral alcohol, the process comprising

- reacting a substrate comprising a first enantiomer of the chiral alcohol using a racemization catalyst to give a second enantiomer of the chiral alcohol, and
- generating from said second enantiomer and a hydrosilane a silyl ether using an enantioselective silylation catalyst, **wherein**
- the enantioselective silylation catalyst is a catalytic system comprising a copper salt, an inorganic or organometallic base and (-)-1,2-bis((2R,5R)-2,5-diarylphospholano)ethane or (+)-1,2-bis((2S,5S)-2,5-diarylphospholano)ethane ((R,R)-Ar-BPE or (S,S)-Ar-BPE),
and
- the racemization catalyst is a compound according to Formula I

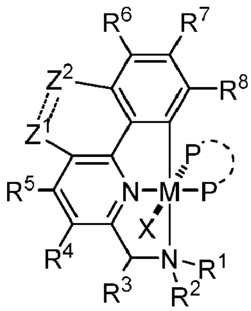

Formula I

wherein

- M = Ru or Os,
- $R^1$ = H or methyl (Me),
- $R^2$ = H
- $R^3$ = H, alkyl, cycloalkyl, or aryl,
- $R^4$ = H, halo, Oalkyl, Ocycloalkyl, Oaryl, cycloalkyl, alkyl, or aryl,
- $R^5$ = H, halo, Oalkyl, Ocycloalkyl, Oaryl, cycloalkyl, alkyl, or aryl,
- $R^6$ = H, halo, Oalkyl, Ocycloalkyl, Oaryl, cycloalkyl, alkyl, or aryl,
- $R^7$ = H, halo, Oalkyl, Ocycloalkyl, Oaryl, cycloalkyl, alkyl, or aryl,
- $R^8$ = H, halo, Oalkyl, Ocycloalkyl, Oaryl, cycloalkyl, alkyl, or aryl,
- $Z^1$ and $Z^2$ are the same or different, and
$Z^1$ and $Z^2$ are linked by a covalent bond resulting in formation of an aromatic 6 membered ring, wherein $Z^1$ and $Z^2$ = CH, Chalo, COalkyl, Ocycloalkyl, COaryl, Calkyl, Ccycloalkyl, or Caryl, or
$Z^1$ and $Z^2$ are not linked by a covalent bond, wherein $Z^1$ and $Z^2$ = H, halo, Oalkyl, Ocycloalkyl, Oaryl, alkyl, cycloalkyl, or aryl,
- $P^1$ and $P^2$ are organic or organometallic structures covalently linked to M via a phosphorus atom,
wherein $P^1$ and $P^2$ form a single organic or organometallic structure

$$(P^1 \frown P^2)$$

selected from the group comprising bis(diorganophosphino)alkanes, 1,1'-bis(diorganophosphino)ferrocenes, 1,2-bis(diorganophosphino)benzenes, 1,8-bis(diorganophosphino)naphthalenes, and 2,2'-bis(diorganophosphino)diaryls, or
wherein $P^1$ and $P^2$ are two organic structures not linked to each other and are triarylphosphine or trialkylphosphine and

- X = H, halo, pseudohalo, Oalkyl, Ocycloalkyl, Oaryl, $OSiR^{14}_3$, $O(O)CR^{15}$, or $OS(O)_2R^{15}$, wherein $R^{14}$ is alkyl or aryl and different $R^{14}$ within one molecule can be the same or different, and $R^{15}$ is alkyl, aryl, or haloalkyl.

**2.** The DKR process according to claim 1, wherein the racemization catalyst is a compound according to Formula I, wherein

- M = Ru, or Os,
- $R^1$ = H, or Me,
- $R^2$ = H,
- $R^3$ = H, Me, or tBu,
- $R^4$ = H,
- $R^5$ = H, or Ph,
- $R^6$ = H,
- $R^7$ = H, Me, or OMe,
- $R^8$ = H,
- $Z^1$ and $Z^2$ are linked by a covalent bond resulting in formation of an aromatic 6 membered ring, wherein $Z^1$ and $Z^2$ = CH, or $Z^1$ and $Z^2$ are not linked by a covalent bond, wherein $Z^1$ and $Z^2$ = H,
- $P^1$ and $P^2$ form a single organic or organometallic structure

$$(P^1 \frown P^2)$$

selected from the group comprising bis(diphenylphosphino)butane and 1,1'-bis(diphenylphosphino)ferrocene, or wherein $P^1$ and $P^2$ are two organic structures not linked to each other and are triphenylphosphine, and
- X = H, Cl, Oalkyl, Ocycloalkyl, Oaryl, $OSiMe_3$, O(O)CH, O(O)CMe, or $OS(O)_2CF_3$.

**3.** The DKR process according to any one of the preceding claims, wherein the racemization catalyst is a compound according to Formula II

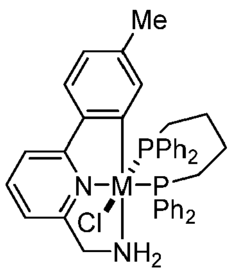
Formula II,

wherein

- M = Ru or Os.

**4.** The DKR process according to any one of the preceding claims, wherein the (R,R)-Ar-BPE or (S,S)-Ar-BPE of the enantioselective silylation catalytic system is (R,R)-Ph-BPE or (S,S)-Ph-BPE.

**5.** The DKR process according to any one of the preceding claims, wherein the chiral alcohol is an alcohol according to Formula III,

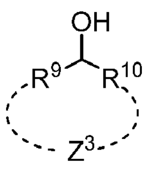
Formula III

wherein

- $R^9$ and $R^{10}$ are not the same, and
- $R^9$ and $R^{10}$ form a cyclic structure, wherein
$R^9$ and $R^{10}$ are selected from alkyl, cycloalkyl, aryl, and heteroaryl, and
the aryl or heteroaryl group can optionally be substituted with substituents that can be the same or different, selected from alkyl, cycloalkyl, aryl, heteroaryl, halo, pseudohalo, $NO_2$, (per)fluoroalkyl, Oalkyl, Ocycloalkyl, Oaryl, $OSiR^{14}_3$, Salkyl, Scycloalkyl, Saryl, $SiR^{14}_3$, acetal, CN, $CO_2$alkyl, $CO_2$aryl, $CO_2H$, $OC(O)N(R^{14})R^{14}$, $N(R^{14})C(O)OR^{14}$, boryl, boronate, and combinations thereof, wherein $R^{14}$ is alkyl or aryl and different $R^{14}$ within one molecule can be the same or different, and
- the cyclic structure comprises only carbon atoms or comprises one or more heteroatoms $Z^3$, wherein $Z^3$ is preferably selected from the group comprising N, O, and S,
wherein the cyclic structure preferably has 5 to 7 members, and
optionally one or more members of the cyclic structure can be substituted with substituents that can be the same or different, selected from alkyl, cycloalkyl, aryl, heteroaryl, halo, pseudohalo, $NO_2$, (per)fluoroalkyl, Oalkyl, Ocycloalkyl, Oaryl, $OSiR^{14}_3$, Salkyl, Scycloalkyl, Saryl, $SiR^{14}_3$, CN, $CO_2$alkyl, $CO_2$aryl, $CO_2H$, $OC(O)N(R^{14})R^{14}$, $N(R^{14})C(O)OR^{14}$, boryl, boronate, and combinations thereof, or
- $R^9$ and $R^{10}$ do not form a cyclic structure and are selected from alkyl, aryl, and heteroaryl, and
the aryl or heteroaryl can optionally be substituted with substituents that can be the same or different, selected from alkyl, cycloalkyl, aryl, heteroaryl, halo, pseudohalo, $NO_2$, (per)fluoroalkyl, Oalkyl, Ocycloalkyl, Oaryl, $OSiR^{14}_3$, Salkyl, Scycloalkyl, Saryl, $SiR^{14}_3$, acetal, CN, $CO_2$alkyl, $CO_2$aryl, $CO_2H$, $OC(O)N(R^{14})R^{14}$, $N(R^{14})C(O)OR^{14}$, boryl, boronate, and combinations thereof, wherein $R^{14}$ is alkyl or aryl and different $R^{14}$ within one molecule can be the same or different.

**6.** The DKR process according to any one of the preceding claims, wherein the chiral alcohol is an alcohol according to Formula IV,

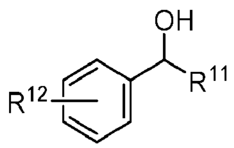

Formula IV

wherein

- $R^{11}$ = alkyl, aryl, or heteroaryl,
- $R^{12}$ = alkyl, cycloalkyl, aryl, heteroaryl, halo, pseudohalo, $NO_2$, (per)fluoroalkyl, Oalkyl, Ocycloalkyl, Oaryl, $OSiR^{14}_3$, Salkyl, Scycloalkyl, Saryl, $SiR^{14}_3$, acetal, CN, $CO_2$alkyl, $CO_2$aryl, $CO_2H$, $OC(O)N(R^{14})R^{14}$, $N(R^{14})C(O)OR^{14}$, boryl, boronate, and (multiple) combinations thereof, wherein $R^{14}$ is alkyl or aryl and different $R^{14}$ within one molecule can be the same or different.

**7.** The DKR process according to any one of claims 1-5, wherein the chiral alcohol is an alcohol according to Formula V,

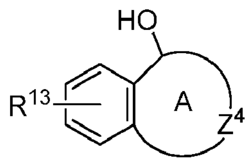

Formula V

wherein

- $R^{13}$ = alkyl, cycloalkyl, aryl, heteroaryl, halo, pseudohalo, $NO_2$, (per)fluoroalkyl, Oalkyl, Ocycloalkyl, Oaryl, $OSiR^{14}_3$, Salkyl, Scycloalkyl, Saryl, $SiR^{14}_3$, CN, $CO_2$alkyl, $CO_2$cycloalkyl, $CO_2$aryl, $CO_2H$, $OC(O)N(R^{14})R^{14}$, $N(R^{14})C(O)OR^{14}$, boryl, boronate and (multiple) combinations thereof, and
- ring A is a cyclic structure comprising only carbon atoms or comprising one or more heteroatoms $Z^4$, wherein $Z^4$ is preferably selected from the group comprising N, O, and S,
wherein preferably the cyclic structure has 5 to 7 members, and

wherein optionally the cyclic structure A can be substituted with substituents that can be the same or different, selected from alkyl, cycloalkyl, aryl, heteroaryl, halo, pseudohalo, $NO_2$, (per)fluoroalkyl, Oalkyl, Ocycloalkyl Oaryl, $OSiR^{14}_3$, Salkyl, Scycloalkyl, Saryl, $SiR^{14}_3$, CN, $CO_2$alkyl, $CO_2$aryl, $CO_2H$, $OC(O)N(R^{14})R^{14}$, $N(R^{14})C(O)OR^{14}$, boryl, boronate, and combinations thereof, wherein $R^{14}$ is alkyl or aryl and different $R^{14}$ within one molecule can be the same or different.

**8.** The DKR process according to any of the preceding claims, wherein the hydrosilane is a triorganosilane selected from the group comprising trialkylsilanes, triarylsilanes, and mixed subsitution pattern, wherein preferably the hydrosilane is tri-n-butylsilane ($n\mathrm{Bu}_3\mathrm{SiH}$).

**9.** The DKR process according to any of the preceding claims, wherein the substrate comprises a racemic mixture of the first and the second enantiomer.

**10.** The DKR process according to any of the preceding claims, wherein the DKR process takes place in a single reaction well, preferably as an orthogonal catalytic process.

**11.** The DKR process according to any of the preceding claims, wherein the process is performed in an arene solvent, such as benzene or toluene, or a higher alcohol solvent, such as *tert*-amyl alcohol or other tertiary alcohols.

**12.** The DKR process according to any of the preceding claims, wherein racemization of the first enantiomer to the second enantiomer is faster than generating a silyl ether from the first enantiomer and the hydrosilane in presence of the enantioselective silylation catalyst.

**13.** The DKR process according to any of the preceding claims, wherein the racemization catalyst does not promote racemization of the silyl ether or promotes racemization of the silyl ether at a negligible rate.

**14.** The DKR process according to any of the preceding claims, wherein the racemization catalyst does not promote dehydrogenative coupling of the chiral alcohol and the hydrosilane or promotes dehydrogenative coupling of the chiral alcohol and the hydrosilane at a negligible rate.

**Figure 1**

***Chemoenzymatic DKR by enantioselective acylation*** (Bäckvall **2005**, Ref. [3a])

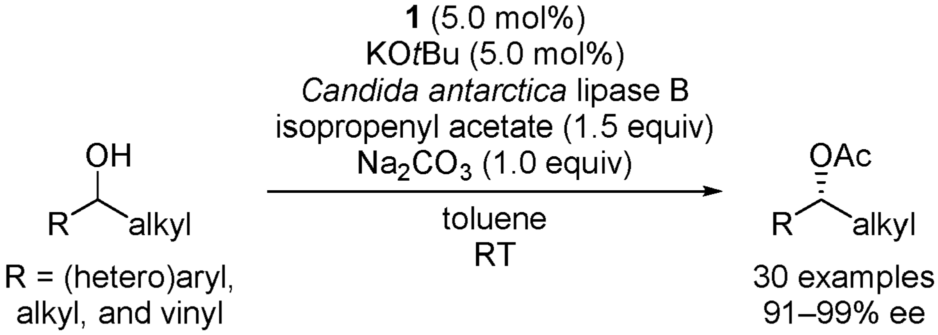


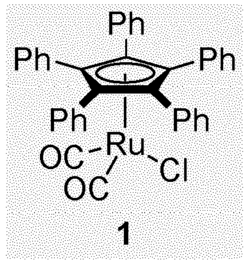

**1**

***Nonenzymatic DKR by enantioselective acylation*** (Fu **2012**, Ref. [5])

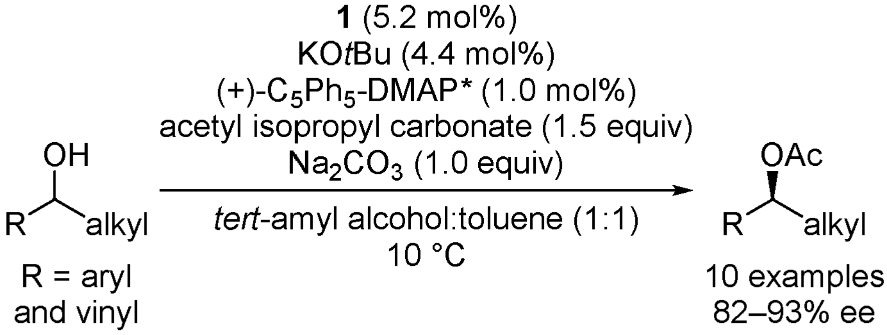


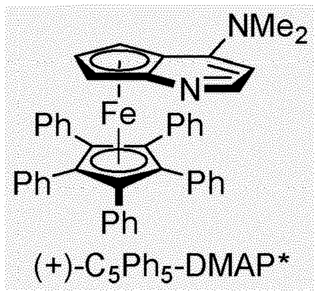

(+)-$C_5Ph_5$-DMAP*

***Nonenzymatic DKR by enantioselective silylation*** (this work)

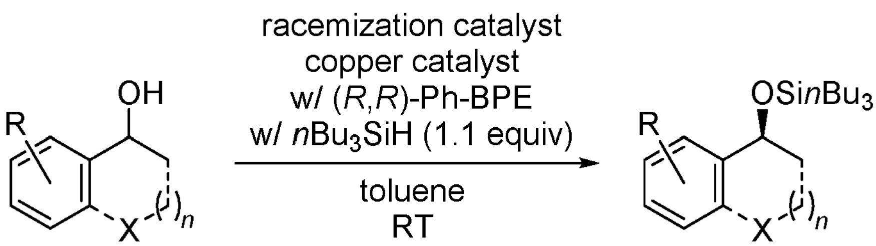


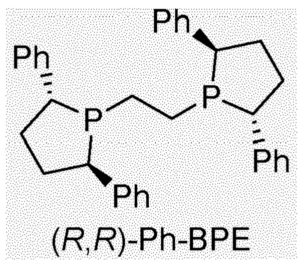

(*R*,*R*)-Ph-BPE

**Figure 2**

Bäckvall

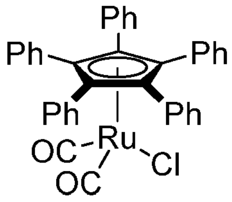

1

Kim and Park

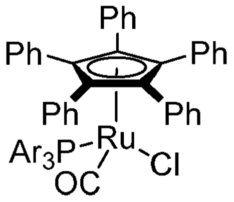

**3a** (Ar = Ph)
**3b** (Ar = 4-$FC_6H_4$)
**3c** (Ar = 4-$MeOC_6H_4$)

Baratta

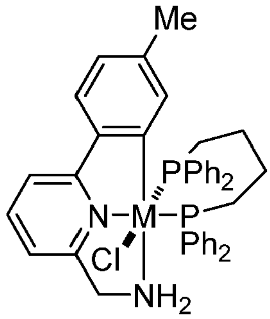

**4a** (M = Ru)
**4b** (M = Os)

Gusev

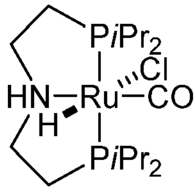

**5**

**Figure 3**

***Potential racemization of the silyl ether***

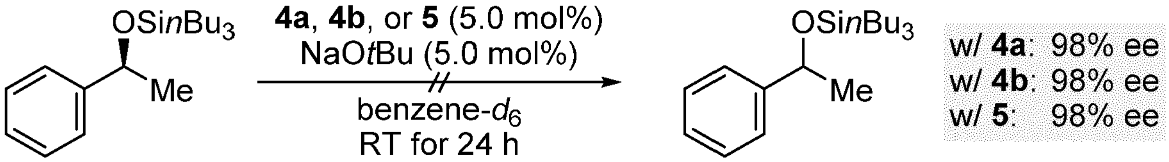


(*S*)-**6a**: 98% ee

*rac*-**6a**

***Potential dehydrogenative Si–O coupling***

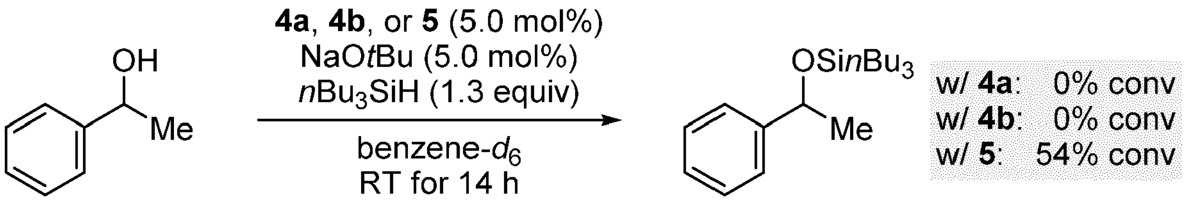


*rac*-**2a**

*rac*-**6a**

**Figure 4**

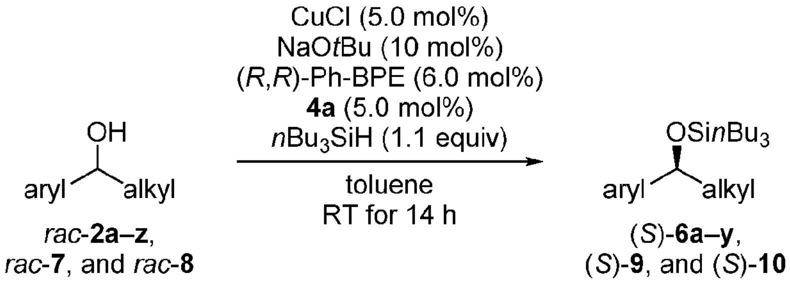


*rac*-**2a–z**, *rac*-**7**, and *rac*-**8**

(*S*)-**6a–y**, (*S*)-**9**, and (*S*)-**10**

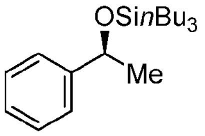

(*S*)-**6a**: 99%, 86% ee

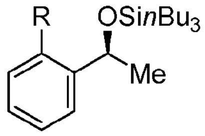

(*S*)-**6b** (R = Me): 96%, 79% ee
(*S*)-**6c** (R = Br): 97%, 34% ee

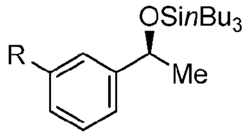

(*S*)-**6d** (R = Me): 88%, 88% ee
(*S*)-**6e** (R = Br): 98%, 93% ee

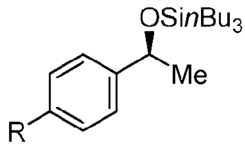

(*S*)-**6f** (R = Me): 93%, 87% ee
(*S*)-**6g** (R = Ph): 98%, 85% ee
(*S*)-**6h** (R = F): 98%, 81% ee
(*S*)-**6i** (R = Cl): 96%, 80% ee
(*S*)-**6j** (R = Br): 98%, 81% ee
(*S*)-**6k** (R = $CF_3$): 97%, 79% ee
(*S*)-**6l** (R = $CO_2$*t*Bu): 95%, 81% ee
(*S*)-**6m** (R = OMe): 96%, 83% ee

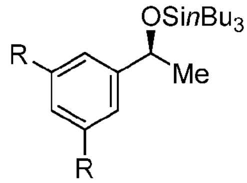

(*S*)-**6n** (R = Me): 98%, 93% ee
(*S*)-**6o** (R = $CF_3$): 90%, 93% ee
(*S*)-**6p** (R = OMe): 97%, 96% ee

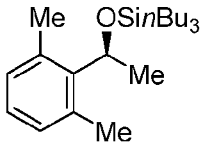

(*S*)-**6q**[a]: 88%, 36% ee

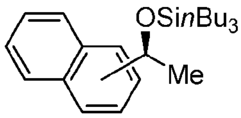

(*S*)-**6r** (α): 97%, 84% ee
(*S*)-**6s** (β): 85%, 90% ee

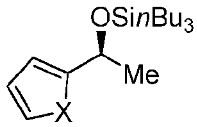

(*S*)-**6t** (X = O): 96%, 78% ee
(*S*)-**6u** (X = S): 94%, 88% ee

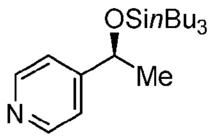

(*S*)-**6v**[a]: 88%, 84% ee[b]

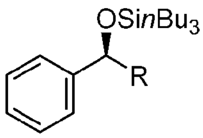

(*S*)-**6w** (R = Et): 98%, 85% ee
(*S*)-**6x**[c] (R = Bn): 95%, 81% ee
(*S*)-**6y**[d] (R = *i*Pr): 95%, 52% ee

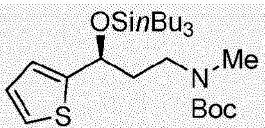

(*S*)-**9**: 90%, 62% ee
[*en route* to duloxetine]

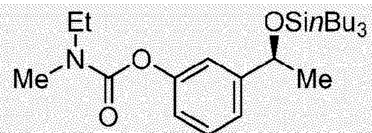

(*S*)-**10**: 94%, 93% ee
[*en route* to rivastigmine]

**Figure 5**

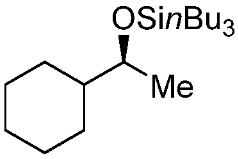

(*S*)-**11a**[a]: 96%, 79% ee

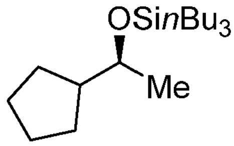

(*S*)-**11b**[a]: 93%, 64% ee

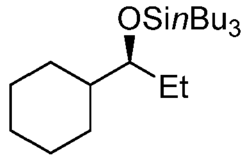

(*S*)-**11c**[b]: 56%, 52% ee[c]

**Figure 6**

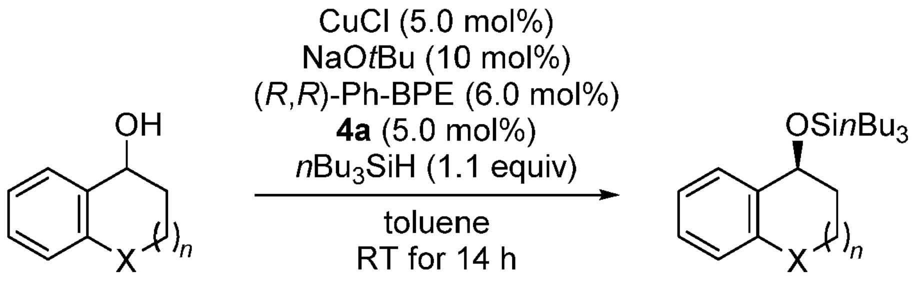


*rac*-**12a–h**

(*S*)-**13a–h**

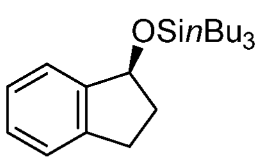

(*S*)-**13a**: 95%, 90% ee

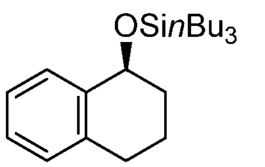

(*S*)-**13b**: 94%, 93% ee

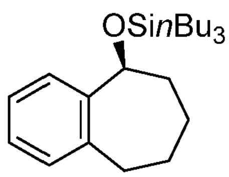

(*S*)-**13c**: 99%, 82% ee

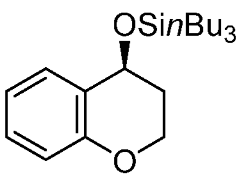

(*S*)-**13d**: 99%, 95% ee

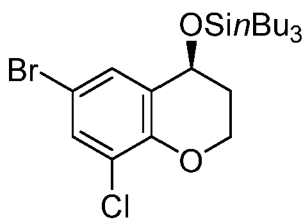

(*S*)-**13e**: 90%, 98% ee

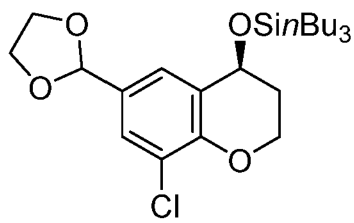

(*S*)-**13f**: 95%, 95% ee

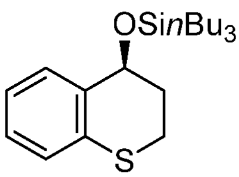

(*S*)-**13g**: 90%, 93% ee

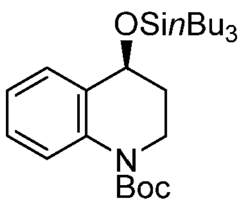

(*S*)-**13h**: 97%, 92% ee

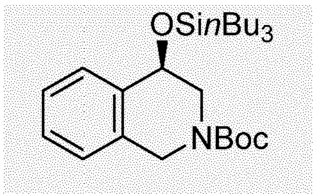

(*R*)-**14**: 95%, 91% ee

Europäisches Patentamt
European Patent Office
Office européen des brevets

# EUROPEAN SEARCH REPORT

Application Number
EP 20 20 0949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SELIGER JAN ET AL: "Making the Silylation of Alcohols Chiral: Asymmetric Protection of Hydroxy Groups", CHEMISTRY A EUROPEAN JOURNAL, vol. 25, no. 40, 17 July 2019 (2019-07-17), pages 9358-9365, XP055775343, DE ISSN: 0947-6539, DOI: 10.1002/chem.201900792 | 1-5,8-14 | INV. C07F7/18 C07F9/50 C07F15/00 |
| A | * schemes 9-12 * | 6,7 | |
| | ----- | | |
| X,D | SELIGER JAN ET AL: "Kinetic Resolution of Tertiary Propargylic Alcohols by Enantioselective Cu-H-Catalyzed Si-O Coupling", ANGEWANDTE CHEMIE INTERNATIONAL EDITION, vol. 58, no. 7, 11 February 2019 (2019-02-11), pages 1970-1974, XP055775345, ISSN: 1433-7851, DOI: 10.1002/anie.201813229 Retrieved from the Internet: URL:https://api.wiley.com/onlinelibrary/tdm/v1/articles/10.1002%2Fanie.201813229> | 1-5,8-14 | |
| A | * schemes 2-5 * * tables 1, 2 * | 6,7 | TECHNICAL FIELDS SEARCHED (IPC) C07F |
| | ----- | | |

The present search report has been drawn up for all claims

1

| Place of search | Date of completion of the search | Examiner |
|---|---|---|
| The Hague | 12 February 2021 | Eberhard, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 201410202552, C. Yongzheng, Z. Daijun, Y. Min, L. Ke
- WO 2013010453 A, X. Wang, M. Meyer, B. Yao, T. Guo, G. P. R. Wei, L. J. Wang


### Non-patent literature cited in the description


- *Angew. Chem. Int. Ed.,* 2005, vol. 44, 6214-6219
- *Angew. Chem. Int. Ed.,* 2008, vol. 47, 4362-4365
- *Chem. Eur. J.,* 2008, vol. 14, 9148-9160
- *Organometallics,* 2009, vol. 28, 4421-4430
- *Dalton Trans.,* 2011, vol. 40, 8986-8995
- *Organometallics,* 2016, vol. 35, 277-287
- **GREENE ; WUTS.** Protective Groups in Organic Synthesis. John Wiley & Sons, 1999
- **VERHO, O. ; BACKVALL, J.-E.** Chemo-enzymatic Dynamic Kinetic Resolution: A Powerful Tool for the Preparation of Enantiomerically Pure Alcohols and Amines. *J. Am. Chem. Soc.,* 2015, vol. 137, 3996-4009
- **VEDEJS, E. ; JURE, M.** Efficiency in Nonenzymatic Kinetic Resolution. *Angew. Chem., Int. Ed.,* 2005, vol. 44, 3974-4009
- **KEITH, J. M. ; LARROW, J. F. ; JACOBSEN, E. N.** Practical Considerations in Kinetic Resolution Reactions. *Adv. Synth. Catal.,* 2001, vol. 343, 5-26
- **DINH, P. M. ; HOWARTH, J. A. ; HUDNOTT, A. R. ; WILLIAMS, J. M. J. ; HARRIS, W.** Catalytic racemisation of alcohols: Applications to enzymatic resolution reactions. *Tetrahedron Lett.,* 1996, vol. 37, 7623-7626
- **MARTÍN-MATUTE, B. ; EDIN, M. ; BOGÁR, K. ; KAYNAK, F. B. ; BACKVALL, J.-E.** Combined Ruthenium(II) and Lipase Catalysis for Efficient Dynamic Kinetic Resolution of Secondary Alcohols. Insight into the Racemization Mechanism. *J. Am. Chem. Soc.,* 2005, vol. 127, 8817-8825
- **KO, S.-B. ; BABURAJ, B. ; KIM, M.-J. ; PARK, J.** Air-Stable Racemization Catalysts for the Dynamic Kinetic Reso-lution of Secondary Alcohols. *J. Org. Chem.,* 2007, vol. 72, 6860-6864
- **BOSSI, G. ; PUTIGNANO, E. ; RIGO, P. ; BARATTA, W.** Pincer Ru and Os complexes as efficient catalysts for racemization and deuteration of alcohols. *Dalton Trans.,* 2011, vol. 40, 8986-8995
- **FERNÁNDEZ-SALAS, J. A. ; MANZINI, S. ; NOLAN, S. P.** A Cationic Ruthenium Com-plex for the Dynamic Kinetic Resolution of Secondary Alcohols. *Chem. Eur. J.,* 2014, vol. 20, 13132-13135
- **BER-KESSEL, A. ; SEBASTIAN-IBARZ, M. L. ; MULLER, T. N.** Lipase/Aluminum-Catalyzed Dynamic Kinetic Resolution of Secondary Alcohols. *Angew. Chem., Int. Ed.,* 2006, vol. 45, 6567-6570
- **HAAK, R. M. ; BERTHIOL, F. ; JERPHAGNON, T. ; GAYET, A. J. A. ; TARA-BIONO, C. ; POSTEMA, C. P. ; RITLENG, V. ; PFEFFER, M. ; JANSSEN, D. B. ; MINNAARD, A. J.** Dynamic Kinetic Resolution of Racemic β-Haloalcohols: Direct Access to Enantio-enriched Epoxides. *J. Am. Chem. Soc.,* 2008, vol. 130, 13508-13509
- **EL-SEPELGY, O. ; ALANDINI, N. ; RUEPING, M.** Merging Iron Catalysis and Biocatalysis-Iron Carbonyl Com-plexes as Efficient Hydrogen Autotransfer Catalysts in Dynamic Kinetic Resolutions. *Angew. Chem., Int. Ed.,* 2016, vol. 55, 13602-13605
- **WUYTS, S. ; DE TEMMERMAN, K. ; DE VOS, D. ; JACOBS, P.** A zeolite-enzyme combi-nation for biphasic dynamic kinetic resolution of benzylic alco-hols. *Chem. Commun.,* 2003, 1928-1929
- **ZHU, Y. ; FOW, K.-L. ; CHUAH, G.-K. ; JAENICKE, S.** Dynamic Kinetic Resolution of Secondary Alcohols Combining Enzyme-Catalyzed Transesterification and Zeolite-Catalyzed Racemization. *Chem. Eur. J.,* 2007, vol. 13, 541-547
- **EGI, M. ; SUGIYAMA, K. ; SANETO, M. ; HANADA, R. ; KATO, K. ; AKAI, S.** A Mesoporous-Silica-Immobilized Oxovanadium Cocatalyst for the Lipase-Catalyzed Dynamic Kinetic Resolution of Racemic Alcohols. *Angew. Chem., Int. Ed.,* 2013, vol. 52, 3654-3658
- **LEE, S. Y. ; MURPHY, J. M. ; UKAI, A. ; FU, G. C.** Nonenzymatic Dynamic Kinetic Resolution of Secondary Alcohols via Enantio-selective Acylation: Synthetic and Mechanistic Studies. *J. Am. Chem. Soc.,* 2012, vol. 134, 15149-15153
- **WUTS, P. G. M.** Greene's Protective Groups in Organic Synthesis. Wiley, 2014, 201-270

- **KO-CIEŃSKY, P. J.** Protecting Groups. Thieme, 2005, 188-230
- Enantioselective Syn-thesis of Silyl Ethers Through Catalytic Si-O Bond Formation. **HOVEYDA, A. H. ; SNAPPER, M. L.** Organosilicon Chemistry: Novel Approaches and Reactions. Wiley-VCH, 2019, 459-493
- **SELIGER, J. ; OESTREICH, M.** Making the Silylation of Alcohols Chiral: Asymmetric Protection of Hydroxy Groups. *Chem. Eur. J.,* 2019, vol. 25, 9358-9365
- **WU, L.-W. ; CHEN, Y. ; LU, Y.** Catalytic Silylations of Alcohols: Turning Simple Protecting-Group Strate-gies into Powerful Enantioselective Synthetic Methods. *Angew. Chem., Int. Ed.,* 2015, vol. 54, 9456-9466
- **ISOBE, T. ; FUKUDA, K. ; ARAKI, Y. ; ISHIKAWA, T.** Modified guanidines as chiral superbases: the first example of asymmetric silylation of secondary alcohols. *Chem. Commun.,* 2001, 243-244
- **ZHAO, Y. ; MITRA, A. W. ; HOVEYDA, A. H. ; SNAPPER, M. L.** Kinetic Resolution of 1,2-Diols through Highly Site- and Enantioselective Catalytic Silylation. *Angew. Chem., Int. Ed.,* 2007, vol. 46, 8471-8474
- **SHEPPARD, C. I. ; TAYLOR, J. L. ; WISKUR, S. L.** Silylation-Based Kinetic Resolution of Monofunctional Secondary Alcohols. *Org. Lett.,* 2011, vol. 13, 3794-3797
- **WORTHY, A. D. ; SUN, X. ; TAN, K. L.** Site-Selective Catalysis: Toward a Regiodivergent Reso-lution of 1,2-Diols. *J. Am. Chem. Soc.,* 2012, vol. 134, 7321-7324
- **CLARK, R. W. ; DEATON, T. M. ; ZHANG, Y. ; MOORE, M. I. ; WISKUR, S. L.** Silylation-Based Kinetic Resolution of α-Hydroxy Lactones and Lactams. *Org. Lett.,* 2013, vol. 15, 6132-6135
- **WANG, L. ; AKHANI, R. K. ; WISKUR, S. L.** Diastereoselective and Enantioselective Silylation of 2-Arylcyclohexanols. *Org. Lett.,* 2015, vol. 17, 2408-2411
- **PARK, S. Y. ; LEE, J.-W. ; SONG, C. E.** Parts-per-million level loading organo-catalysed enantioselective silylation of alcohols. *Nat. Commun.,* 2015, vol. 6, 7512
- **RENDLER, S. ; AUER, G. ; OESTREICH, M.** Kinetic Resolution of Chiral Secondary Alcohols by Dehydroge-native Coupling with Recyclable Silicon-Stereogenic Silanes. *Angew. Chem., Int. Ed.,* 2005, vol. 44, 7620-7624
- **KLARE, H. F. T. ; OESTREICH, M.** Chiral Recognition with Silicon-Stereogenic Silanes: Remarkable Selectivity Factors in the Kinetic Resolution of Donor-Functionalized Alcohols. *Angew. Chem., Int. Ed.,* 2007, vol. 46, 9335-9338
- **KARATAS, B. ; RENDLER, S. ; FRÖHLICH, R. ; OESTREICH, M.** Kinetic resolution of donor-functionalised tertiary alcohols by Cu-H-catalysed stereoselective silylation using a strained silicon-stereogenic silane. *Org. Biomol. Chem.,* 2008, vol. 6, 1435-1440
- **WEICKGENANNT, A. ; MEWALD, M. ; MUESMANN, T. W. T.** Oestreich, M. Catalytic Asymmetric Si-O Coupling of Simple Achiral Silanes and Chiral Donor-Functionalized Alcohols. *Angew. Chem., Int. Ed.,* 2010, vol. 49, 2223-2226
- **DONG, X.** Weickgenannt, A.; Oestreich, M. Broad-spectrum kinetic resolution of alcohols enabled by Cu-H-catalysed dehydrogenative coupling with hydrosilanes. *Nat. Commun.,* 2017, vol. 8, 15547
- **SELIGER, J. ; DONG, X.** Oestreich, M. Kinetic Resolution of Tertiary Propargylic Alcohols by Enantio-selective Cu-H-Catalyzed Si-O Coupling. *Angew. Chem., Int. Ed.,* 2019, vol. 58, 1970-1974
- Silylation-Based Kinetic Resolution of Structurally Unbiased Alcohols Enabled by Cu-H-Catalyzed Dehydrogenative Coupling with Hydrosilanes. **DONG, X.** PhD Dissertation. Technische Uni-versität Berlin, 2018
- **WANG, D. ; ASTRUC, D.** The Golden Age of Transfer Hydroge-nation. *Chem. Rev.,* 2015, vol. 115, 6621-6686
- **WARNER, M. C. ; BACKVALL, J.-E.** Mechanistic Aspects on Cyclopentadienylruthenium Complexes in Catalytic Racemiza-tion of Alcohols. *Acc. Chem. Res.,* 2013, vol. 46, 2545-2555
- **DUB, P. A. ; GORDON, J. C.** The role of the metal-bound N-H functionality in Noyori-type molecular catalysts. *Nat. Rev. Chem.,* 2018, vol. 2, 396-408
- **BARATTA, W. ; CHELUCCI, G. ; GLADIALI, S. ; SIEGA, K. ; TONIUTTI, M. ; ZANETTE, M. ; ZANGRANDO, E. ; RIGO, P.** Ruthenium(II) Terdentate CNN Complexes: Superlative Catalysts for the Hydrogen-Transfer Reduction of Ketones by Reversible Insertion of a Carbonyl Group into the Ru-H Bond. *Angew. Chem., Int. Ed.,* 2005, vol. 44, 6214-6219
- **BARATTA, W. ; BALLICO, M. ; CHELUCCI, G. ; SIEGA, K. ; RIGO, P.** Osmium(II) CNN Pincer Complexes as Efficient Catalysts for Both Asymmetric Transfer and H2 Hydrogenation of Ketones. *Angew. Chem., Int. Ed.,* 2008, vol. 47, 4362-4365
- **BERTOLI, M. ; CHOUALEB, A. ; LOUGH, A. J. ; MOORE, B. ; SPASYUK, D. ; GUSEV, D. G.** Osmium and Ruthenium Catalysts for Dehydrogenation of Alcohols. *Organo-metallics,* 2011, vol. 30, 3479-3482

- **GLÜER, A. ; SCHWEIZER, J. I. ; KARACA, U. S. ; WÜRTELE, C. ; DIEFEN-BACH, M. ; HOLTHAUSEN, M. C. ; SCHNEIDER, S.** Hydrosilane Synthesis by Catalytic Hydrogenolysis of Chlorosilanes and Silyl Triflates. *Inorg. Chem.,* 2018, vol. 57, 13822-13828
- **LOHR, T. L. ; MARKS, T. J.** Orthogonal tandem catalysis. *Nat. Chem.,* 2015, vol. 7, 477-482
- **WASILKE, J.-C. ; OBREY, S. J. ; BAKER, R. T. ; BAZAN, G. C.** Concur-rent Tandem Catalysis. *Chem. Rev.,* 2005, vol. 105, 1001-1020
- **W. C. STILL ; M. KAHN ; A. MITRA.** *J. Org. Chem.,* 1978, vol. 43, 2923-2925
- **R. K. HARRIS ; E. D. BECKER ; S. M. CABRAL DE MENZES ; R. GOODFELLOW ; R. GRANGER.** *Pure Appl. Chem.,* 2001, vol. 73, 1795-1818
- **X. DONG ; A. WEICKGENANNT ; M. OESTREICH.** *Nat. Commun.,* 2017, vol. 8, 15547
- **E. BUITRAGO ; H. LUNDBERG ; H. ANDERSSON ; P. RYBERG ; H. ADOLFSSON.** *ChemCatChem,* 2012, vol. 4, 2082-2089
- **T. NAGAI ; S. SAKURAI ; N. NATORI ; M. HATAOKA ; T. KINOSHITA ; H. INOUE ; K. HANAYA ; M. SHOJI ; T. SUGAI.** *Bioorg. Med. Chem.,* 2018, vol. 26, 1304-1313
- **P. E. HANNA ; V. R. GRUND ; M. W. ANDERS.** *J. Med. Chem.,* 1974, vol. 17, 1020-1023
- **L. ZHANG ; Y. TANG ; Z. HAN ; K. DING.** *Angew. Chem. Int. Ed.,* 2019, vol. 58, 4973-4977
- **R. BUHAIBEH ; O. A. FILIPPOV ; A. BRUNEAU-VOISINE ; J. WILLOT ; C. DUHAYON ; D. A. VALYAEV ; N. LUGAN ; Y. CANAC ; J.-B. SORTAIS.** *Angew. Chem. Int. Ed.,* 2019, vol. 58, 6727-6731
- **C. TIAN ; L. GONG ; E. MEGGERS.** *Chem. Commun.,* 2016, vol. 52, 4207-4210
- **L.-S. ZHENG ; Q. LLOPIS ; P.-G. ECHEVERRIA ; C. FÈRARD ; G. GUILLAMOT ; P. PHANSAVATH ; V. RATOVELOMANANA-VIDAL.** *J. Org. Chem.,* 2017, vol. 82, 5607-5615
- **A. C. SPIVEY ; T. FEKNER ; S. E. SPEY.** *J. Org. Chem.,* 2000, vol. 65, 3154-3159
- **F. CHEN ; C. TOPF ; J. RADNIK ; C. KREYENSCHULTE ; H. LUND ; M. SCHNEIDER ; A.-E. SURKUS ; L. HE ; K. JUNGE ; M. BELLER.** *J. Am. Chem. Soc.,* 2016, vol. 138, 8781-8788
- **L. F. TIETZE ; T. WOLFRAM ; J. J. HOLSTEIN ; B. DITTRICH.** *Org. Lett.,* 2012, vol. 14, 4035-4037
- **D. M. HINKENS ; M. M MIDLAND.** *J. Org. Chem.,* 2009, vol. 74, 4143-4148
- **S. LIU ; C. WOLF.** *Org. Lett.,* 2007, vol. 9, 2965-2968
- **M. C. BERNABEU ; J. L. DÍAZ ; O. JIMÉNEZ ; R. LAVILLA.** *Synth. Commun.,* 2004, vol. 34, 137-149
- **S. AKAI ; R. HANADA ; N. FUJIWARA ; Y. KITA ; M. EGI.** *Org. Lett.,* 2010, vol. 12, 4900-4903
- **M. HUNSEN.** *Synthesis,* 2005, 2487-2490
- **B. ZEYNIZADEH ; T. BEHYA.** *Bull. Chem. Soc. Jpn.,* 2005, vol. 78, 307-315
- **B. MARTÍN-MATUTE ; M. EDIN ; K. BOGÁR ; F. B. KAYNAK ; J.-E. BÄCKVALL.** *J. Am. Chem. Soc.,* 2005, vol. 127, 8817-8825
- **H. P. KOKATLA ; P. F. THOMSON ; S. BAE ; V. R. DODDI ; M. K. LAKSHMAN.** *J. Org. Chem.,* 2011, vol. 76, 7842-7848
- **S.-B. KO ; B. BABURAJ ; M.-J. KIM ; J. PARK.** *J. Org. Chem.,* 2007, vol. 72, 6860-6864
- **L. ACKERMANN ; S. FENNER.** *Chem. Commun.,* 2011, vol. 47, 430-432
- **W. BARATTA ; M. BOSCO ; G. CHELUCCI ; A. DEL ZOTTO ; K. SIEGA ; M. TONIUTTI ; E. ZANGRANDO ; P. RIGO.** *Organometallics,* 2006, vol. 25, 4611-4620
- **A. P. SHAW ; B. L. RYLAND ; J. R. NORTON ; D. BUCCELLA ; A. MOSCATELLI.** *Inorg. Chem.,* 2007, vol. 46, 5805-5812
- **D. G. GUSEV ; F. M. DOLGUSHIN ; M. Y. ANTIPIN.** *Organometallics,* 2001, vol. 20, 1001-1007
- **G. P. ELLIOTT ; N. M. MCAULEY ; W. R. ROPER.** *Inorg. Synth.,* 1989, vol. 26, 184-189
- **M. SOLINAS ; B. SECHI ; S. BALDINO ; W. BARATTA ; G. CHELUCCI.** *ChemistrySelect,* 2016, vol. 1, 2492-2497
- **W. BARATTA ; M. BALLICO ; G. CHELUCCI ; K. SIEGA ; P. RIGO.** *Angew. Chem. Int. Ed.,* 2008, vol. 47, 4362-4365
- **M. KÄß ; J. HOHENBERGER ; M. ADELHARDT ; E. M. ZOLNHOFER ; S. MOSSIN ; F. W. HEINEMANN ; J. SUTTER ; K. MEYER.** *Inorg. Chem.,* 2014, vol. 53, 2460-2470
- **M. GARBE ; K. JUNGE ; S. WALKER ; Z. WEI ; H. JIAO ; A. SPANNENBERG ; S. BACHMANN ; M. SCALONE ; M. BELLER.** *Angew. Chem. Int. Ed.,* 2017, vol. 56, 11237-11241
- **M. BERTOLI ; A. CHOUALEB ; D. G. GUSEV ; A. J. LOUGH ; Q. MAJOR ; B. MOORE.** *Dalton Trans.,* 2011, vol. 40, 8941-8949
- **N. AHMAD ; J. J. LEVISON ; S. D. ROBINSON ; M. F. UTTLEY.** *Inorg. Synth.,* 1974, vol. 15, 45-64
- **M. BERTOLI ; A. CHOUALEB ; A. J. LOUGH ; B. MOORE ; D. SPASYUK ; D. G. GUSEV.** *Organometallics,* 2011, vol. 30, 3479-3482